# EUROPÄISCHE PATENTSCHRIFT

(11) **EP 3 452 390 B1**
(45) Veröffentlichungstag und Bekanntmachung des Hinweises auf die Patenterteilung: **02.04.2025**
(21) Anmeldenummer: 17730349.2
(22) Anmeldetag: 04.05.2017
(51) Int. Cl.: B65G 1/04, B65G 1/06

(54) **LAGERSYSTEM UND VERFAHREN ZUM BETREIBEN DESSELBEN**
STORAGE SYSTEM AND METHOD FOR OPERATING SAME
SYSTÈME DE STOCKAGE ET PROCÉDÉ PERMETTANT DE FAIRE FONCTIONNER LEDIT SYSTÈME

(30) Priorität: 04.05.2016 AT 504122016
(43) Veröffentlichungstag der Anmeldung: 13.03.2019
(73) Patentinhaber: TGW Logistics Group GmbH, 4614 Marchtrenk (AT)
(72) Erfinder: GRUBER, Thomas, 4643 Pettenbach (AT)
(74) Vertreter: Burger, Hannes
(86) Internationale Anmeldenummer: PCT/AT2017/060113
(87) Internationale Veröffentlichungsnummer: WO 2017/190168

(56) Entgegenhaltungen:
- EP-A1- 2 949 604
- WO-A1-2013/090958
- DE-A1- 102013 101 659

## Beschreibung

Die Erfindung betrifft ein Lagersystem und ein Verfahren zum Betreiben eines Lagersystemes, welches Lagersystem einen ersten Lagerbereich mit Lagerplätzen zum Lagern von Stückgütern, einen zweiten Lagerbereich mit Lagerplätzen zum Lagern von Stückgütern, Führungsbahnen im ersten Lagerbereich, Führungsbahnen im zweiten Lagerbereich und ein automatisiertes Lagerbediengerät sowie eine Umsetzvorrichtung aufweist. Die Umsetzvorrichtung verbindet den ersten Lagerbereich und zweiten Lagerbereich und umfasst eine einige oder eine jede der Führungsbahnen im ersten Lagerbereich und eine jede der Führungsbahnen im zweiten Lagerbereich anfahrbare Aufnahmeplattform, um zumindest ein Lagerbediengerät zwischen dem ersten Lagerbereich und zweiten Lagerbereich umzusetzen. Das Lagerbediengerät ist vor den Lagerplätzen entlang der Führungsbahnen verfahrbar und mit zumindest einer Lastaufnahmevorrichtung zum Einlagern von Stückgütern in die Lagerplätze und Auslagern von Stückgütern aus den Lagerplätzen versehen.

Konventionelle Lagersysteme umfassen einen ersten Lagerbereich und einen zweiten Lagerbereich. Der erste Lagerbereich dient der Lagerung einer Teilmenge aus einem gesamten Sortiment und enthält die zur Abwicklung einer bestimmten Anzahl an Aufträgen benötigten Stückgüter. Der zweite Lagerbereich dient hingegen der Lagerung des gesamten Sortiments unterschiedlicher Stückgüter. Im Betrieb werden die Stückgüter vom zweiten Lagerbereich entnommen und dem ersten Lagerbereich zugeführt. So ist bekannt, dass im ersten Lagerbereich die Stückgüter in einem Pufferlager gelagert und im zweiten Lagerbereich die Stückgüter in einem automatischen Kleinteilelager bevorratet werden. Das Pufferlager kann beispielweise ein Shuttlelager sein. Automatische Kleinteilelager zeichnen sich insbesondere durch geringe Lagerkosten aus, daher jene Kosten, welche mit der Lagerung der Stückgüter anfallen. Shuttlelager zeichnen sich hingegen durch höchste Flexibilität, hohe Skalierbarkeit aus und sind im Vergleich zu automatischen Kleinteileläger wesentlich leistungsfähiger.

Das automatischen Kleinteilelager (AKL) umfasst Lagerregale und entlang von Führungsbahnen zwischen den Lagerregalen verfahrbare Lagerbediengeräte, mit welchen die Stückgüter auf Lagerplätze eingelagert und aus den Lagerplätzen ausgelagert werden können. Die Lagerbediengeräte sind zumeist solche Regalbediengeräte, welche mehrere Regalebenen bedienen können und je mit einer auf einem Vertikalmast höhenverstellbar gelagerten Lastaufnahmevorrichtung ausgestattet sind. Sind dem Shuttlelager (Pufferlager) Stückgüter zuzuführen, werden die Stückgüter aus dem automatischen Kleinteilelager ausgelagert und auf einer geeigneten Fördertechnik zum Shuttlelager (Pufferlager) transportiert, wo die Stückgüter mittels Lagerbediengeräten eingelagert werden. Das Shuttlelager umfasst Lagerregale und entlang von Führungsbahnen zwischen den Lagerregalen verfahrbare Lagerbediengeräte, mit welchen die Stückgüter auf Lagerplätze eingelagert und aus den Lagerplätzen ausgelagert werden können. Die Lagerbediengeräte sind zumeist solche Regalbediengeräte, welche eine einzige Regalebene bedienen können und je mit einer auf einem horizontal bewegbaren Fahrrahmen (Shuttlefahrzeug) gelagerten Lastaufnahmevorrichtung ausgestattet sind. Liegt ein Auftrag (Kundenbestellung) vor, werden die Stückgüter wiederum aus dem Shuttlelager (Pufferlager) ausgelagert und auf einer geeigneten Fördertechnik zu einem Arbeitsplatz transportiert, wo Stückgüter kommissioniert oder auf einen Ladungsträger, beispielweise Rollcontainer, Versandkarton und dgl. umgeladen werden.

Alternativ kann das Pufferlager auch Hubbalkenbediengeräte einsetzen, welche sehr dynamisch Stückgüter mittels Lastaufnahmevorrichtungen auf die Lagerplätze einlagert oder aus den Lagerplätzen auslagert.

Wie ersichtlich, werden im automatischen Kleinteilelager und Shuttlelager unterschiedliche Lagerbediengeräte und unterschiedliche Steuerungssysteme verwendet, was insgesamt zu einem inhomogenen / komplexeren Aufbau des Lagersystemes führt. Zudem ist eine Fördertechnik zwischen dem automatischen Kleinteilelager und Shuttlelager erforderlich, sodass bei den bekannten Lagersystemen mit hohen Investitions- und Instandhaltungskosten gerechnet werden muss. Auch gestaltet sich die Wartung bzw. Instandhaltung des Lagersystemes aufwendiger und ist Spezialwissen zu unterschiedlichen Technologien erforderlich.

Die WO 2012/106744 A1 und WO 2013/090958 A1 offenbart ein Shuttlelager, welches Lagerregale, zumindest eine Regalgasse zwischen benachbarten Lagerregalen, in übereinander liegenden Fahrebenen entlang der Regalgasse angeordnete Führungsbahnen, entlang der Führungsbahnen in Richtung der Regalgasse verfahrbare Lagerbediengeräte zum Transport von Stückgütern, eine erste Puffervorrichtung, eine zweite Puffervorrichtung, eine erste Stückgut-Hebevorrichtung (Übergabevorrichtung), eine zweite Stückgut-Hebevorrichtung (Übergabevorrichtung) und eine Lagerbediengeräte-Hebevorrichtung (Umsetzvorrichtung) aufweist. Die erste Puffervorrichtung umfasst in zumindest einigen der Regalebenen erste Bereitstellvorrichtungen für das Zwischenpuffern eines oder mehrerer einzulagernder Stückgüter. Die zweite Puffervorrichtung umfasst in zumindest einigen der Regalebenen zweite Bereitstellvorrichtungen für das Zwischenpuffern eines oder mehrerer auszulagernder Stückgüter. Die Stückgut-Hebevorrichtungen umfassen jeweils eine automatisierte Hebevorrichtung mit einer jede der ersten/zweiten Bereitstellvorrichtungen anfahrbaren ersten/zweiten Transfervorrichtung, um die einzulagernden/auszulagernden Stückgüter zwischen der ersten/zweiten Bereitstellvorrichtung und der ersten/zweiten Transfervorrichtung zu transportieren. Die Fahrebenen sind über die Lagerbediengerät-Hebevorrichtung miteinander derart verbunden, dass ein Lagerbediengerät zwischen den Fahrebenen wechseln kann. Dadurch kann insgesamt die Anzahl der Lagerbediengeräte im Lagersystem reduziert werden.

Die EP 2 949 604 A1 offenbart ebenso ein Shuttlelager mit einem ersten Lagerbereich mit Lagerplätzen zum Lagern von Stückgütern, einem zweiten Lagerbereich mit Lagerplätzen zum Lagern von Stückgütern. Die Lagerbereiche sind übereinander angeordnet und in baulich voneinander getrennten Regalsystemen ausgebildet. Jedes Regalsystem umfasst parallel angeordnete Lagerregale mit in übereinander liegenden Regalebenen vorgesehenen Lagerplätzen, Regalgassen zwischen benachbarten Lagerregalen, in übereinander liegenden Fahrebenen entlang jeder Regalgasse angeordnete Führungsbahnen, entlang der Führungsbahnen in Richtung der Regalgasse verfahrbare Lagerbediengeräte zum Transport von Stückgütern und je Regalgasse sowohl eine erste/zweite Puffervorrichtung als auch eine erste/zweite Stückgut-Hebevorrichtung. Die erste Puffervorrichtung umfasst in jeder Fahrebene erste Bereitstellvorrichtungen für das Zwischenpuffern einzulagernder Stückgüter. Die zweite Puffervorrichtung umfasst in jeder Regalebene zweite Bereitstellvorrichtungen für das Zwischenpuffern auszulagernder Stückgüter. Die erste/zweite Stückgut-Hebevorrichtung umfasst eine jede der ersten/zweiten Bereitstellvorrichtungen anfahrbare erste/zweite Transfervorrichtung, um die einzulagernden/auszulagernden Stückgüter zwischen der ersten/zweiten Bereitstellvorrichtung und der ersten/zweiten Transfervorrichtung zu transportieren. Zusätzlich sind dritte Stückgut-Hebevorrichtungen vorgesehen, welche den ersten Lagerbereich und zweiten Lagerbereich und alle Regalebenen miteinander verbinden.

In der DE 10 2011 104 511 B3 ist ein Verfahren zum auftragsorientierten Zusammenstellen von verschiedenen Stückgütern (Artikeln) aus einem Langzeitlager (zweiter Lagerbereich) gemäß einer Vielzahl von Aufträgen bekannt, bei dem aus einer Anzahl erfasster Aufträge der Gesamtbedarf an einem Stückguttyp ermittelt und die Stückgüter je Stückguttyp nacheinander quasi-kontinuierlich aus dem Langzeitlager in ein Kurzzeitlager (erster Lagerbereich) transportiert werden.

Die WO 00/43931 A1 offenbart ein Lagersystem mit ersten Lagerbereichen (active zones) mit Lagerplätzen zum Lagern von Stückgütern und zweiten Lagerbereichen (reserve zones) mit Lagerplätzen zum Lagern von Stückgütern. Die an das Lagersystem angelieferten Stückgüter werden direkt zu den zweiten Lagerbereichen (reserve zones) transportiert und in diesen auf den Lagerplätzen gelagert. Die ersten Lagerbereiche (active zones) werden periodisch mit Stückgütern aus den zweiten Lagerbereichen (reserve zones) versorgt. Wird ein Kundenauftrag bearbeitet, so werden Stückgüter, welche in den ersten Lagerbereichen (active zones) nicht vorrätig sind, von den zweiten Lagerbereichen (reserve zones) entnommen und Stückgüter, welche nicht in den zweiten Lagerbereichen (reserve zones) vorrätig sind, von den ersten Lagerbereichen (active zones) entnommen. So können auch Stückgüter mit hoher Zugriffshäufigkeit, so genannte A-Artikel, direkt aus den zweiten Lagerbereichen (reserve zones) entnommen werden, ohne zuvor in den ersten Lagerbereichen (active zones) umgelagert werden zu müssen. Die ersten Lagerbereiche (active zones) und zweiten Lagerbereiche (reserve zones) verwenden unterschiedliche Lagertechnologien und unterschiedlichste Bediengeräte zum Manipulieren der Stückgüter.

Die DE 10 2013 101 659 A1 offenbart ein automatisiertes Lagersystem, mit einem ersten Lagerbereich, einem zweiten Lagerbereich, einem ersten Kommissioniersystem im ersten Lagerbereich und einem zweiten Kommissioniersystem im zweiten Lagerbereich. Während im ersten Lagerbereich Langsamdreher-Artikelgruppen kommissioniert werden, werden im zweiten Lagerbereich Schnelldreher-Artikelgruppen kommissioniert. Der erste Lagerbereich und zweite Lagerbereich werden von einem zentralen Nachschublager selektiv und abhängig von Aufträgen mit Langsamdreher-Artikelgruppen und Schnelldreher-Artikelgruppen versorgt.

Eine Aufgabe der Erfindung ist es, ein verbessertes Lagersystem anzugeben. Insbesondere soll das Lagersystem einfach aufgebaut und mit geringem Aufwand betrieben werden können. Darüber hinaus ist es auch eine Aufgabe der Erfindung, ein verbessertes Verfahren zum Betrieb eines solchen Lagersystemes anzugeben.

Die Aufgabe der Erfindung wird durch das Lagersystem mit den Merkmalen des Anspruches 1, 2 und durch die Maßnahmen des Verfahrensanspruches 6 gelöst.

Unter einem Stückgut wird nachfolgend eine Handhabungseinheit verstanden, die insbesondere im Lagersystem gefördert und gelagert wird. Ein Stückgut ist typischerweise artikelrein, kann aber auch gemischt sein. Das Stückgut kann ein Ladehilfsmittel und einen/mehrere Artikel umfassen. Das Stückgut kann aber auch allein der Artikel sein, wenn das Ladehilfsmittel weggelassen wird. Als Ladehilfsmittel werden üblicherweise Behälter, Kartons oder Tablare eingesetzt. Die Stückgüter können auch unterschiedliche Volumenabmessungen, insbesondere unterschiedliche Grundflächenabmessungen aufweisen. Die Stückgüter sind beispielsweise Behälter, welche jeweils einen einzigen Artikeltyp enthalten. Beispielsweise enthält ein erster Behälter den Artikel "A", ein zweiter Behälter den Artikel "B" usw. Andererseits ist es auch möglich, dass ein Behälter durch Trennwände in mehrere Aufnahmefächer unterteilt ist und unterschiedliche Artikel "A", "B" aufnehmen kann, wobei im ersten Aufnahmefach ein Artikel "A" und im zweiten Aufnahmefach ein Artikel "B" aufgenommen werden kann. Üblicherweise ist in einem Behälter ein Bestand (Vorratsmenge) gleicher Artikel oder ein Bestand (Vorratsmenge) unterschiedlicher Artikel enthalten. Wurde aus einem Behälter ein Artikel entnommen, so enthält der Behälter noch einen Restbestand (Bestandsmenge) gleicher Artikel oder einen Restbestand (Bestandsmenge) unterschiedlicher Artikel.

Gemäß der Erfindung umfasst der erste Lagerbereich ein Hochleistungslager und der zweite Lagerbereich ein Nachschublager. Insbesondere ist der erste Lagerbereich ein Hochleistungslager und der zweite Lagerbereich ein Nachschublager. Dementsprechend kann gemäß der Verfahrensmaßnahme der erste Lagerbereich mit einem Hochleistungslager und der zweite Lagerbereich mit einem Nachschublager konfiguriert werden. Insbesondere ist der erste Lagerbereich als Hochleistungslager und der zweite Lagerbereich als Nachschublager konfiguriert.

Im Nachschublager können Behälter mit vollem Artikelbestand und/oder Behälter mit einem Restbestand vorrätig sein. Im letzteren Fall spricht man auch von "Anbruchbehälter".

Durch die vorgeschlagenen Maßnahmen kann das Lagerbediengerät zwischen dem Hochleistungslager und Nachschublager wechseln und ist ein Stückgutaustausch zwischen dem Hochleistungslager und Nachschublager möglich. Je nach Leistungsanforderung kann die Anzahl an Lagerbediengeräten im Hochleistungslager variieren. Vorzugsweise ist je Führungsbahn bzw. Fahrebene ein Lagerbediengerät vorgesehen. Auch im Nachschublager kann die Anzahl an Lagerbediengeräten und gegebenenfalls abhängig von der Anzahl an Lagerbediengeräten im Hochleistungslager variieren. So kann während einer ersten Betriebsphase (Vollauslastung) des Hochleistungslagers im Nachschublager gar kein Lagerbediengerät vorhanden sein, jedoch in einer zweiten Betriebsphase (Teilauslastung) des Hochleistungslagers zumindest ein Lagerbediengerät vom Hochleistungslager in das Nachschublager wechseln. Wenn erforderlich können auch mehrere Lagerbediengeräte vom Hochleistungslager in das Nachschublager wechseln. Mit anderen Worten, sind nach dieser Ausführung sämtliche Lagerbediengeräte vorwiegend dem Hochleistungslager zugeordnet. Nach einer anderen Ausführung, können aber auch dem Nachschublager ein oder einige wenige Lagerbediengeräte zugeordnet werden. In diesem Fall ist im Hochleistungslager eine Anzahl an Lagerbediengeräten und im Nachschublager eine Anzahl an Lagerbediengeräten vorgesehen. Vorzugsweise ist die Anzahl an Lagerbediengeräten im Nachschublager deutlich geringer als die Anzahl an Lagerbediengeräten im Hochleistungslager. Es kann dabei genügen, dass im Nachschublager nur ein einziges Lagerbediengerät vorgesehen wird. Jedenfalls können die Lagerbediengeräte aus dem Hochleistungslager als auch aus dem Nachschublager in oben beschriebener Weise zwischen dem Hochleistungslager und Nachschublager wechseln.

Wie sich aus dem Gesagten erkennen lässt, können sowohl im Hochleistungslager als auch im Nachschublager dieselben Lagerbediengeräte verwendet und die Lagerplätze baugleich gestaltet werden. Dadurch vereinfacht sich die Komplexität des Lagersystemes und ist auch der Wartungsaufwand / Instandhaltungsaufwand gegenüber den bekannten Lagersystemen mit unterschiedlichen Lagerbediengeräten bzw. Lagertechnologien geringer. Insgesamt entsteht ein homogenes Lagersystem.

Einerseits ist gemäß der Erfindung vorgesehen, dass die Übergabevorrichtung ausschließlich im Hochleistungslager die Bereitstellvorrichtungen jeweils für das Zwischenpuffern zumindest eines Stückgutes aufweist. Die Transfervorrichtung verbindet die Bereitstellvorrichtungen und die erste Fördertechnik miteinander. Die Übergabevorrichtung ist besonders einfach aufgebaut und weist im Vergleich zur Anzahl an Führungsbahnen im Lagersystem nur eine minimale Anzahl an Bereitstellvorrichtungen auf. Auch die Stellbewegungen der Transfervorrichtung können kurz gehalten werden, was sich positiv auf die Leistung des Lagersystemes auswirkt.

Andererseits ist gemäß der Erfindung vorgesehen, dass die Übergabevorrichtung im Hochleistungslager je Führungsbahn und im Nachschublager in einer oder einigen Führungsbahnen einer Anzahl an Führungsbahnen eine Bereitstellvorrichtung für das Zwischenpuffern zumindest eines Stückgutes aufweist. Die Bereitstellvorrichtung ist über die Führungsbahn von dem Lagerbediengerät zum Auslagern und/oder Einlagern von Stückgütern anfahrbar. Die Transfervorrichtung verbindet die Bereitstellvorrichtungen im Hochleistungslager und die eine oder mehreren Bereitstellvorrichtungen im Nachschublager mit der ersten Fördertechnik miteinander. Eine solche Ausführung ist von Vorteil, wenn zusätzlich zum Einlager- und Auslagerbetrieb im Hochleistungslager auch ein Einlager- und/oder Auslagerbetrieb im Nachschublager möglich sein soll. Es wird die Möglichkeit geschaffen, Stückgüter auch direkt aus dem Nachschublager auszulagern und diese einem anschließenden Kommissionierprozess bereitzustellen. Es kann das Hochleistungslager "umgangen" werden, was bei Eilaufträgen von Vorteil ist. Dies insbesondere deshalb, wenn der Eilauftrag einen C-Artikel umfasst und die Auslagerung dieses C-Artikels den Einlager- und/oder Auslagerbetrieb im Hochleistungslager nicht "belasten" soll.

Die Bereitstellvorrichtung(en), welche einer einzigen oder einigen wenigen der Führungsbahnen des Nachschublagers zugeordnet ist/sind, ist/sind zweckmäßiger Weise im Nahbereich der Bereitstellvorrichtung(en), welche den Führungsbahnen des Hochleistungslagers zugeordnet sind. Somit ist es aber auch möglich, während des Betriebes des Lagersystemes durch ein Rechnersystem bzw. die Steuerung die "logische" Trennung zwischen dem Hochleistungslager und dem Nachschublager dynamisch zu verändern. So kann beispielweise nach einem Sortimentswechsel, wie Winter- und Sommerkollektion in der Textilindustrie, oder zu bestimmten Jahreszeiten eine höhere Leistungsanforderung an das Hochleistungslager bestehen, als beim gegenwärtigen Sortiment. Es erweist sich dann von Vorteil, wenn Lagerplätze vom Nachschublager aus der vorherigen Lagerkonfiguration als Lagerplätze im Hochleistungslager in der angepassten Lagerkonfiguration verwendet werden. Vereinfacht gesagt, wird das Lagervolumen des Hochleistungslagers im Vergleich zum Nachschublager bei gleichbleibenden Systemgrenzen vergrößert. Übersteigt im Hochleistungslager in der angepassten Lagerkonfiguration die Anzahl der Führungsbahnen die Anzahl an vorhandenen Lagerbediengeräten, so kann ein Lagerbediengerät auf eine Führungsbahn gewechselt werden, welche entlang der zusätzlichen Lagerplätze verläuft.

Bevorzugt kann je Führungsbahn eine Bereitstellvorrichtung oder eine Anzahl an Bereitstellvorrichtungen vorgesehen werden. Beispielweise kann je Führungsbahn eine (einzige) Bereitstellvorrichtung zum Einlagern von Stückgütern und Auslagern von Stückgütern oder je Führungsbahn eine erste Bereitstellvorrichtung zum Einlagern von Stückgütern und eine zweite Bereitstellvorrichtung zum Auslagern von Stückgütern angeordnet werden.

Unabhängig davon, welche dieser Ausführungen realisiert wird, ist die Gesamtanzahl der Bereitstellvorrichtungen im Vergleich zur Gesamtanzahl der Führungsbahnen im Lagersystem niedriger und ist auch der Bewegungsweg der Transfervorrichtung auf die Bereitstellvorrichtungen angepasst, sodass die Übergabevorrichtung nur unwesentlich länger/höher baut als das Hochleistungslager lang/hoch ist. Insbesondere ist die Anzahl der Bereitstellvorrichtungen im Nachschublager deutlich geringer als die Gesamtanzahl der Führungsbahnen im Hochleistungslager. Damit ist auch der Lagerdurchsatz (Anzahl der Stückgüter, welche pro Zeiteinheit in das Hochleistungslager über die Bereitstellvorrichtungen und die Übergabevorrichtung eingelagert bzw. ausgelagert wird) im Hochleistungslager im Vergleich zum Lagerdurchsatz (Anzahl der Stückgüter, welche pro Zeiteinheit in das Nachschublager eingelagert bzw. ausgelagert wird) im Nachschublager wesentlich höher. Bevorzugt grenzen das Hochleistungslager und Nachschublager, insbesondere einige der Lagerplätze des Hochleistungslagers und Nachschublagers unmittelbar aneinander an.

Von Vorteil ist auch, wenn die Anzahl der Lagerplätze im Nachschublager höher ist als die Anzahl der Lagerplätze im Hochleistungslager. Insbesondere können im Nachschublager über den Sortimentsbestand im Hochleistungslager hinaus Stückgüter gelagert werden, welche bei Bedarf über ein Lagerbediengerät vom Nachschublager in das Hochleistungslager gefördert werden, um das Sortiment im Hochleistungslager zu erweitern. Andererseits ist es auch möglich, dass Stückgüter mit niedriger Zugriffshäufigkeit, so genannte C-Artikel, vorwiegend im Nachschublager und Stückgüter mit hoher Zugriffshäufigkeit, so genannte A-Artikel, und Stückgüter mit mittlerer Zugriffshäufigkeit, so genannte B-Artikel, vorwiegend im Hochleistungslager gelagert werden.

Es kann aber auch Vorteil sein, wenn die Anzahl der Lagerplätze im Hochleistungslager höher ist als die Anzahl der Lagerplätze im Nachschublager. Dies hat gerade bei Artikel aus dem E-Commerce Vorteile, wo eine große Sortimentsbreite aber eine kleine Losgrößen vorliegt. In dieser Anwendung sollen sämtliche Artikel, also auch C-Artikel mit höchster Leistung ausgelagert werden können.

Nach einer günstigen Ausführung der Erfindung ist es vorgesehen, dass die Lagerplätze sowohl des Hochleistungslagers als auch des Nachschublagers in übereinander liegenden Regalebenen und in zumindest einem Lagerregal angeordnet sind, und die Führungsbahnen im Hochleistungslager in übereinander liegenden Fahrebenen angeordnet sind, und die Führungsbahnen im Nachschublager in übereinander liegenden Fahrebenen angeordnet sind, und das Hochleistungslager auf zumindest einigen der Führungsbahnen bzw. Fahrebenen je ein automatisiertes Lagerbediengerät, insbesondere ein Einebenenregalbediengerät, aufweist, und die Übergabevorrichtung ferner eine automatisierte Hebevorrichtung aufweist, und wobei die Hebevorrichtung mit der jede der Bereitstellvorrichtungen anfahrbaren Transfervorrichtung zum Transport von Stückgütern ausgestattet ist. Das Hochleistungslager und Nachschublager sind also (bevorzugt unmittelbar) übereinander angeordnet. Es kann dabei das Lagersystem durch eine vom Rechnersystem definierte "logische" Trennung in das Hochleistungslager und Nachschublager aufgeteilt sein. Grundsätzlich könnten das Hochleistungslager und Nachschublager aber auch durch eine Gebäudestruktur, beispielweise eine Hallendecke, voneinander getrennt und übereinander angeordnet werden. Insbesondere ist von Vorteil, dass sowohl das Hochleistungslager als auch das Nachschublager auf dem Prinzip eines "Shuttlelagers" aufgebaut sind. Ein solches Shuttlelager zeichnet sich durch seine hohe Lagerdichte, hohe Flexibilität und hohe Skalierbarkeit aus.

Eine besonders Platz sparende Anordnung von Übergabevorrichtung und Umsetzvorrichtung wird erreicht, wenn die Führungsbahnen im Hochleistungslager an der Übergabevorrichtung vorbeilaufen und mit ihren ersten Führungsbahnenden an der Übergabevorrichtung in Richtung der Längserstreckung der Führungsbahnen vorragen, und die Führungsbahnen im Nachschublager mit ihren ersten Führungsbahnenden bis etwa lotrecht oberhalb / unterhalb der ersten Führungsbahnenden im Hochleistungslager vorragen, und die Umsetzvorrichtung an den ersten Führungsbahnenden derart anschließt, sodass die Führungsbahnen im Hochleistungslager und Nachschublager von der Aufnahmeplattform anfahrbar sind, um das Lagerbediengerät zwischen einer der Führungsbahnen im Hochleistungslager und einer der Führungsbahnen im Nachschublager zu bewegen. Darüber hinaus wird eine gute Zugänglichkeit in eine Regalgasse zwischen den Lagerregalen (Lagerplätzen) erreicht, um Wartungsarbeiten / Instandhaltungsarbeiten im Lagersystem durchführen zu können.

Nach einer anderen Ausführung ist es vorgesehen, dass die Lagerplätze in einer Lagerebene nebeneinander in Lagerreihen angeordnet sind, und die Führungsbahnen im Hochleistungslager zwischen zumindest einigen der Lagerreihen angeordnet sind, und die Führungsbahnen im Nachschublager zwischen zumindest einigen der Lagerreihen angeordnet sind, und das Hochleistungslager auf zumindest einigen der Führungsbahnen je ein automatisiertes Lagerbediengerät, insbesondere ein Einebenenregalbediengerät, aufweist, und die Übergabevorrichtung im Hochleistungslager und je Führungsbahn die Bereitstellvorrichtungen jeweils für das Zwischenpuffern zumindest eines Stückgutes sowie die Transfervorrichtung zum Transport von Stückgütern zwischen den Bereitstellvorrichtungen und der ersten Fördertechnik aufweist, und die Umsetzvorrichtung einen horizontal verfahrbaren Verteilwagen mit der jede der Führungsbahnen im Hochleistungslager und Nachschublager anfahrbaren Aufnahmeplattform zum Umsetzen des Lagerbediengerätes zwischen einer der Führungsbahnen im Hochleistungslager und einer der Führungsbahnen im Nachschublager aufweist. Das Hochleistungslager und Nachschublager sind also (bevorzugt unmittelbar) nebeneinander angeordnet. Es kann dabei das Lagersystem durch eine vom Rechnersystem definierte "logische" Trennung in das Hochleistungslager und Nachschublager aufgeteilt sein. Grundsätzlich könnten das Hochleistungslager und Nachschublager aber auch durch eine Gebäudestruktur, beispielweise eine Hallenwand, voneinander getrennt und nebeneinander angeordnet werden.

Es erweist sich auch von Vorteil, wenn die Umsetzvorrichtung an eine zweite Fördertechnik zum Antransport von Stückgütern und Versorgung des Nachschublagers mit Stückgütern angeschlossen ist. Die Stückgüter können somit auf unterschiedlichen Förderwegen dem Lagersystem zugeführt werden.

Nach einer Weiterbildung ist es möglich, dass die Umsetzvorrichtung von der Steuereinheit unabhängig voneinander ansteuerbare (bewegbare) Aufnahmeplattformen umfasst, welche in unmittelbar aufeinanderfolgenden Positioniervorgängen (wechselweise) eine der Führungsbahnen im ersten Lagerbereich anfahren, um ein erstes Lagerbediengerät von der genannten Führungsbahn auf die erste Aufnahmeplattform aufzunehmen und ein zweites Lagerbediengerät von der zweiten Aufnahmeplattform auf die genannte Führungsbahn abzugeben. Auf diese Weise kann die Wechselzeit zum Austausch von Lagerbediengeräten zwischen dem ersten Lagerbereich und zweiten Lagerbereich wesentlich verkürzt werden. Während ein erstes Lagerbediengerät von der ersten Aufnahmeplattform auf die betreffende Führungsbahn bzw. Fahrebene abgegeben wird, kann ein zweites Lagerbediengerät von der zweiten Aufnahmeplattform in den zweiten Lagerbereich transportiert werden. Stückgüter können sehr rasch zwischen dem Hochleistungslager und dem Nachschublager bewegt werden. Sowohl die Nachschubleistung (Anzahl der Stückgüter pro Zeiteinheit, welche vom Nachschublager in das Hochleistungslager mittels der Lagerbediengeräte transportiert werden) als auch die Umlagerleistung (Anzahl der Stückgüter pro Zeiteinheit, welche vom Hochleistungslager in das Nachschublager mittels der Lagerbediengeräte transportiert werden) können gesteigert werden. Dies ist vor allem von Vorteil, wenn die Beschickung des Nachschublagers derart erfolgt, dass die Stückgüter vorerst im Hochleistungslager zwischengelagert werden, ehe diese mittels der Lagerbediengeräte vom Hochleistungslager in das Nachschublager umgelagert werden.

Nach einer vorteilhaften Verfahrensmaßnahme kann das Umlagern die Schritte umfassen:
Umlagerung eines ersten Stückgutes von einem Lagerplatz im Nachschublager (B) in das Hochleistungslager (A) sofern vom Rechnersystem ein erster Nachschubauftrag erzeugt wird, derart dass vorerst zumindest ein Lagerbediengerät zu einem der Lagerplätze im Nachschublager (B) bewegt und auf diesem das Stückgut übernommen wird, worauf das Lagerbediengerät mit dem Stückgut entlang der Führungsbahn zu einer Umsetzvorrichtung und mittels der Umsetzvorrichtung vom Nachschublager (B) zu einer der Führungsbahnen im ersten Lagerbereich transportiert und danach im ersten Lagerbereich entlang der Führungsbahn entweder zu einem der Lagerplätze im Hochleistungslager (A) bewegt und das Stückgut von dem Lagerbediengerät auf einen Lagerplatz im Hochleistungslager (A) oder unmittelbar zu einer Übergabevorrichtung auf eine von mehreren Bereitstellvorrichtungen transportiert wird, und
Umlagerung eines zweiten Stückgutes innerhalb des ersten Lagerbereiches aus einem Nachschublager (B') in das Hochleistungslager (A) sofern vom Rechnersystem ein zweiter Nachschubauftrag erzeugt wird, derart dass vorerst zumindest ein Lagerbediengerät zu einem der Lagerplätze im Nachschublager (B') bewegt und auf diesem das Stückgut übernommen wird, worauf das Lagerbediengerät mit dem Stückgut entlang der Führungsbahn vom Nachschublager (B') in das Hochleistungslager (A) transportiert und danach im Hochleistungslager (A) entweder zu einem der Lagerplätze bewegt und das Stückgut von dem Lagerbediengerät auf einen Lagerplatz oder unmittelbar zu einer Übergabevorrichtung auf eine von mehreren Bereitstellvorrichtungen transportiert wird.

Mit anderen Worten können Stückgüter aus dem Nachschublager (B') schneller in das Hochleistungslager (A) transportiert werden, als Stückgüter aus dem Nachschublager (B). Vor diesem Hintergrund können im Nachschublager (B') Stückgüter gelagert werden, welche eine hohe Zugriffshäufigkeit aufweisen und/oder gemäß einer Auftragsvorausschau zeitnah benötigt werden. Andere Stückgüter wiederum können im Nachschublager (B) gelagert werden. Somit kann die Nachschubleistung optimiert und die Leistungsanforderung an die Umsetzvorrichtung reduziert werden.

Besonders vorteilhaft sind auch die Verfahrensmaßnahmen:
Auslagerung einiger Stückgüter (für einen oder mehrere an einem Rechnersystem erfassten Aufträge) aus dem Hochleistungslager und dem Nachschublager, derart dass
die Stückgüter aus dem Hochleistungslager mittels einem oder mehreren Lagerbediengeräten ausgelagert und zur Übergabevorrichtung auf eine oder mehrere Bereitstellvorrichtungen einer Vielzahl von Bereitstellvorrichtungen und danach mittels einer Transfervorrichtung der Übergabevorrichtung von der einen oder den mehreren Bereitstellvorrichtungen zur ersten Fördertechnik transportiert werden, und/oder
die Stückgüter aus dem Nachschublager mittels einem oder mehreren Lagerbediengeräten ausgelagert und zur Übergabevorrichtung auf eine oder mehrere Bereitstellvorrichtungen und danach mittels einer Transfervorrichtung der Übergabevorrichtung von der einen oder den mehreren Bereitstellvorrichtungen zur ersten Fördertechnik transportiert werden.

Diese Ausführung bietet den Vorteil, dass Aufträge parallel bearbeitet und Stückgüter sowohl aus dem Hochleistungslager als auch Nachschublager ausgelagert werden können. So ist es möglich, dass Stückgüter für Eilaufträge aus dem Nachschublager und Stückgüter für "normale" Aufträge aus dem Hochleistungslager ausgelagert werden. Somit wird der Betrieb im Hochleistungslager nicht blockiert, selbst wenn Eilaufträge abgearbeitet werden.

Von Vorteil sind auch die Verfahrensmaßnahmen:
Erfassung von Aufträgen an einem Rechnersystem,
Ermittlung der Stückgüter und der Stückgutmenge (Bedarf) je Stückgut zu einem Auftrag durch das Rechnersystem,
Analyse eines Bestandes zu jenen Stückgütern, welche für den genannten Auftrag benötigt und im Hochleistungslager gelagert werden,
Auslagerung der Stückgüter zu diesem genannten Auftrag aus dem Lagersystem, sofern ausreichend Stückgüter für den genannten Auftrag vorhanden sind und derart dass die Stückgüter aus dem Hochleistungslager und mittels einem oder mehreren Lagerbediengeräten ausgelagert und zur Übergabevorrichtung auf eine oder mehrere Bereitstellvorrichtungen einer Vielzahl von Bereitstellvorrichtungen und danach mittels einer Transfervorrichtung der Übergabevorrichtung von der einen oder den mehreren Bereitstellvorrichtungen zur ersten Fördertechnik transportiert werden.

Es sind also sämtliche Stückgüter im Hochleistungslager vorrätig und werden die Stückgüter ausschließlich über das Hochleistungslager ausgelagert. Die Übergabevorrichtung ist besonders einfach aufgebaut und weist nur eine minimale Anzahl an Bereitstellvorrichtungen auf. Auch die Stellbewegungen der Transfervorrichtung und somit die Transportwege für die Stückgüter können kurz gehalten werden, was sich positiv auf die Leistung des Lagersystemes auswirkt.

Besonders vorteilhaft sind auch die Verfahrensmaßnahmen:
Erfassung von Aufträgen an einem Rechnersystem,
Ermittlung der Stückgüter und der Stückgutmenge (Bedarf) je Stückgut zu einem Auftrag durch das Rechnersystem,
Analyse eines Bestandes zu jenen Stückgütern im Hochleistungslager und Nachschublager, welche für den genannten Auftrag benötigt werden,
Umlagerung eines oder mehrerer Stückgüter vom Nachschublager in das Hochleistungslager, sofern im Hochleistungslager der Bestand eines der Stückgüter zu genanntem Auftrag einen Sollbestand an diesem Stückgut unterschreitet, wobei die Stückgüter in einer solchen Anzahl vom Nachschublager in das Hochleistungslager umgelagert werden, dass zumindest der Sollbestand an diesem Stückgut zur Abwicklung des genannten Auftrages erreicht wird,
Auslagerung der Stückgüter zu genanntem Auftrag aus dem Lagersystem, derart dass die Stückgüter ausschließlich aus dem Hochleistungslager ausgelagert und mittels einem oder mehreren Lagerbediengeräten zur Übergabevorrichtung auf eine oder mehrere Bereitstellvorrichtungen einer Vielzahl von Bereitstellvorrichtungen und danach mittels einer Transfervorrichtung der Übergabevorrichtung von der einen oder den mehreren Bereitstellvorrichtungen zur ersten Fördertechnik transportiert werden.

Es sind also nicht alle erforderlichen Stückgüter im Hochleistungslager vorrätig, aber es sollen diese ausschließlich über das Hochleistungslager ausgelagert werden. Auch wenn in dieser Anwendung eine Umlagerung von Stückgütern vom Nachschublager erforderlich ist, überwiegt der Vorteil einer besonders einfach gestalteten Übergabevorrichtung. Jene Stückgüter, welche in das Hochleistungslager umgelagert werden, können mittels dem Lagerbediengerät entweder auf einen Lagerplatz oder direkt zu den Bereitstellvorrichtungen transportiert werden. Die Umlagerung von Stückgütern kann während dem Lagerbetrieb im Hochleistungslager erfolgen, wenn mehr als ein Lagerbediengerät vorhanden ist.

Günstig sind auch die Verfahrensmaßnahmen:
Erfassung von Aufträgen an einem Rechnersystem,
Ermittlung der Stückgüter und der Stückgutmenge (Bedarf) je Stückgut zu einem Auftrag durch das Rechnersystem,
Analyse eines Bestandes zu jenen Stückgütern im Hochleistungslager und Nachschublager, welche für den genannten Auftrag benötigten werden,
Auslagerung der Stückgüter zu diesem genannten Auftrag aus dem Hochleistungslager und dem Nachschublager, sofern im Hochleistungslager der Bestand eines der Stückgüter zu genanntem Auftrag einen Sollbestand an diesem Stückgut unterschreitet, derart dass
   i) die Stückgüter aus dem Hochleistungslager mittels einem oder mehreren Lagerbediengeräten ausgelagert und zur Übergabevorrichtung auf eine oder mehrere Bereitstellvorrichtungen einer Vielzahl von Bereitstellvorrichtungen und danach mittels einer Transfervorrichtung der Übergabevorrichtung von der einen oder den mehreren Bereitstellvorrichtungen zur ersten Fördertechnik transportiert werden, und
   ii) die restlichen Stückgüter aus dem Nachschublager mittels einem oder mehreren zweiten Lagerbediengeräten ausgelagert und zur Übergabevorrichtung auf eine oder mehrere Bereitstellvorrichtungen und danach mittels einer Transfervorrichtung der Übergabevorrichtung von der einen oder den mehreren Bereitstellvorrichtungen zur ersten Fördertechnik transportiert werden.

Es sind die für eine Auftragsabwicklung erforderlichen Stückgüter im Hochleistungslager und Nachschublager vorrätig. Die Auslagerung kann in diesem Fall über das Hochleistungslager und das Nachschublager erfolgen. Das Hochleistungslager weist gegenüber dem Nachschublager einen höheren Lagerdurchsatz auf, sodass die Stückgüter überwiegend über das Hochleistungslager ausgelagert werden.

Die Beschickung des Nachschublagers mit Stückgütern kann derart erfolgen, dass
i) entweder das Stückgut mittels dem zumindest einen automatisierten Lagerbediengerät von einem Lagerplatz aus dem Hochleistungslager oder einer von mehreren Bereitstellvorrichtungen abgeholt und von dem Lagerbediengerät zur Umsetzvorrichtung und anschließend mittels der Umsetzvorrichtung zu zumindest einer der Führungsbahnen im Nachschublager und zu einem Lagerplatz im Nachschublager bewegt und schließlich auf einen Lagerplatz umgelagert wird,
ii) oder, sofern eine Bereitstellvorrichtung im Nachschublager vorgesehen ist, welche an die Transfervorrichtung anschließt, das Stückgut mittels dem zumindest einen automatisierten Lagerbediengerät von der Bereitstellvorrichtung im Nachschublager abgeholt und von dem Lagerbediengerät zu einem Lagerplatz im Nachschublager bewegt und schließlich auf einen Lagerplatz umgelagert wird,
iii) oder, sofern eine zweiten Fördertechnik vorgesehen ist, welche an die Umsetzvorrichtung anschließt, das Stückgut mittels der zweiten Fördertechnik zur Umsetzvorrichtung und danach auf ein Lagerbediengerät transportiert wird, wobei sich das Lagerbediengerät auf der Umsetzvorrichtung befindet, und anschließend von dem Lagerbediengerät zu zumindest einer der Führungsbahnen im Nachschublager und zu einem Lagerplatz im Nachschublager bewegt und schließlich auf einen Lagerplatz eingelagert wird.

Dabei kann die Beschickung derart erfolgen, dass
i) die Stückgüter, welche in den im Rechnersystem erfassten Aufträgen innerhalb einer Analysemenge nicht enthalten sind, mittels dem zumindest einen automatisierten Lagerbediengerät und der Umsetzvorrichtung vom Hochleistungslager in das Nachschublager transportiert und schließlich auf einen Lagerplatz in das Nachschublager umgelagert werden, oder
ii) die Stückgüter von der zweiten Fördertechnik zur Umsetzvorrichtung und danach auf ein Lagerbediengerät oder der Bereitstellvorrichtung im Nachschublager zugeführt werden, sofern im Nachschublager ein Mindestbestand zu einem Stückgut unterschritten wird oder kein Bestand zu einem Stückgut vorhanden ist, wobei der Bestand zu jedem Stückgut unterschiedlicher Stückgüter im Nachschublager durch ein Rechnersystem laufend erfasst wird.

So können die Stückgüter mittels der ersten Fördertechnik zur Übergabevorrichtung angefördert und mittels der Transfervorrichtung auf die Bereitstellvorrichtungen verteilt und anschließend mittels dem oder der Lagerbediengerät(e) auf die Lagerplätze eingelagert werden. Die Stückgüter werden bevorzugt auf die Lagerplätze im Hochleistungslager eingelagert. Es ist aber auch möglich, dass die Stückgüter von einem oder mehreren Lagerbediengeräten und der Umsetzvorrichtung in das Nachschublager transportiert und auf die Lagerplätze im Nachschublager eingelagert werden. Andererseits können die Stückgüter mittels der zweiten Fördertechnik zur Umsetzvorrichtung angefördert und ein Stückgut auf ein ungeladenes Lagerbediengerät übergeben werden, welches sich auf der Aufnahmeplattform der Umsetzvorrichtung befindet. Dieses Lagerbediengerät wird danach im Nachschublager auf eine der Führungsbahnen übergeben und zu einem der Lagerplätze bewegt. Schließlich wird das Stückgut auf diesen Lagerplatz eingelagert. Grundsätzlich kann dieses Lagerbediengerät aber auch im Hochleistungslager auf eine der Führungsbahnen übergeben und zu einem der Lagerplätze bewegt werden, wo das Stückgut auf einen Lagerplatz eingelagert wird.

Die Umlagerung eines Stückgutes von einem Lagerplatz im Nachschublager auf einen Lagerplatz im Hochleistungslager kann gemäß den Verfahrensmaßnahmen erfolgen:
Ermittlung eines Bestandes zu jedem Stückgut verschiedener Stückgüter im Hochleistungslager und Nachschublager durch ein Rechnersystem,
Aktualisierung des Bestandes zu jedem Stückgut verschiedener Stückgüter im Hochleistungslager und Nachschublager durch ein Rechnersystem, nach jeder Einlagerung eines Stückgutes in das Hochleistungslager und/oder Nachschublager und jeder Auslagerung eines Stückgutes aus dem Hochleistungslager und/oder Nachschublager und jeder Umlagerung eines Stückgutes zwischen dem Hochleistungslager und Nachschublager,
Umlagerung eines oder mehrerer Stückgüter vom Nachschublager in das Hochleistungslager
   i) sofern im Hochleistungslager ein Mindestbestand zu einem Stückgut unterschritten wird, oder
   ii) sofern eine Bedarfsmenge zu einem Stückgut, welches in den im Rechnersystem erfassten Aufträgen innerhalb einer Analysemenge enthalten ist, den aktuellen Bestand zu diesem Stückgut im Hochleistungslager überschreitet.

Die Umlagerung der Stückgüter kann entweder ohne Auftragsbezug oder mit Auftragsbezug erfolgen. Die Umlagerung ohne Auftragsbezug erfolgt in betriebsschwachen Zeiten. Die Umlagerung mit Auftragsbezug erfolgt verhältnismäßig selten, sodass im Hochleistungslager ein durchschnittlich hoher Lagerdurchsatz erreicht wird.

Von Vorteil ist auch, wenn sowohl im Hochleistungslager als auch im Nachschublager dieselbe Lagertechnologie verwendet wird. Dadurch vereinfacht sich die Komplexität des Lagersystemes und ist auch der Wartungsaufwand / Instandhaltungsaufwand gegenüber den bekannten Lagersystemen mit unterschiedlichen Lagerbediengeräten bzw. Lagertechnologien geringer.

Es erweist sich auch von Vorteil, wenn im Hochleistungslager das gesamte Sortiment an Stückgütern, welche zur Lagerung in dem Lagersystem bestimmt sind, gelagert wird. Bei ausreichender Reichweite an Stückgütern, welche innerhalb eines Analysezeitraumes, beispielweise acht Stunden, benötigt werden, kann während des Analysezeitraumes eine Umlagerung vom Nachschublager entfallen.

Günstig ist es zudem, wenn im Nachschublager das gesamte Sortiment an Stückgütern, welche zur Lagerung in dem Lagersystem bestimmt sind, gelagert wird. Bei unzureichender Reichweite an Stückgütern, welche innerhalb eines Analysezeitraumes, beispielweise acht Stunden, benötigt werden, kann während des Analysezeitraumes auf den Lagerbestand im Nachschublager zurück gegriffen werden.

Schließlich ist auch von Vorteil, wenn die Stückgüter im Nachschublager auf den Lagerplätzen in Abhängigkeit von einer Zugriffshäufigkeit bereitgestellt werden, wobei die Stückgüter mit hoher Zugriffshäufigkeit im Nahbereich des Hochleistungslagers und/oder im Nahbereich der Umsetzvorrichtung lagern. Dadurch können Transportwege für die am häufigsten benötigten Stückgüter verkürzt werden, was sich positiv auf den Lagerdurchsatz auswirkt.

Zum besseren Verständnis der Erfindung wird diese anhand der nachfolgenden Figuren näher erläutert.

Es zeigen jeweils:
- Fig. 1: einen Ausschnitt eines Lagersystems in einer ersten Ausführung und in einer Ansicht auf ein Hochleistungslager;
- Fig. 2: das Lagersystem mit dem Hochleistungslager und Nachschublager in Ansicht gemäß der Linie II in Fig. 1;
- Fig. 3: das Lagersystem ohne Übergabevorrichtung und ohne Umsetzvorrichtung nach Fig. 1 in Stirnansicht;
- Fig. 4: ein mögliche Ausführung eines Lagerbediengerätes mit einer Lastaufnahmevorrichtung zum Einlagern von Stückgütern auf Lagerplätze und Auslagern von Stückgütern aus Lagerplätzen, in perspektivischer Ansicht;
- Fig. 5: einen Ausschnitt eines Lagersystems in einer zweiten Ausführung und in einer Ansicht auf ein Nachschublager;
- Fig. 6: das Lagersystem mit dem Hochleistungslager und Nachschublager in Ansicht gemäß der Linie VI in Fig. 5;
- Fig. 7: einen Ausschnitt eines Lagersystems in einer dritten Ausführung und in einer Ansicht auf ein Hochleistungslager;
- Fig. 8: das Lagersystem mit dem Hochleistungslager und Nachschublager in Ansicht gemäß der Linie VIII in Fig. 7;
- Fig. 9: einen Ausschnitt eines Lagersystems in einer vierten Ausführung und in einer Ansicht auf ein Hochleistungslager;
- Fig. 10: das Lagersystem mit dem Hochleistungslager und Nachschublager in Ansicht gemäß der Linie X in Fig. 9;
- Fig. 11: einen Ausschnitt eines Lagersystems in einer fünften Ausführung und in einer Ansicht auf ein Hochleistungslager;
- Fig. 12: das Lagersystem mit dem Hochleistungslager und Nachschublager in Ansicht gemäß der Linie XII in Fig. 11;
- Fig. 13: einen Ausschnitt eines Lagersystems in einer sechsten Ausführung und in einer Draufsicht auf ein Hochleistungslager und Nachschublager;
- Fig. 14: ein Blockdiagramm für ein Verfahren zum Betrieben eines Lagersystemes,
- Fig. 15 und 16: die Ausführung gemäß Fig. 1 mit einer möglichen Konfiguration des ersten Lagerbereiches als Hochleistungslager und Nachschublager und des zweiten Lagerbereiches als Nachschublager,
- Fig. 17: die Ausführung gemäß Fig. 1 mit einer im Wesentlichen zwischen der ersten Führungsbahn und letzten Führungsbahn verstellbaren Transfervorrichtung, welche die den Führungsbahnen im ersten Lagerbereich (Hochleistungslager) zugeordneten Bereitstellvorrichtungen anfährt, um Stückgüter einzulagern und Stückgüter auszulagern.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

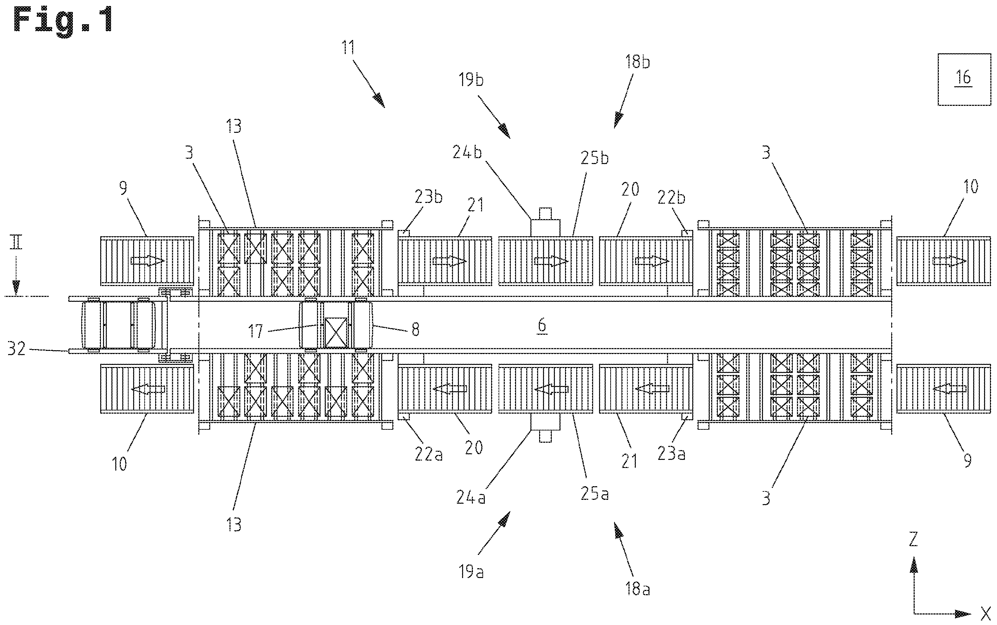

In den Fig. 1 bis 3 ist eine erste Ausführung eines Lagersystems gezeigt, welches einen ersten Lagerbereich 1 (Hochleistungslager) mit Lagerplätzen 2 zum Lagern von Stückgütern 3, einen zweiten Lagerbereich 4 (Nachschublager bzw. Vorratslager) mit Lagerplätzen 5 zum Lagern von Stückgütern 3, Führungsbahnen 6 im ersten Lagerbereich 1, Führungsbahnen 7 im zweiten Lagerbereich 4, eine oder mehrere automatisierte Lagerbediengeräte 8, eine erste Fördertechnik 9, 10 zum Antransport von Stückgütern 3 zum Hochleistungslager und Abtransport von Stückgütern 3 vom Hochleistungslager, eine Übergabevorrichtung 11 zum Transport von Stückgütern 3 zwischen dem Lagerbediengerät 8 und der ersten Fördertechnik 9, 10 zum Antransport von Stückgütern 3 zum Hochleistungslager und Abtransport von Stückgütern 3 vom Hochleistungslager, und eine Umsetzvorrichtung 12 zum Transport eines Lagerbediengerätes 8 zwischen den Führungsbahnen 6, 7 im Hochleistungslager und/oder im Nachschublager umfasst. Die Fördertechnik 9, 10 ist aus Gründen der besseren Übersicht in Fig. 1 nur abschnittsweise dargestellt. Der erste Lagerbereich 1 ist ein Hochleistungslager und der zweite Lagerbereich 4 ist ein Nachschublager.

Die Stückgüter 3 sind im beschriebenen Beispiel Behälter, welche jeweils einen einzigen Artikeltyp enthalten. Beispielsweise enthält ein erstes Behälter den Artikel "A", ein zweiter Behälter den Artikel "B" usw.

Gemäß dieser Ausführung sind die Lagerplätze 2 des Hochleistungslagers und die Lagerplätze 5 des Nachschublagers in übereinander liegenden Regalebenen (RE) und in den Lagerregalen 13 angeordnet. Somit bildet jedes Lagerregal 13 in übereinander liegenden Regalebenen (RE) nebeneinander eine Vielzahl von Lagerplätzen 2, 5 aus. Jeder Lagerplatz 2, 5 kann abhängig von einer Längenabmessung der Stückgüter 3 in einer z-Richtung eine entsprechende Anzahl an Stückgütern 3 aufnehmen. So können an einem Lagerplatz 2, 5 ein einziges Stückgut 3 (einfachtiefe Lagerung) oder an hintereinander liegenden Tiefenpositionen mehrere Stückgüter 3 (mehrfachtiefe Lagerung) gelagert werden. Im gezeigten Beispiel sind zwei Lagerregale 13 dargestellt, zwischen welchen eine in einer x-Richtung verlaufende Regalgasse 14 ausgebildet ist. Im Rahmen der Erfindung können aber auch mehr als zwei Lagerregale 13 vorgesehen werden, wobei zwischen benachbarten Lagerregalen 13 jeweils eine Regalgasse ausgebildet ist.

Die Lagerregale 13 können jeweils der Regalgasse 14 benachbarte, vertikale vordere Regalsteher und von der Regalgasse 14 entfernte, vertikale hintere Regalsteher umfassen. Die vorderen Regalsteher sind mit in Richtung der Regalgasse 14 horizontal verlaufenden vorderen Längstraversen und die hinteren Regalsteher mit in Richtung der Regalgasse 14 horizontal verlaufenden hinteren Längstraversen verbunden. Zwischen den Längstraversen können Querträger vorgesehen werden, welche sich in Tiefenrichtung eines Lagerregales 13 (z-Richtung) erstrecken. In diesem Fall bilden die Querträger obenseitig eine Lagerfläche bzw. die Lagerplätze 2, 5 aus. Ein Stückgut 3 lagert je nach Breitenabmessung auf zumindest zwei Querträgern.

Möglich wäre aber auch eine (nicht gezeigte) Ausführung, bei der die Lagerregale 13 je Regalebene zwischen den Längstraversen angeordnete und an diesen befestigte Fachböden oder Gitter aufweisen.

Das Lagersystem umfasst im Hochleistungslager in übereinander liegenden (horizontalen) Fahrebenen 15 die Führungsbahnen 6 und im Nachschublager in übereinander liegenden (horizontalen) Fahrebenen 15 die Führungsbahnen 7. Außerdem sind in den übereinander liegenden (horizontalen) Fahrebenen 15 die vor den Lagerplätzen 2, 5 bewegbaren und von einer Steuereinheit 16 unabhängig voneinander ansteuerbaren Lagerbediengeräte 8 zum Einlagern der Stückgüter 3 in die Lagerplätze 2, 5 bzw. Auslagern von Stückgütern 3 aus den Lagerplätzen 2, 5 angeordnet. Die Steuereinheit 16 kann ein Rechnersystem umfassen. Es kann vorgesehen werden, dass jeder Regalebene (RE) zumindest ein Lagerbediengerät 8 zugeordnet ist. Somit bedient ein Lagerbediengerät 8 über eine Lastaufnahmevorrichtung 17 eine Regalebene. Die Lastaufnahmevorrichtung 17 kann in einer Querrichtung (z-Richtung) doppelseitig ein oder mehrere Stückgüter 3 in die Lagerplätze 2, 5 einlagern bzw. aus den Lagerplätzen 2, 5 auslagern. Die Fahrebenen 15 und Regalebenen (RE) liegen im gezeigten Ausführungsbeispiel im Wesentlichen auf gleicher Höhenebene. Bevorzugt umfassen die Führungsbahnen 6 im Hochleistungslager und die Führungsbahnen 7 im Nachschublager jeweils vor den Lagerplätzen 2, 5 in einer x-Richtung verlaufende und paarweise einander gegenüberliegende vordere Längstraversen (Führungsschienen). Jede der Führungsbahnen 6 bildet eine Fahrebene 15 und jede der Führungsbahnen 7 bildet eine Fahrebene 15 aus, wobei das Lagerbediengerät 8 jeweils entlang der Fahrebenen 15 bewegt werden kann. Die Führungsbahnen 6, 7 können je Fahrebene 15 aber auch nur eine und vor den Lagerplätzen 2, 5 in einer x-Richtung verlaufende Längstraverse (Führungsschiene) umfassen, entlang welcher ein (nicht gezeigtes) Lagerbediengerät bewegt werden kann.

Es können aber nach einer anderen nicht gezeigten Ausführung auch weniger Lagerbediengeräte 8 als Regalebenen (RE) vorhanden sein, wenn das Lagerbediengerät 8 stockweise übereinander angeordnete Lastaufnahmevorrichtung 17 umfasst. Die Lastaufnahmevorrichtungen 17 können von der Steuereinheit 16 unabhängig voneinander angesteuert werden, wovon eine erste Lastaufnahmevorrichtung 17 in einer Querrichtung (z-Richtung) auf einer ersten Regalebene (RE) ein oder mehrere Stückgüter 3 in einen Lagerplatz 2, 5 einlagern bzw. aus einem Lagerplatz 2, 5 auslagern kann und eine zweite Lastaufnahmevorrichtung 17 in einer Querrichtung (z-Richtung) auf einer zweiten Regalebene (RE) ein oder mehrere Stückgüter 3 in einen Lagerplatz 2, 5 einlagern bzw. aus einem Lagerplatz 2, 5 auslagern kann. Somit kann ein Lagerbediengerät 8 beispielweise über zwei Lastaufnahmevorrichtungen 17 mehr als eine Regalebene, beispielweise zwei Regalebenen bedienen. Die Fahrebenen 15 liegen zwar nicht mehr in jeder Regalebene (RE), aber im Wesentlichen auf gleicher Höhenebene jeder zweiten Regalebene (RE), wobei die vor den Lagerplätzen 2, 5 in einer x-Richtung verlaufenden und paarweise einander gegenüberliegenden Führungsbahnen 6, 7 jeweils eine Fahrebene 15 ausbilden, entlang welcher das Lagerbediengerät 8 bewegt wird.

Gemäß der Erfindung ist es vorgesehen, das im Hochleistungslager auf wenigstens einer der übereinander liegenden Führungsbahnen 6 ein Lagerbediengerät 8 angeordnet ist. Mit anderen Worten ist dem Hochleistungslager wenigstens ein Lagerbediengerät 8 zugeordnet. Im Gegensatz dazu, kann im Nachschublager gar kein Lagerbediengerät 8 vorhanden sein, sondern muss ein solches aus dem Hochleistungslager entfernt und über die noch näher zu beschreibende Umsetzvorrichtung 12 dem Nachschublager zugeführt werden. Mit anderen Worten, wechselt bei Bedarf wenigstens ein Lagerbediengerät 8 aus dem Hochleistungslager in das Nachschublager und ist dieses Lagerbediengerät 8 dem Nachschublager temporär zugeordnet.

Wird im Hochleistungslager auf jeder Führungsbahn 6 je ein Lagerbediengerät 8 bereitgestellt, so kann ohne wesentlicher Leistungsschwankung im Hochleistungslager, im Nachschublager ein Lagerbediengerät 8 aus dem Hochleistungslager temporär bereitgestellt werden.

Im Unterschied dazu ist es aber auch möglich, dass im Nachschublager auf einer oder einigen wenigen Führungsbahnen 7 ein Lagerbediengerät 8 bereitgestellt und dieses Lagerbediengerät 8 / diese Lagerbediengeräte 8 im Hochleistungslager temporär bereitgestellt werden.

Bevorzugt ist jedoch eine Anzahl der Lagerbediengeräte 8 im Hochleistungslager höher als die Anzahl der Lagerbediengeräte 8 im Nachschublager, um einen hohen Lagerdurchsatz (Anzahl der Stückgüter, welche pro Zeiteinheit in das Hochleistungslager eingelagert bzw. ausgelagert wird) zu erreichen.

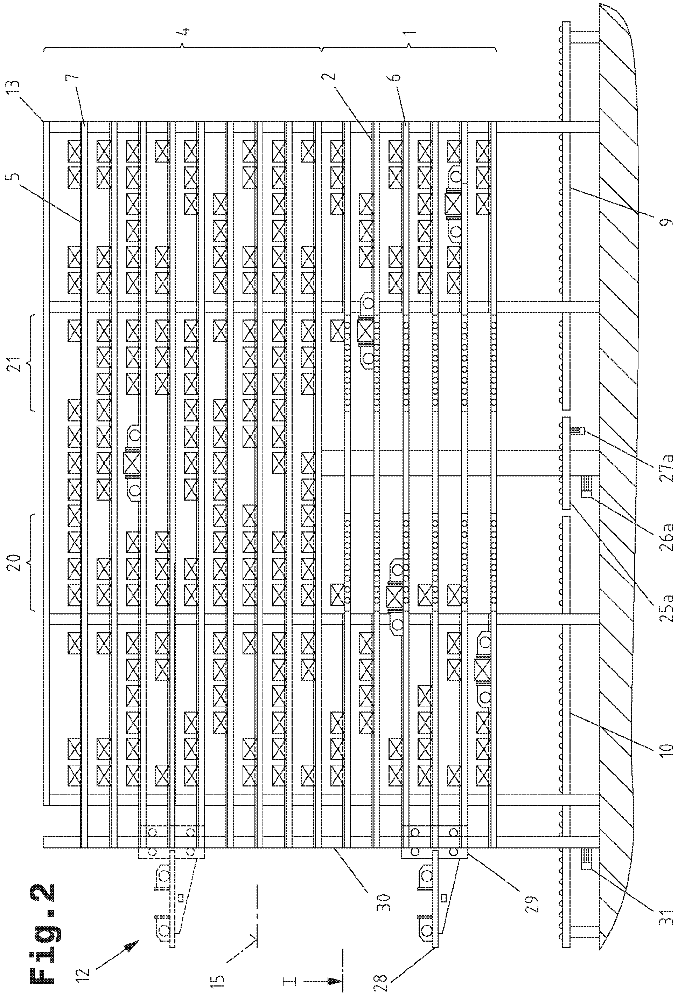

Die in den Fig. 1 und 2 gezeigte Übergabevorrichtung 11 schließt an das Hochleistungslager an. Insbesondere ist die Übergabevorrichtung 11 in den Lagerregalen 13 integriert angeordnet und umfasst eine erste Puffervorrichtung 18a, eine erste Stückgut-Hebevorrichtung 19a, eine zweite Puffervorrichtung 18b und eine zweite Stückgut-Hebevorrichtung 19b.

Jede Puffervorrichtung 18a, 18b umfasst an einer ersten Seite der Stückgut-Hebevorrichtung 19a, 19b und den Führungsbahnen 6 je Fahrebene 15 zugeordnet erste Bereitstellvorrichtungen 20 für das Zwischenpuffern eines oder mehrerer Stückgüter 3 (beispielweise einzulagernder Stückgüter 3) sowie an einer zweiten Seite der Stückgut-Hebevorrichtung 19a, 19b und den Führungsbahnen 6 je Fahrebene 15 zugeordnet zweite Bereitstellvorrichtungen 21 für das Zwischenpuffern eines oder mehrerer Stückgüter 3 (beispielweise auszulagernder Stückgüter 3).

Wie in Fig. 2 zu erkennen, sind die ersten Bereitstellvorrichtungen 20 und zweiten Bereitstellvorrichtungen 21 der Puffervorrichtungen 18a, 18b ausschließlich im Hochleistungslager und je Fahrebene 15 angeordnet. Im Nachschublager sind hingegen keine Bereitstellvorrichtungen 20, 21 vorgesehen. Die ersten Bereitstellvorrichtungen 20 bilden einen ersten Pufferbereich, einen so genannten Einlager-Pufferbereich und die zweiten Bereitstellvorrichtungen 21 bilden einen zweiten Pufferbereich, einen so genannten Auslager-Pufferbereich, wobei jeder Stückgut-Hebevorrichtung 19a, 19b der erste und zweite Pufferbereich zugeordnet sind. Die Bereitstellvorrichtungen 20, 21 weisen nach dieser Ausführung jeweils eine über einen Förderantrieb 22a, 22b, 23a, 23b antreibbare Fördervorrichtung, beispielweise Rollenförderer, auf. Die Bereitstellvorrichtungen 20, 21 bilden demnach motorisch angetriebene Bereitstellfördervorrichtungen.

Die Stückgut-Hebevorrichtungen 19a, 19b sind ortsfest aufgestellt und umfassen jeweils eine über einen Hubantrieb 24a, 24b heb- und senkbare Transfervorrichtung 25a, 25b. Der Hubantrieb 24a, 24b umfasst einen schematisch dargestellten Antriebsmotor 26a, 26b, welcher mit der Steuereinheit 16 verbunden ist. Bevorzugt sind die Transfervorrichtungen 25a, 25b jeweils auf einem Vertikalmast gelagert. Die Transfervorrichtungen 25a, 25b umfassen jeweils eine über einen Förderantrieb 27a, 27b antreibbare Fördervorrichtung mit einer parallel zur Regalgasse 14 verlaufenden Förderrichtung, wie durch die Pfeile in Fig. 1 angedeutet. Der Förderantrieb ist mit der Steuereinheit 16 verbunden. Die Fördervorrichtungen sind beispielweise ein Rollenförderer, Gurtförderer.

Nach einer (nicht gezeigten) anderen Ausführung ist es auch möglich, dass die Transfervorrichtung anstatt der antreibbaren Fördervorrichtung eine Aufnahmeplattform für ein oder mehrere Stückgüter 3 und eine Greifereinheit zum Schieben/Ziehen der Stückgüter 3 zwischen den Fördervorrichtungen der Fördertechniken 9, 10 und der Transfervorrichtung oder zwischen den Bereitstellvorrichtungen 20, 21 und der Transfervorrichtung aufweist. In diesem Fall sind die Bereitstellvorrichtungen 20, 21 mit stationären Auflagetischen (ohne Förderelemente) für das Zwischenpuffern eines oder mehrerer Stückgüter 3 ausgebildet. Eine solche Ausführung ist in der WO 2013/090970 A2 im Detail beschrieben.

Wie aus Fig. 1 und 2 ersichtlich, verlaufen im Hochleistungslager die Führungsbahnen 6 entlang der Lagerplätze 2 und der Übergabevorrichtung 11 (Puffervorrichtungen 18a, 18b und Stückgut-Hebevorrichtung 19a, 19b), sodass die Lagerbediengeräte 8 zum Einlagern von Stückgütern 3 und Auslagern von Stückgütern 3 entlang der Führungsbahnen 6 verfahren werden, wobei einerseits über die Lastaufnahmevorrichtung 17 auszulagernde Stückgüter 3 von den Lagerplätzen 2 entnommen und auf die Bereitstellvorrichtungen 21 der Puffervorrichtung 18a oder Puffervorrichtung 18b abgegeben werden, und andererseits über die Lastaufnahmevorrichtung 17 einzulagernde Stückgüter 3 von den Bereitstellvorrichtungen 20 der Puffervorrichtung 18a oder Puffervorrichtung 18b entnommen und auf die Lagerplätze 2 abgegeben werden.

Im Detail wird das Einlagern und Auslagern von Stückgütern 3 mittels der Fördertechniken 9, 10, der Übergabevorrichtung 11 und der Lagerbediengeräte 8 in der WO 2013/090970 A2 beschrieben.

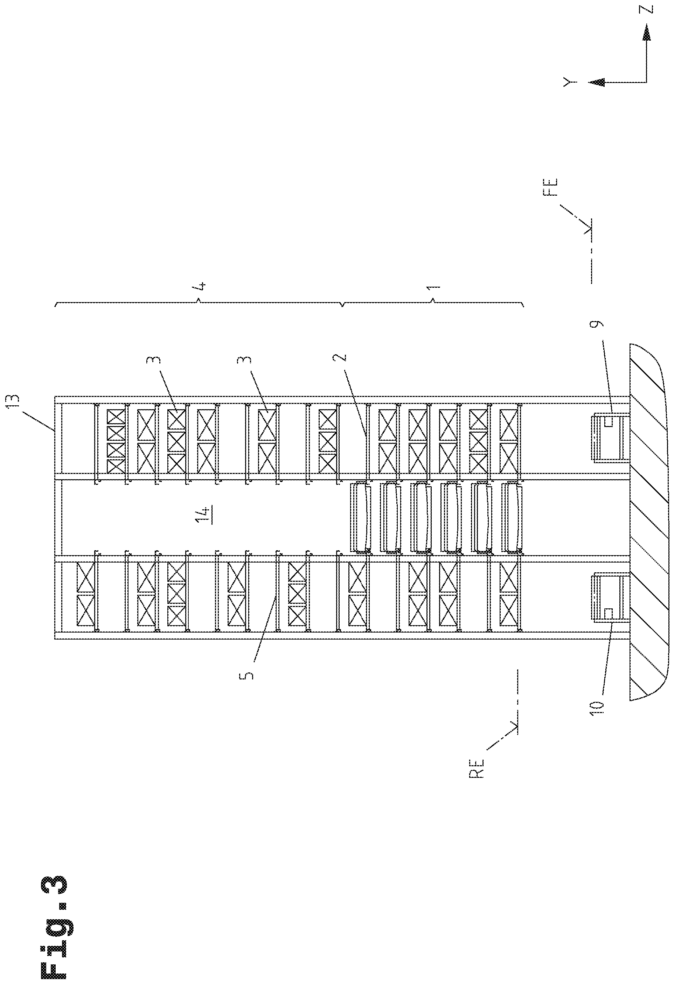

Wie aus Fig. 2 und 3 ersichtlich, verlaufen im Nachschublager die Führungsbahnen 7 entlang der Lagerplätze 5 (Puffervorrichtungen sind im Nachschublager nicht vorgesehen) und können einzelne Lagerbediengeräte 8 zum Einlagern von Stückgütern 3, Auslagern von Stückgütern 3 und/oder Umlagern von Stückgütern 3 entlang dieser Führungsbahnen 7 bewegt werden, wie im Nachfolgenden noch beschrieben wird.

Die Fördertechniken 9, 10 sind aus Gründen der besseren Übersicht in Fig. 1 nur abschnittsweise dargestellt. Die Fördertechnik 9 zum Antransport von Stückgütern 3 zur Stückgut-Hebevorrichtung 19a, 19b und die Fördertechnik 10 zum Abtransport von Stückgütern 3 von der Stückgut-Hebevorrichtung 19a, 19b verlaufen parallel zur Regalgasse 14 unterhalb der Lageregale 13 und bilden eine Fördertechnikebene (FE) aus.

Die heb- und senkbare Transfervorrichtung 25a, 25b kann auf Höhe der Fördertechnikebene (FE) zwischen die einander gegenüber liegenden Fördervorrichtungen der Fördertechniken 9, 10 und auf Höhe der Fahrebenen 15 zwischen die einander gegenüber liegenden Bereitstellvorrichtungen 20, 21 positioniert werden, um einzulagernde/auszulagernde Stückgüter 3 zwischen der Transfervorrichtung 25a, 25b und der jeweiligen Fördertechnik 9, 10 sowie zwischen der Transfervorrichtung 25a, 25b und der jeweiligen Bereitstellvorrichtung 20, 21 der ersten/zweiten Puffervorrichtung 18a, 18b zu fördern.

Auch sei darauf hingewiesen, dass die Übergabevorrichtung 11, auch bloß eine einzige Puffervorrichtung 18a und eine einzige Stückgut-Hebevorrichtung 19a aufweisen kann, wie dies jedoch nicht weiter dargestellt ist.

Die in den Fig. 1 und 2 schematisch dargestellte Umsetzvorrichtung 12 (Lagerbediengerät-Hebevorrichtung) zum Transport eines Lagerbediengerätes 8 zwischen den Führungsbahnen 6, 7 im Hochleistungslager und/oder im Nachschublager schließt stirnseitig an einem der einander gegenüber liegenden Stirnenden der Führungsbahnen 6, 7 an. Die Umsetzvorrichtung 12 umfasst nach dieser Ausführung eine Aufnahmeplattform 28, mittels welcher eine jede der Führungsbahnen 6 im Hochleistungslager und eine jede der Führungsbahnen 7 im Nachschublager anfahrbar ist, um zumindest ein Lagerbediengerät 8 zwischen dem Hochleistungslager und Nachschublager umzusetzen. In Fig. 2 ist die Aufnahmeplattform 28 in festen Linien eingetragen und auf Höhe einer der Führungsbahnen 6 verstellt, um ein Lagerbediengerät 8 auf die Aufnahmeplattform 28 aufzunehmen oder von der Aufnahmeplattform 28 abzugeben, und in strichlierten Linien eingetragen und auf Höhe einer der Führungsbahnen 7 verstellt, um ein Lagerbediengerät 8 auf die Aufnahmeplattform 28 aufzunehmen oder von der Aufnahmeplattform 28 abzugeben.

Alternativ ist aber auch eine (nicht gezeigte) Ausführung möglich, bei der nur eine oder einige der Führungsbahnen 6 im Hochleistungslager und eine jede der Führungsbahnen 7 im Nachschublager anfahrbar ist, um zumindest ein Lagerbediengerät 8 zwischen dem Hochleistungslager und Nachschublager umzusetzen.

Die Aufnahmeplattform 28 ist über eine Führungsvorrichtung 29, beispielweise Führungsrollen, an einem ortsfest aufgestellten Führungsrahmen 30 gelagert und über eine Antriebsvorrichtung 31 entlang dem Führungsrahmen 30 verstellbar.

Der Führungsrahmen 30 weist zu beiden Seiten der Regalgasse 14 angeordnete, vertikale Rahmenteile, eine diese miteinander verbindende und unterhalb der untersten Regalebene (RE) verlaufende untere Traverse sowie eine diese miteinander verbindende und oberhalb der obersten Regalebene (RE) verlaufende obere Traverse.

Die Antriebsvorrichtung 31 umfasst nicht näher dargestellte und am Führungsrahmen 30 gelagerte Zugmitteltriebe, welche synchron angetriebene, endlos umlaufende Zugmittel, welche jeweils um ein (oberes) Umlenkrad und ein mit einem Motor gekuppeltes (unteres) Antriebsrad geführt und mit der heb- und senkbaren Aufnahmeplattform 28 verbunden sind. Durch Drehbewegung der Antriebsräder wird die Aufnahmeplattform 28 relativ zu den Führungsbahnen 6, 7 in einer y-Richtung bis zu einer von einem Rechnersystem festgelegten y-Position bewegt.

Die Aufnahmeplattform 28 umfasst eine parallel zu den Führungsbahnen 6, 7 (in einer x-Richtung) erstreckende horizontale Führungsbahn, auf welchen ein Lagerbediengerät 8 aufgenommen werden kann. Die Führungsbahn umfasst in einer x-Richtung verlaufende und paarweise einander gegenüberliegende Führungsschienen 32.

Eine beispielhafte Ausführung einer solchen Umsetzvorrichtung 12 ist in der WO 2012/106745 A1 beschrieben.

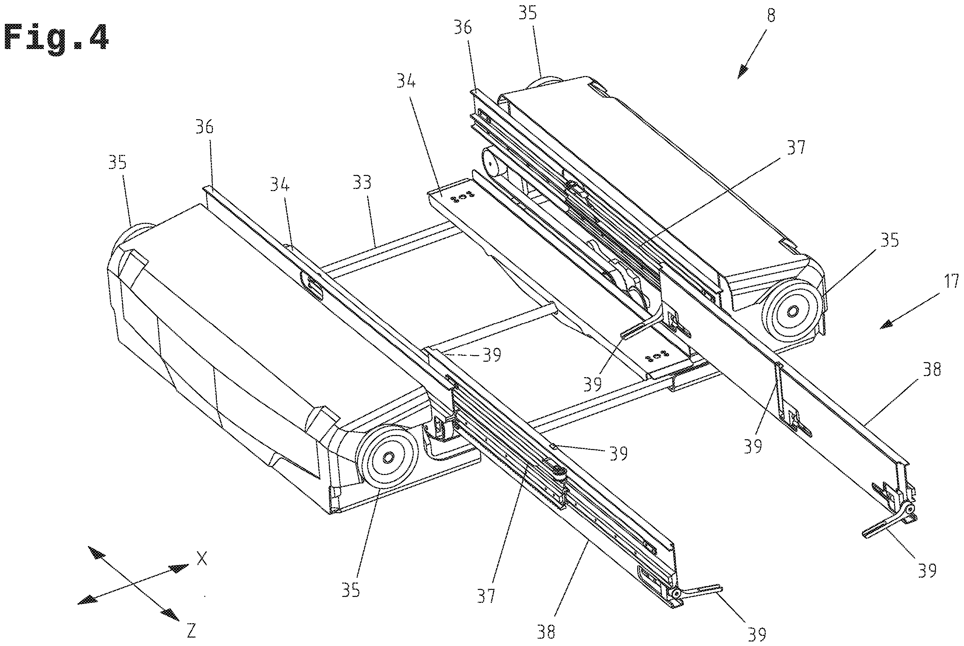

In Fig. 4 ist noch eine mögliche Ausgestaltung eines Lagerbediengerätes 8 gezeigt, welches als Einebenenregalbediengerät ausgebildet ist.

Das Lagerbediengerät 8 weist einen Tragrahmen 33, eine Transportplattform 34, Laufräder 35, einen Fahrantrieb mit zumindest einem (nicht dargestellten) Antriebsmotor zum Antrieb mindestens eines Laufrades, eine (nicht ersichtliche) Führungsvorrichtung mit Seitenführungsrädern, einen Stellantrieb mit zumindest einem (nicht dargestellten) Antriebsmotor zum Ausfahren / Einfahren der Lastaufnahmevorrichtung 17, eine (nicht dargestellte) Steuerelektronik sowie die Lastaufnahmevorrichtung 17, beispielweise zur Einlagerung und Auslagerung von Stückgütern 3 in ein bzw. aus einem Lagerregal 13 auf.

Die Lastaufnahmevorrichtung 17 kann parallel zueinander auf dem Tragrahmen 33 angeordnete und aus einer Ausgangsstellung nach beiden Richtung synchron ausfahrbare Teleskopiereinheiten umfassen, sodass in die zu beiden Seiten des Lagerbediengerätes 8 angeordneten Lagerregale 13 Stückgüter 3 eingelagert bzw. Stückgüter 3 ausgelagert werden können. Die Teleskopiereinheiten weisen jeweils einen Grundrahmen 36 und relativ gegenüber dem Grundrahmen 36 horizontal in einer Richtung (z-Richtung) ein- bzw. ausfahrbare Schlitten 37, 38 auf. Der erste Schlitten 37 ist über eine Führungsanordnung am Grundrahmen 36 verschiebbar gelagert und der zweite Schlitten 38 ist über eine Führungsanordnung am ersten Schlitten 37 verschiebbar gelagert. Die zweiten Schlitten 38 umfassen jeweils Transportorgane 39 zum Transport von Stückgütern 3 zwischen der Bereitstellvorrichtung 20, 21 und dem Lagerbediengerät 8 bzw. dem Lagerplatz 2, 5 und dem Lagerbediengerät 8. Die äußeren Transportorgane 39 sind in den gegenüberliegenden Endbereichen des zweiten Schlittens 38 angeordnet. Ebenso können zwischen den äußeren Transportorgane 39 zusätzlich innere Transportorgane 39 vorgesehen werden. Jedes Transportorgan 39 (Mitnahmeorgan) ist mit einem elektrischen Antriebsmotor gekuppelt und über diesen zwischen einer Ausgangsstellung und Betätigungsstellung bewegbar ist.

Darüber hinaus erweist es sich auch von Vorteil, wenn die Teleskopiereinheiten auch über einen (nicht dargestellten) Stellantrieb relativ zueinander und in einer x-Richtung verstellbar am Tragrahmen 33 gelagert sind. Auf diese Weise kann ein Abstand zwischen den Teleskopiereinheiten variabel und auf unterschiedliche Breitenabmessungen der Stückgüter 3 eingestellt werden.

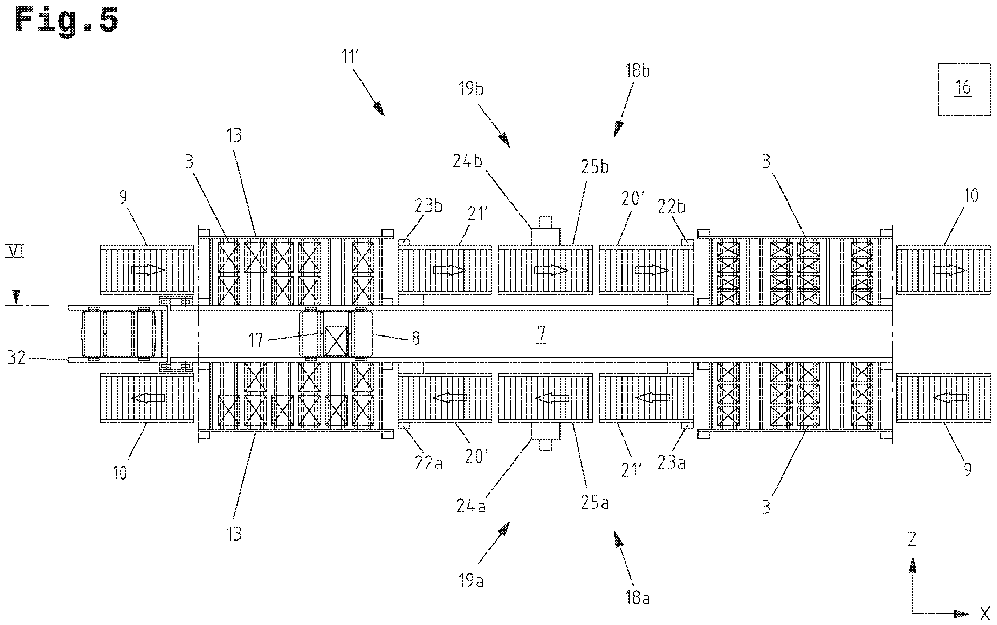

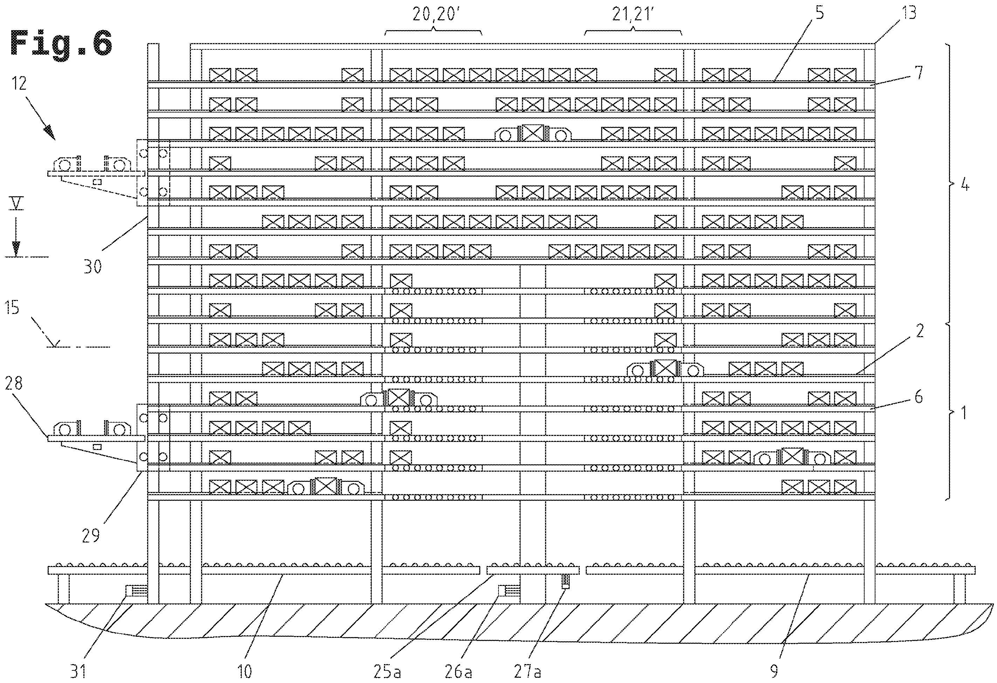

In den Fig. 5 und 6 ist eine zweite Ausführung eines Lagersystems gezeigt, welches mit Ausnahme der Übergabevorrichtung 11' zum Transport von Stückgütern 3 identisch aufgebaut sein kann, wie die Ausführung gemäß den Fig. 1 bis 3.

Die Übergabevorrichtung 11' schließt an das Hochleistungslager und an das Nachschublager an. Insbesondere ist die Übergabevorrichtung 11' in den Lagerregalen 13 integriert angeordnet und umfasst eine erste Puffervorrichtung 18a, eine erste Stückgut-Hebevorrichtung 19a, eine zweite Puffervorrichtung 18b und eine zweite Stückgut-Hebevorrichtung 19b.

Jede Puffervorrichtung 18a, 18b umfasst an einer ersten Seite der Stückgut-Hebevorrichtung 19a, 19b und im Hochleistungslager den Führungsbahnen 6 je Fahrebene 15 zugeordnet erste Bereitstellvorrichtungen 20 für das Zwischenpuffern eines oder mehrerer Stückgüter 3 (beispielweise einzulagernder Stückgüter 3) sowie an einer zweiten Seite der Stückgut-Hebevorrichtung 19a, 19b und im Hochleistungslager den Führungsbahnen 6 je Fahrebene 15 zugeordnet zweite Bereitstellvorrichtungen 21 für das Zwischenpuffern eines oder mehrerer Stückgüter 3 (beispielweise auszulagernder Stückgüter 3). Zusätzlich umfasst jede Puffervorrichtung 18a, 18b an einer ersten Seite der Stückgut-Hebevorrichtung 19a, 19b und im Nachschublager den Führungsbahnen 7 in einer oder einigen der Fahrebenen 15 zugeordnet erste Bereitstellvorrichtungen 20' für das Zwischenpuffern eines oder mehrerer Stückgüter 3 (beispielweise einzulagernder Stückgüter 3) und/oder an einer zweiten Seite der Stückgut-Hebevorrichtung 19a, 19b und im Nachschublager den Führungsbahnen 7 in einer oder einigen der Fahrebenen 15 zugeordnet zweite Bereitstellvorrichtungen 21' für das Zwischenpuffern eines oder mehrerer Stückgüter 3 (beispielweise auszulagernder Stückgüter 3).

Grundsätzlich sind aber im Nachschublager weniger erste Bereitstellvorrichtungen 20' als Führungsbahnen 7 und/oder weniger zweite Bereitstellvorrichtungen 21' als Führungsbahnen 7 vorhanden. Bevorzugt sind in weniger als zehn übereinander angeordneten Führungsbahnen 7 (bzw. Führungsebenen 15) erste Bereitstellvorrichtungen 20' und/oder zweite Bereitstellvorrichtungen 21' vorhanden. Das Nachschublager umfasst bevorzugt durch übereinander angeordnete Gehstege (nicht dargestellt) getrennte Zugangsbereiche, in welche eine Bedienperson zutreten kann, um beispielweise Wartungsarbeiten an einem Lagerbediengerät 8, an der Übergabevorrichtung oder an den Lagerregalen durchzuführen oder eine Störung bei der Manipulation von Stückgütern zu beseitigen. Die Zugangsbereiche haben jeweils eine Höhe zwischen 2,1 m und 3,0 m. Innerhalb eines Zugangsbereiches liegen bis zu zehn Fahrebenen 15. Es erweist sich dann von Vorteil, wenn im Nachschublager eine der Anzahl der übereinander angeordneten Führungsbahnen 7 bzw. Fahrebenen 15 entsprechende Anzahl an erste Bereitstellvorrichtungen 20' und zweite Bereitstellvorrichtungen 21' je Puffervorrichtung 18a, 18b vorgesehen werden. Es können aber auch weniger erste Bereitstellvorrichtungen 20' und zweite Bereitstellvorrichtungen 21' je Puffervorrichtung 18a, 18b (sofern zwei Puffervorrichtungen 18a, 18b vorhanden sind) vorgesehen werden, beispielsweise zwei erste Bereitstellvorrichtungen 20' und zweite Bereitstellvorrichtungen 21' je Puffervorrichtung 18a, 18b.

Die ersten Bereitstellvorrichtungen 20' bilden einen ersten Pufferbereich, einen so genannten Einlager-Pufferbereich und die zweiten Bereitstellvorrichtungen 21' bilden einen zweiten Pufferbereich, einen so genannten Auslager-Pufferbereich, wobei jeder Stückgut-Hebevorrichtung 19a, 19b der erste und zweite Pufferbereich zugeordnet sind. Die Bereitstellvorrichtungen 20', 21' weisen nach dieser Ausführung jeweils eine über einen Förderantrieb 22a, 22b, 23a, 23b antreibbare Fördervorrichtung, beispielweise Rollenförderer, auf. Die Bereitstellvorrichtungen 20, 21 bilden demnach motorisch angetriebene Bereitstellfördervorrichtungen.

Die Stückgut-Hebevorrichtungen 19a, 19b sind ortsfest aufgestellt und umfassen jeweils eine über einen Hubantrieb 24a, 24b heb- und senkbare Transfervorrichtung 25a, 25b. Der Hubantrieb 24a, 24b umfasst einen schematisch dargestellten Antriebsmotor 26a, 26b, welcher mit der Steuereinheit 16 verbunden ist. Bevorzugt sind die Transfervorrichtungen 25a, 25b jeweils auf einem Vertikalmast gelagert. Die Transfervorrichtungen 25a, 25b umfassen jeweils eine über einen Förderantrieb 27a, 27b antreibbare Fördervorrichtung mit einer parallel zur Regalgasse 14 verlaufenden Förderrichtung, wie durch die Pfeile in Fig. 5 angedeutet. Der Förderantrieb ist mit der Steuereinheit 16 verbunden. Die Fördervorrichtungen sind beispielweise ein Rollenförderer, Gurtförderer.

Nach einer (nicht gezeigten) anderen Ausführung ist es auch möglich, dass die Transfervorrichtung anstatt der antreibbaren Fördervorrichtung eine Aufnahmeplattform für ein oder mehrere Stückgüter 3 und eine Greifereinheit zum Schieben/Ziehen der Stückgüter 3 zwischen den Fördervorrichtungen der Fördertechniken 9, 10 und der Transfervorrichtung oder zwischen den Bereitstellvorrichtungen 20, 21, 20', 21' und der Transfervorrichtung aufweist. In diesem Fall sind die Bereitstellvorrichtungen 20, 210 20', 21' mit stationären Auflagetischen (ohne Förderelemente) für das Zwischenpuffern eines oder mehrerer Stückgüter 3 ausgebildet. Eine solche Ausführung ist in der WO 2013/090970 A2 im Detail beschrieben.

Die heb- und senkbare Transfervorrichtung 25a, 25b kann auf Höhe der Fördertechnikebene (FE) zwischen die einander gegenüber liegenden Fördervorrichtungen der Fördertechniken 9, 10 und auf Höhe der Fahrebenen 15 zwischen die einander gegenüber liegenden Bereitstellvorrichtungen 20, 21, 20', 21' positioniert werden, um einzulagernde/auszulagernde Stückgüter 3 zwischen der Transfervorrichtung 25a, 25b und der jeweiligen Fördertechnik 9, 10 sowie zwischen der Transfervorrichtung 25a, 25b und der jeweiligen Bereitstellvorrichtung 20, 21, 20', 21' der ersten/zweiten Puffervorrichtung 18a, 18b zu fördern.

Nach dieser Ausführung können im Nachschublager auf einer oder einigen wenigen Führungsbahnen 7, welchen die Bereitstellvorrichtungen 20', 21' zugeordnet sind, ein Lagerbediengerät 8 bereitgestellt werden.

Die Umsetzvorrichtung 12 (Lagerbediengerät-Hebevorrichtung) zum Transport eines Lagerbediengerätes 8 zwischen den Führungsbahnen 6, 7 im Hochleistungslager und Nachschublager bzw. zwischen den Führungsbahnen 7 im Nachschublager schließt stirnseitig an einem der einander gegenüber liegenden Stirnenden der Führungsbahnen 6, 7 an und ist gemäß den obigen Ausführungen ausgebildet.

Auch sei darauf hingewiesen, dass die Übergabevorrichtung 11', auch bloß eine einzige Puffervorrichtung 30a und eine einzige Stückgut-Hebevorrichtung 19a aufweisen kann, wie dies jedoch nicht weiter dargestellt ist.

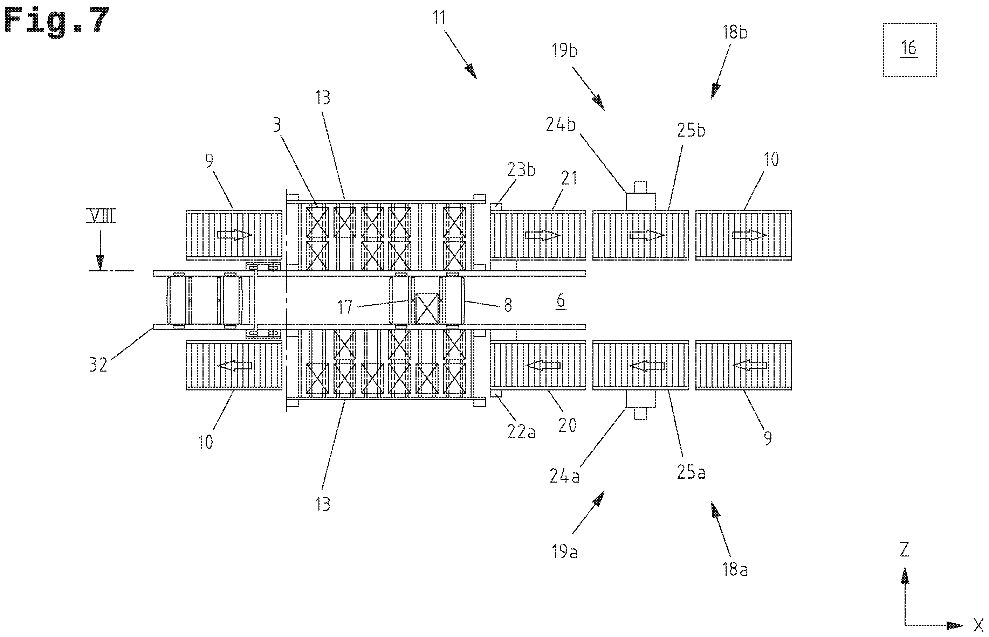

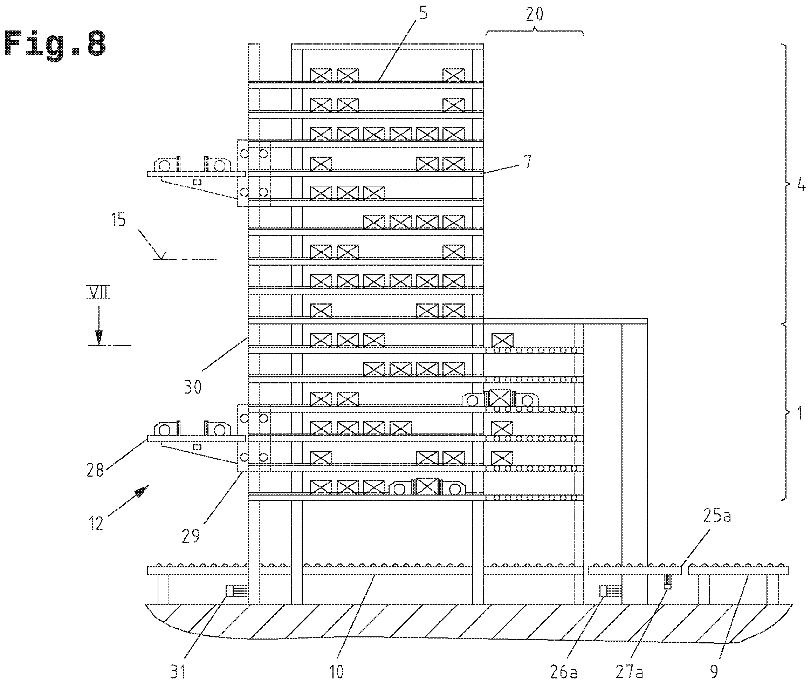

In den Fig. 7 und 8 ist eine dritte Ausführung eines Lagersystems gezeigt, welches wiederum einen ersten Lagerbereich 1 (Hochleistungslager) mit Lagerplätzen 2 zum Lagern von Stückgütern 3, einen zweiten Lagerbereich 4 (Nachschublager bzw. Vorratslager) mit Lagerplätzen 5 zum Lagern von Stückgütern 3, Führungsbahnen 6 im ersten Lagerbereich 1, Führungsbahnen 7 im zweiten Lagerbereich 4, eine oder mehrere automatisierte Lagerbediengeräte 8, eine erste Fördertechnik 9, 10 zum Antransport von Stückgütern 3 zum Hochleistungslager und Abtransport von Stückgütern 3 vom Hochleistungslager, eine Übergabevorrichtung 11 zum Transport von Stückgütern 3 zwischen dem Lagerbediengerät 8 und der ersten Fördertechnik 9, 10 zum Antransport von Stückgütern 3 zum Hochleistungslager und Abtransport von Stückgütern 3 vom Hochleistungslager, und eine Umsetzvorrichtung 12 zum Transport eines Lagerbediengerätes 8 zwischen den Führungsbahnen 6, 7 im Hochleistungslager und/oder im Nachschublager umfasst, wie oben beschrieben.

Das Lagersystem umfasst im Hochleistungslager in übereinander liegenden (horizontalen) Fahrebenen 15 die Führungsbahnen 6 und im Nachschublager in übereinander liegenden (horizontalen) Fahrebenen 15 die Führungsbahnen 7. Außerdem sind in den übereinander liegenden (horizontalen) Fahrebenen 15 die vor den Lagerplätzen 2, 5 bewegbaren und von einer Steuereinheit 16 unabhängig voneinander ansteuerbaren Lagerbediengeräte 8 zum Einlagern der Stückgüter 3 in die Lagerplätze 2, 5 bzw. Auslagern von Stückgütern 3 aus den Lagerplätzen 2, 5 angeordnet.

Um Wiederholung zu vermeiden, wird in Bezug auf die Bereitstellung der Lagerbediengeräte 8 im Hochleistungslager und Nachschublager auf die ausführliche Offenbarung zu den Fig. 1 bis 3 verwiesen. Bevorzugt ist wiederum eine Anzahl der Lagerbediengeräte 8 im Hochleistungslager höher als die Anzahl der Lagerbediengeräte 8 im Nachschublager, um einen hohen Lagerdurchsatz (Anzahl der Stückgüter, welche pro Zeiteinheit in das Hochleistungslager eingelagert bzw. ausgelagert wird) zu erreichen.

Die Übergabevorrichtung 11 schließt an das Hochleistungslager an. Insbesondere ist die Übergabevorrichtung 11 stirnseitig zu den Lagerregalen 13 angeordnet und umfasst eine erste Puffervorrichtung 18a, eine erste Stückgut-Hebevorrichtung 19a, eine zweite Puffervorrichtung 18b und eine zweite Stückgut-Hebevorrichtung 19b.

Die erste Puffervorrichtung 18a umfasst ausschließlich an einer (ersten) Seite der Stückgut-Hebevorrichtung 19a und den Führungsbahnen 6 je Fahrebene 15 zugeordnet erste Bereitstellvorrichtungen 20 für das Zwischenpuffern eines oder mehrerer Stückgüter 3 (beispielweise einzulagernder Stückgüter 3). Die zweite Puffervorrichtung 18b umfasst ausschließlich an einer (ersten) Seite der Stückgut-Hebevorrichtung 19b und den Führungsbahnen 6 je Fahrebene 15 zugeordnet zweite Bereitstellvorrichtungen 21 für das Zwischenpuffern eines oder mehrerer Stückgüter 3 (beispielweise auszulagernder Stückgüter 3).

Wie in Fig. 8 zu erkennen, sind die ersten Bereitstellvorrichtungen 20 und zweiten Bereitstellvorrichtungen 21 der Puffervorrichtungen 18a, 18b ausschließlich im Hochleistungslager und je Fahrebene 15 angeordnet. Im Nachschublager sind hingegen keine Bereitstellvorrichtungen 20, 21 vorgesehen.

Grundsätzlich kann aber auch nach dieser Ausführung jede Puffervorrichtung 18a, 18b zusätzlich an der genannten (ersten) Seite der Stückgut-Hebevorrichtung 19a, 19b und im Nachschublager den Führungsbahnen 7 in einer oder einigen der Fahrebenen 15 zugeordnet erste Bereitstellvorrichtungen 20' für das Zwischenpuffern eines oder mehrerer Stückgüter 3 (beispielweise einzulagernder Stückgüter 3) und/oder den Führungsbahnen in einer oder einigen der Fahrebenen 15 zugeordnet zweite Bereitstellvorrichtungen 21' für das Zwischenpuffern eines oder mehrerer Stückgüter 3 (beispielweise auszulagernder Stückgüter 3) umfassen. Diesbezüglich wird auf die Offenbarung zur Übergabevorrichtung 11' gemäß den Fig. 5 und 6 hingewiesen.

Die heb- und senkbare Transfervorrichtung 25a, 25b der Übergabevorrichtung kann auf Höhe der Fördertechnikebene (FE) zwischen die einander gegenüber liegenden Fördervorrichtungen der Fördertechniken 9, 10 und auf Höhe der Fahrebenen 15 stirnseitig vor den Bereitstellvorrichtungen 20, 21 (und gegebenenfalls auch den Bereitstellvorrichtungen 20', 21') positioniert werden, um einzulagernde/auszulagernde Stückgüter 3 zwischen der Transfervorrichtung 25a, 25b und der jeweiligen Fördertechnik 9, 10 sowie zwischen der Transfervorrichtung 25a, 25b und der jeweiligen Bereitstellvorrichtung 20, 21 der ersten/zweiten Puffervorrichtung 18a, 18b zu fördern.

In Bezug auf das Lagerbediengerät 8, die Bereitstellvorrichtungen 20, 21, 20', 21', die Übergabevorrichtung 11, 11' und Umsetzvorrichtung 12 wird auf oben beschriebene Offenbarung hingewiesen und ist diese Offenbarung auf die Ausführung gemäß den Fig. 7 und 8 zu übertragen.

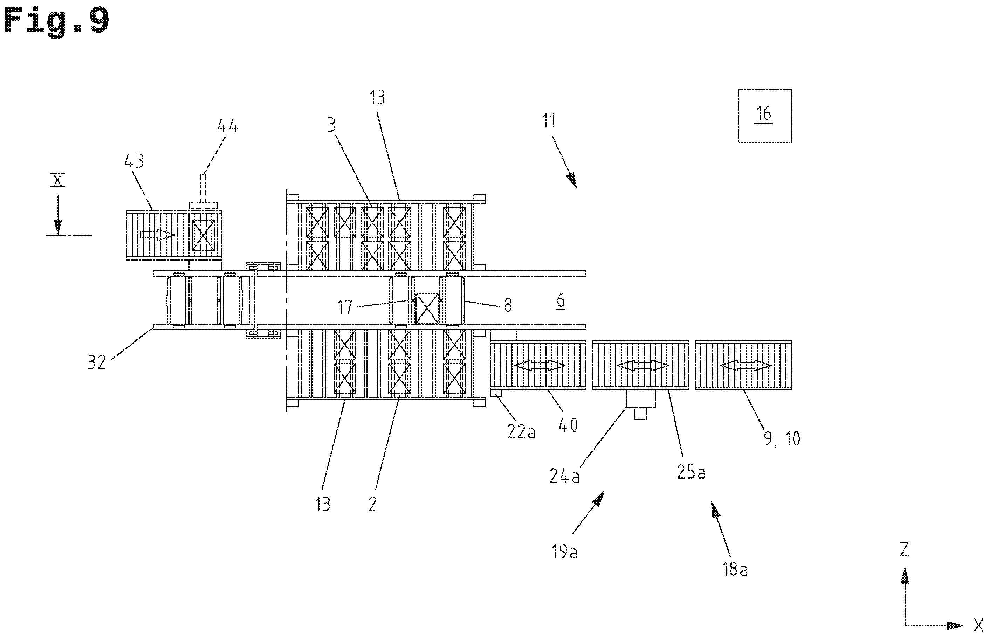

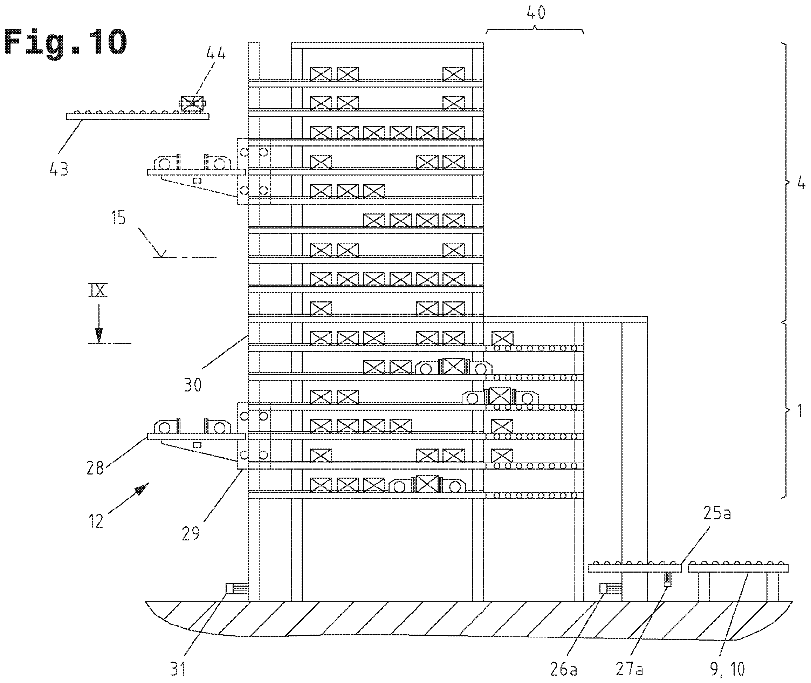

In den Fig. 9 und 10 ist eine vierte Ausführung gezeigt, bei der die Übergabevorrichtung 11 stirnseitig vor den Lagerregalen 13 angeordnet ist. Diese umfasst die erste Puffervorrichtung 18a und die erste Stückgut-Hebevorrichtung 19a. Die Puffervorrichtung 18a umfasst an einer einzigen Seite der Stückgut-Hebevorrichtung 19a und den Führungsbahnen 6 je Fahrebene 15 zugeordnet Bereitstellvorrichtungen 40 für das Zwischenpuffern eines oder mehrerer Stückgüter 3 (beispielweise einzulagernder und/oder auszulagernder Stückgüter 3).

Ebenso wie zu Fig. 8 beschrieben, sind auch nach dieser Ausführung die Bereitstellvorrichtungen 40 ausschließlich im Hochleistungslager und je Fahrebene 15 angeordnet. Im Nachschublager sind hingegen keine Bereitstellvorrichtungen 40 vorgesehen.

Grundsätzlich kann aber auch nach einer nicht gezeigten Ausführung die Puffervorrichtung 18a zusätzlich an der genannten (ersten) Seite der Stückgut-Hebevorrichtung 19a und im Nachschublager den Führungsbahnen 7 in einer oder einigen der Fahrebenen 15 zugeordnet erste Bereitstellvorrichtungen 40' für das Zwischenpuffern eines oder mehrerer Stückgüter 3 (beispielweise einzulagernder und/oder auszulagernder Stückgüter 3) umfassen. Diesbezüglich wird auf die Offenbarung zur Übergabevorrichtung 11' gemäß den Fig. 5 und 6 hingewiesen.

Es sei noch erwähnt, dass im Gegensatz zu den zuvor beschriebenen Ausführungsformen bei den hier eingesetzten Bereitstellvorrichtungen 40, 40' auch ein Reversierbetrieb vorgesehen sein kann. Umfassen die Bereitstellvorrichtungen 40, 40' Fördervorrichtungen, können letztere die Förderrichtungen reversieren, wie mit dem Doppelpfeil angedeutet. Natürlich ist es auch nach dieser Ausführung möglich, dass die Übergabevorrichtung 11 in den Lagerregalen 13 integriert angeordnet ist. Andererseits kann aber auch die Förderrichtung der Bereitstellvorrichtungen 40, 40' in den Fahrebenen 15 abwechseln. Bespielweise ist die Bereitstellvorrichtung 40, 40' in der ersten Fahrebene 15 zum Einlagern von Stückgütern 3, die Bereitstellvorrichtung 40, 40' in der zweiten Fahrebene 15 zum Auslagern von Stückgütern 3 usw.

In Bezug auf das Lagerbediengerät 8, die Übergabevorrichtung 11, 11' und Umsetzvorrichtung 12 wird auf oben beschriebene Offenbarung hingewiesen und ist diese Offenbarung auf die Ausführung gemäß Fig. 9 zu übertragen.

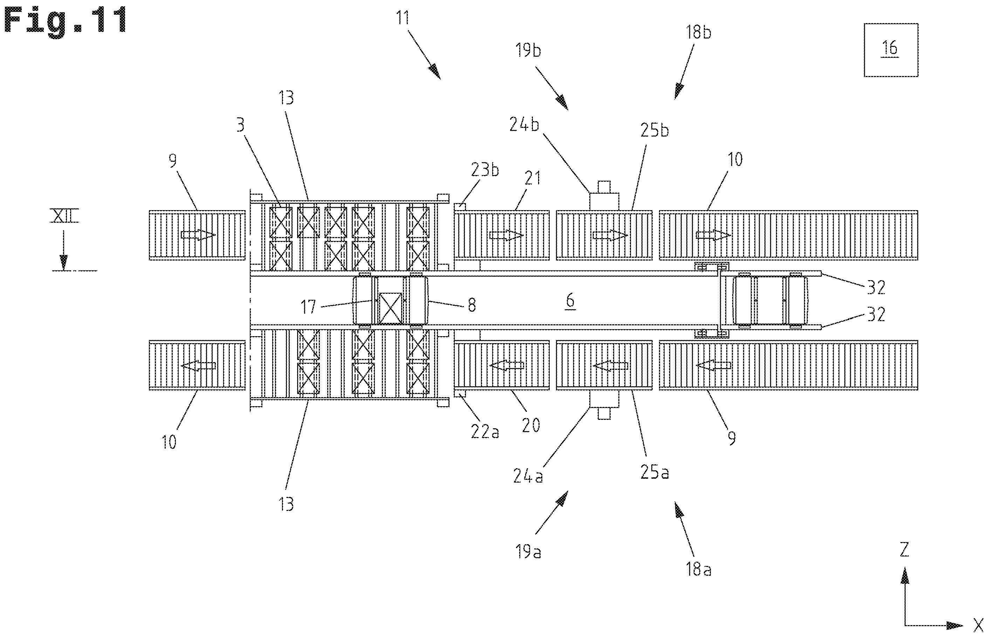

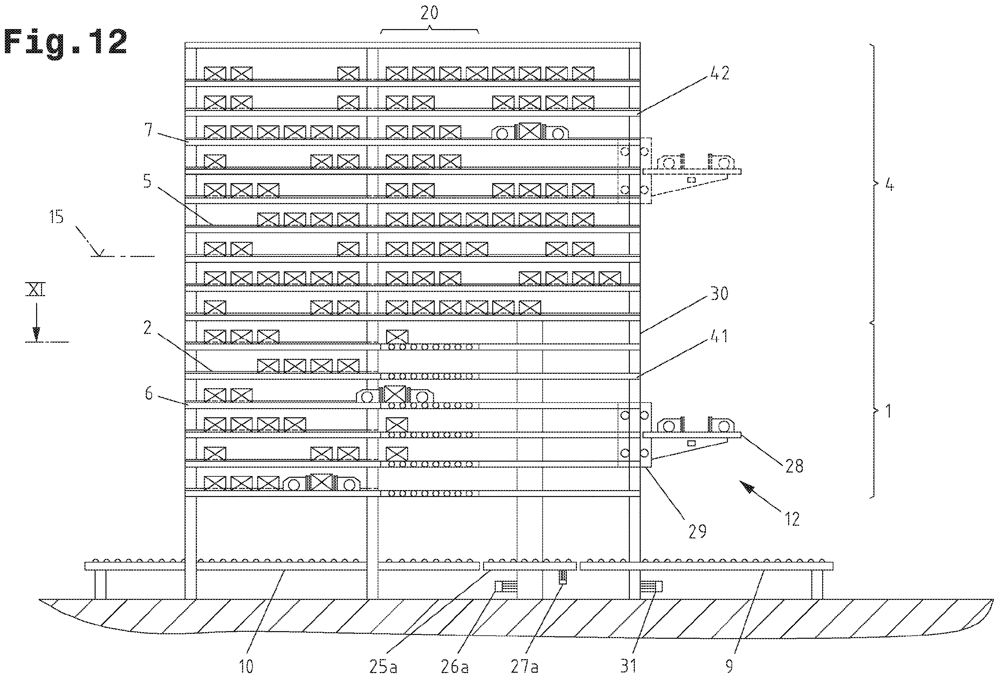

In den Fig. 11 und 12 ist eine modifizierte (fünfte) Ausführung von Fig. 7 und 8 gezeigt, bei der im Hochleistungslager die Führungsbahnen 6 an der Übergabevorrichtung 11 vorbeilaufen und mit ihren ersten Führungsbahnenden 41 an der Übergabevorrichtung 11 in Richtung der Längserstreckung der Führungsbahnen 6 vorragen, und im Nachschublager die Führungsbahnen 7 mit ihren ersten Führungsbahnenden 42 bis etwa lotrecht oberhalb / unterhalb der ersten Führungsbahnenden 41 vorragen. Die Umsetzvorrichtung 12 zum Transport eines Lagerbediengerätes 8 schließt an die ersten Führungsbahnenden 41, 42 derart an, dass die Führungsbahnen 6, 7 im Hochleistungslager und Nachschublager von der Aufnahmeplattform 28 anfahrbar sind, um das Lagerbediengerät 8 zwischen einer der Führungsbahnen 6 im Hochleistungslager und/oder einer der Führungsbahnen 7 im Nachschublager zu bewegen.

Es sei an dieser Stelle hingewiesen, dass das Lagersystem auch eine zweite Fördertechnik 43 zum Antransport von Stückgütern 3 zum Nachschublager umfasst, welche beispielhaft bloß in den Fig. 9 und 10 eingetragen ist. Die zweite Fördertechnik 43 schließt an die Umsetzvorrichtung 12 derart an, dass die Aufnahmeplattform 28 der Umsetzvorrichtung 12 gegenüber einem Bereitstellplatz an der zweiten Fördertechnik 43 positioniert werden kann. Befindet sich ein unbeladenes Lagerbediengerät 8 auf der Aufnahmeplattform 28 und wurde die Aufnahmeplattform 28 mit dem Lagerbediengerät 8 gegenüber dem Bereitstellplatz positioniert, kann beispielweise mittels der Lastaufnahmevorrichtung 17 ein Stückgut 3 vom Bereitstellplatz übernommen und auf das Lagerbediengerät 8 aufgeladen werden. Alternativ kann die Übergabe eines Stückgutes 3 vom Bereitstellplatz auf das Lagerbediengerät 8 auch über eine auf Höhe der Fördertechnikebene angeordnete Beladevorrichtung 44, beispielweise ein ansteuerbarer Schieber, wie in den Fig. 9 und 10 in strichlierten Linien schematisch eingetragen, oder einen Gurtumsetzer erfolgen. Ein solcher Gurtumsetzer ist im Bereich des Bereitstellplatzes angeordnet und ermöglicht eine Querversetzung eines auf dem Gurtumsetzer platzierten Stückgutes in Richtung auf das Lagerbediengerät 8.

Auch sei an dieser Stelle hingewiesen, dass bei einem Lagersystem mit mehr als einer Regalgasse 14 je Regalgasse 14 eine Übergabevorrichtung 11; 11' zum Transport von Stückgütern 3 zwischen dem Lagerbediengerät 8 und der ersten Fördertechnik 9, 10 und eine Umsetzvorrichtung 12 zum Transport eines Lagerbediengerätes 8 zwischen den Führungsbahnen 6, 7 im Hochleistungslager und/oder im Nachschublager umfassen kann. Andererseits kann auch für mehrere Regalgassen 14 eine gemeinsame Umsetzvorrichtung 12 zum Transport eines Lagerbediengerätes 8 zwischen den Führungsbahnen 6, 7 im Hochleistungslager und/oder im Nachschublager verwendet werden, wobei das auf die Aufnahmeplattform 28 übernommene Lagerbediengerät 8 sowohl in einer z-Richtung horizontal quer zu den Regallagergassen 14 als auch in einer y-Richtung vertikal bewegbar ist, um das Lagerbediengerät 8 zwischen beliebigen der Regallagergassen 14 und beliebigen der Führungsbahnen 6, 7 im Hochleistungslager und/oder im Nachschublager umsetzen zu können. Eine solche Umsetzvorrichtung 12 zum Transport eines Lagerbediengerätes 8 ist beispielweise aus der DE 10 2009 032 406 A1 bekannt.

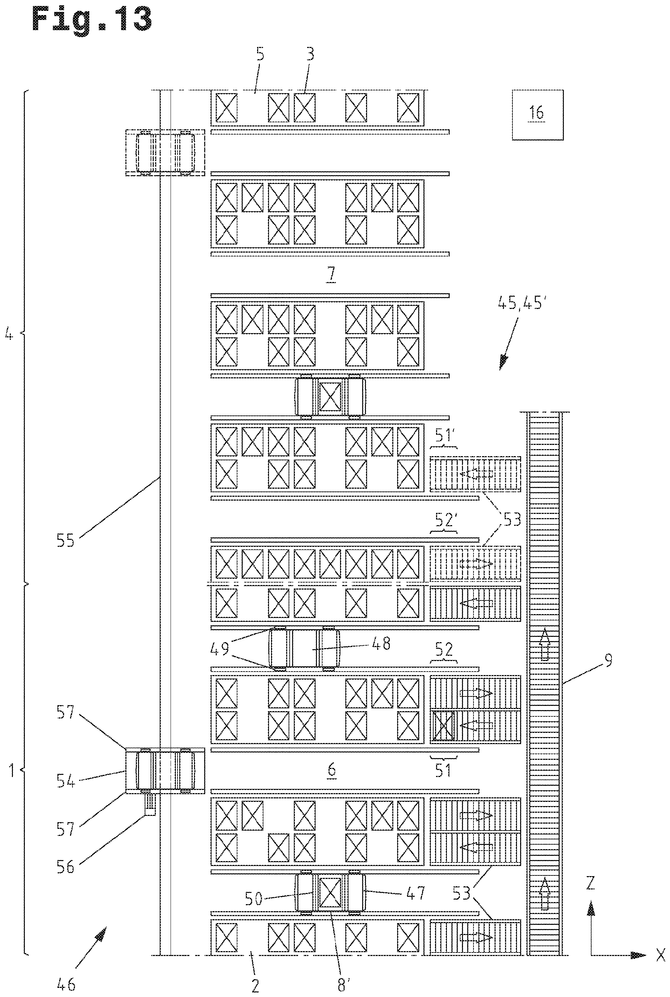

In der Fig. 13 ist eine sechste Ausführung eines Lagersystems gezeigt, welches einen ersten Lagerbereich 1 (Hochleistungslager) mit Lagerplätzen 2 zum Lagern von Stückgütern 3, einen zweiten Lagerbereich 4 (Nachschublager bzw. Vorratslager) mit Lagerplätzen 5 zum Lagern von Stückgütern 3, Führungsbahnen 6 im ersten Lagerbereich 1, Führungsbahnen 7 im zweiten Lagerbereich 4, eine oder mehrere automatisierte Lagerbediengeräte 8', eine erste Fördertechnik 9 zum Antransport von Stückgütern 3 zum Hochleistungslager und Abtransport von Stückgütern 3 vom Hochleistungslager, eine Übergabevorrichtung 45 zum Transport von Stückgütern 3 zwischen dem Lagerbediengerät 8' und der ersten Fördertechnik 9 zum Antransport von Stückgütern 3 zum Hochleistungslager und Abtransport von Stückgütern 3 vom Hochleistungslager, und eine Umsetzvorrichtung 46 zum Transport eines Lagerbediengerätes 8' zwischen den Führungsbahnen 6, 7 im Hochleistungslager und/oder im Nachschublager umfasst. Die Fördertechnik 9 ist beispielweise eine geschlossene Förderumlaufbahn (Loop), welche aus Gründen der besseren Übersicht in Fig. 13 nur abschnittsweise dargestellt ist.

Gemäß dieser Ausführung sind die Lagerplätze 2 des Hochleistungslagers und die Lagerplätze 5 des Nachschublagers in einer einzigen Lagerebene nebeneinander angeordnet. Die Lagerplätze 2, 5 können auf Traggestellen, welche ortsfest aufgestellt sind, oder aber auch auf einer Bodenfläche des Lagersystemes ausgebildet sein.

Das Lagersystem umfasst im Hochleistungslager nebeneinander verlaufende (horizontale) Führungsbahnen 6 und im Nachschublager nebeneinander verlaufende (horizontale) Führungsbahnen 7. Außerdem sind entlang der Führungsbahnen 6, 7 vor den Lagerplätzen 2, 5 bewegbare und von einer Steuereinheit 16 unabhängig voneinander ansteuerbare Lagerbediengeräte 8' zum Einlagern der Stückgüter 3 in die Lagerplätze 2, 5 bzw. Auslagern von Stückgütern 3 aus den Lagerplätzen 2, 5 angeordnet. Die Steuereinheit 16 kann ein Rechnersystem umfassen.

Gemäß der Erfindung ist es vorgesehen, das im Hochleistungslager auf wenigstens einer der Führungsbahnen 6 ein Lagerbediengerät 8' angeordnet ist. Mit anderen Worten ist dem Hochleistungslager wenigstens ein Lagerbediengerät 8' zugeordnet. Im Gegensatz dazu, kann im Nachschublager gar kein Lagerbediengerät 8' vorhanden sein, sondern muss ein solches aus dem Hochleistungslager entfernt und über die noch näher zu beschreibende Umsetzvorrichtung 46 dem Nachschublager zugeführt werden. Mit anderen Worten, wechselt bei Bedarf wenigstens ein Lagerbediengerät 8' aus dem Hochleistungslager in das Nachschublager und ist dieses Lagerbediengerät 8' dem Nachschublager temporär zugeordnet.

Es kann auch vorgesehen werden, dass im Hochleistungslager jeder Führungsbahn 6 zumindest ein Lagerbediengerät 8' zugeordnet ist.

Wird im Hochleistungslager auf jeder Führungsbahn 6 je ein Lagerbediengerät 8' bereitgestellt, so kann ohne wesentlicher Leistungsschwankung im Hochleistungslager, im Nachschublager ein Lagerbediengerät 8' aus dem Hochleistungslager temporär bereitgestellt werden.

Im Unterschied dazu ist es aber auch möglich, dass im Nachschublager auf einer oder einigen wenigen Führungsbahnen 7 ein Lagerbediengerät 8' bereitgestellt und dieses Lagerbediengerät 8' / diese Lagerbediengeräte 8' im Hochleistungslager temporär bereitgestellt werden.

Bevorzugt ist jedoch eine Anzahl der Lagerbediengeräte 8' im Hochleistungslager höher als die Anzahl der Lagerbediengeräte 8' im Nachschublager, um einen hohen Lagerdurchsatz (Anzahl der Stückgüter, welche pro Zeiteinheit in das Hochleistungslager eingelagert bzw. ausgelagert wird) zu erreichen.

Das Lagerbediengerät 8' weist einen Tragrahmen 47, eine Transportplattform 48, Laufräder 49, einen Fahrantrieb mit zumindest einem (nicht dargestellten) Antriebsmotor zum Antrieb mindestens eines Laufrades, einen Stellantrieb mit zumindest einem (nicht dargestellten) Antriebsmotor zum Ausfahren / Einfahren der Lastaufnahmevorrichtung 50, eine (nicht dargestellte) Steuerelektronik sowie die Lastaufnahmevorrichtung 50, beispielweise zur Einlagerung und Auslagerung von Stückgütern 3 auf einen bzw. von einem Lagerplatz 2, 5 auf. Die Lastaufnahmevorrichtung 50 kann gemäß der in Fig. 4 beschriebenen Ausführung ausgebildet sein.

In der gezeigten Ausführung ist das Lagerbediengerät 8' über die Laufräder 49 entlang der Führungsbahnen 6, 7 bewegbar. Die Führungsbahnen 6, 7 liegen in einer einzigen Fahrebene 15. Die Laufräder 49 bilden ein Schienenfahrwerk.

Alternativ kann das Lagerbediengerät 8' über die Laufräder 49 am Boden vor den Lagerplätzen 2, 5 in einer x-Richtung frei beweglich fahren. Zusätzliche Führungsschienen sind nicht erforderlich. Die Laufräder 49 bilden ein Bodenfahrwerk. In diesem Fall bildet die Bodenfläche in zwischen den Lagerreihen (mit den Lagerplätzen 2, 5) ausgebildeten Bodenabschnitten die Führungsbahnen 6, 7. Derartige Lagerbediengeräte 8' sind in der Praxis hinlänglich bekannt und werden auch autonome, fernsteuerbare Flurförderfahrzeuge, insbesondere fahrerlose Transportsysteme (FTS) genannt.

Das Lagerbediengerät 8' kann mittels der Lastaufnahmevorrichtung 50 beidseitig zur Führungsbahn 6, 7 vorgesehene Lagerplätze 2, 5 bedienen. Die Lastaufnahmevorrichtung 50 kann in einer Querrichtung (z-Richtung) ein oder mehrere Stückgüter 3 in die Lagerplätze 2, 5 einlagern bzw. aus den Lagerplätzen 2, 5 auslagern.

Die in der Fig. 13 gezeigte Übergabevorrichtung 45 schließt an das Hochleistungslager an. Insbesondere ist die Übergabevorrichtung 45 stirnseitig zu den Lagerreihen angeordnet.

Die Übergabevorrichtung 45 umfasst den Führungsbahnen 6 zugeordnet erste Bereitstellvorrichtungen 51 für das Zwischenpuffern eines oder mehrerer Stückgüter 3 (beispielweise einzulagernder Stückgüter 3) sowie den Führungsbahnen 6 zugeordnet zweite Bereitstellvorrichtungen 52 für das Zwischenpuffern eines oder mehrerer Stückgüter 3 (beispielweise auszulagernder Stückgüter 3).

Wie in der Fig. 13 zu erkennen, sind die ersten Bereitstellvorrichtungen 51 und zweiten Bereitstellvorrichtungen 52 ausschließlich im Hochleistungslager und je Führungsbahn 6 angeordnet. Im Nachschublager sind hingegen keine Bereitstellvorrichtungen 51, 52 vorgesehen. Die ersten Bereitstellvorrichtungen 51 bilden einen ersten Pufferbereich, einen so genannten Einlager-Pufferbereich und die zweiten Bereitstellvorrichtungen 52 bilden einen zweiten Pufferbereich, einen so genannten Auslager-Pufferbereich. Die Bereitstellvorrichtungen 51, 52 weisen nach dieser Ausführung jeweils eine über einen (nicht gezeigten) Förderantrieb antreibbare Fördervorrichtung, beispielweise Rollenförderer, auf. Die Bereitstellvorrichtungen 51, 52 bilden demnach motorisch angetriebene Bereitstellfördervorrichtungen.

Der Transport von Stückgütern 3 zwischen den Bereitstellvorrichtungen 51, 52 und der ersten Fördertechnik 9 erfolgt mittels Transfervorrichtungen 53, welche ortsfest aufgestellt sind und jeweils eine über einen (nicht gezeigten) Förderantrieb antreibbare Fördervorrichtung mit einer parallel zu den Lagerreihen verlaufenden Förderrichtung umfassen, wie durch die Pfeile angedeutet. Der Förderantrieb ist mit der Steuereinheit 16 verbunden. Die Fördervorrichtungen sind beispielweise ein Rollenförderer, Gurtförderer. Nach gezeigter Ausführung bilden die Transfervorrichtungen 53 die Bereitstellvorrichtungen 51, 52 aus. Möglich ist aber auch eine getrennte Anordnung der Bereitstellvorrichtungen 51, 52 und Transfervorrichtungen 53.

Möglich ist auch eine nicht gezeigte Ausführung, bei der die Übergabevorrichtung 45 im Hochleistungslager und je Führungsbahn 6 die Bereitstellvorrichtungen 51, 52 jeweils für das Zwischenpuffern zumindest eines Stückgutes 3 sowie eine die Bereitstellvorrichtungen 51, 52 anfahrbare Transfervorrichtung zum Transport von Stückgütern 3 zwischen den Bereitstellvorrichtungen 51, 52 und der ersten Fördertechnik 9 aufweist. Eine solche Übergabevorrichtung ist beispielweise aus der WO 2015/034884 A1 bekannt.

Wie aus der Fig. 13 ersichtlich, verlaufen im Hochleistungslager die Führungsbahnen 6 (bzw. Führungsschienen) vor den Lagerplätzen 2 entlang der Lagerreihen und der Übergabevorrichtung 45 (Bereitstellvorrichtungen 51, 52), sodass die Lagerbediengeräte 8' zum Einlagern von Stückgütern 3 und Auslagern von Stückgütern 3 entlang der Führungsbahnen 6 verfahren werden, wobei einerseits über die Lastaufnahmevorrichtung 50 einzulagernde Stückgüter 3 von den Bereitstellvorrichtungen 51 entnommen und auf die Lagerplätze 2 abgegeben werden, und andererseits über die Lastaufnahmevorrichtung 50 auszulagernde Stückgüter 3 von den Lagerplätzen 2 entnommen und auf die Bereitstellvorrichtungen 52 abgegeben werden.

Wie aus Fig. 13 ebenfalls ersichtlich, verlaufen im Nachschublager die Führungsbahnen 7 (bzw. Führungsschienen) vor den Lagerplätzen 5 entlang der Lagerreihen (Bereitstellvorrichtung 51, 52 sind im Nachschublager nicht vorgesehen) und können einzelne Lagerbediengeräte 8' zum Einlagern von Stückgütern 3, Auslagern von Stückgütern 3 und/oder Umlagern von Stückgütern 3 entlang dieser Führungsbahnen 7 bewegt werden, wie im Nachfolgenden noch beschrieben wird.

Bevorzugt umfassen die Führungsbahnen 6 im Hochleistungslager und die Führungsbahnen 7 im Nachschublager jeweils vor den Lagerplätzen 2, 5 in einer x-Richtung verlaufende und paarweise einander gegenüberliegende Führungsschienen. Die Führungsbahnen 6, 7 können alternativ auch nur eine und vor den Lagerplätzen 2, 5 in einer x-Richtung verlaufende Führungsschiene umfassen, entlang welcher ein (nicht gezeigtes) Lagerbediengerät bewegt werden kann.

Die in Fig. 13 schematisch dargestellte Umsetzvorrichtung 46 (Lagerbediengerät-Verteilwagen) zum Transport eines Lagerbediengerätes 8' zwischen den Führungsbahnen 6, 7 im Hochleistungslager und/oder im Nachschublager schließt stirnseitig an einem der einander gegenüber liegenden Stirnenden der Führungsbahnen 6, 7 an. Die Umsetzvorrichtung 46 umfasst nach dieser Ausführung einen horizontal verfahrbaren Verteilwagen mit einer Aufnahmeplattform 54, mittels welcher eine jede der Führungsbahnen 6 im Hochleistungslager und eine jede der Führungsbahnen 7 im Nachschublager anfahrbar ist, um zumindest ein Lagerbediengerät 8' zwischen dem Hochleistungslager und Nachschublager umzusetzen. In Fig. 13 ist die Aufnahmeplattform 54 in festen Linien eingetragen und vor einer der Führungsbahnen 6 verstellt, um ein Lagerbediengerät 8' auf die Aufnahmeplattform 54 aufzunehmen oder von der Aufnahmeplattform 54 abzugeben, und in strichlierten Linien eingetragen und vor einer der Führungsbahnen 7 verstellt, um ein Lagerbediengerät 8' auf die Aufnahmeplattform 54 aufzunehmen oder von der Aufnahmeplattform 54 abzugeben.

Alternativ ist aber auch eine (nicht gezeigte) Ausführung möglich, bei der nur eine oder einige der Führungsbahnen 6 im Hochleistungslager und eine jede der Führungsbahnen 7 im Nachschublager anfahrbar ist, um zumindest ein Lagerbediengerät 8' zwischen dem Hochleistungslager und Nachschublager umzusetzen.

Die Aufnahmeplattform 54 ist über eine (nicht dargestellte) Führungsvorrichtung, beispielweise Führungsrollen, an einem ortsfest aufgestellten Führungsrahmen 55 gelagert und über eine Antriebsvorrichtung 56 entlang dem Führungsrahmen 55 verstellbar. Die Antriebsvorrichtung 56 umfasst einen nicht näher dargestellten und am Führungsrahmen 55 gelagerten Zugmitteltrieb, welcher mit der Aufnahmeplattform 54 verbunden ist. Die Aufnahmeplattform 56 kann relativ zu den Führungsbahnen 6, 7 in einer z-Richtung zwischen Umkehrpunkten hin- und her bewegt werden.

Die Aufnahmeplattform 54 umfasst eine parallel zu den Führungsbahnen 6, 7 (in einer x-Richtung) erstreckende horizontale Führungsbahn, auf welchen ein Lagerbediengerät 8' aufgenommen werden kann. Die Führungsbahn umfasst in einer x-Richtung verlaufende und paarweise einander gegenüberliegende Führungsschienen 57.

Alternativ kann die Umsetzvorrichtung 46 auch durch ein oder mehrere Verteilwagen in Form von autonomen, fernsteuerbaren Flurförderfahrzeugen, insbesondere fahrerlose Transportsystemen (FTS) gebildet sein, welche jeweils eine Aufnahmeplattform 54 für ein Lagerbediengerät 8' umfasst. Die Umsetzvorrichtung 46 umfasst hierzu ein Bodenfahrwerk.

Wie in Fig. 13 in strichlierten Linien eingetragen, kann die Übergabevorrichtung 45' zusätzlich auch im Nachschublager einer oder einigen Führungsbahnen 7 zugeordnet Bereitstellvorrichtungen 51', 52' für das Zwischenpuffern eines oder mehrerer Stückgüter 3 (einzulagernder / auszulagernder Stückgüter 3) vorgesehen werden. Grundsätzlich sind im Nachschublager weniger Bereitstellvorrichtungen 51', 52' als Führungsbahnen 7 vorhanden. Bevorzugt sind weniger als drei erste Bereitstellvorrichtungen 51' und weniger als drei zweite Bereitstellvorrichtungen 52' vorhanden.

Ferner kann eine (nicht dargestellte) zweite Fördertechnik zum Antransport von Stückgütern und Versorgung des Nachschublagers mit Stückgütern 3 vorgesehen werden, welche an die Umsetzvorrichtung 45 angeschlossen ist.

Im Nachfolgenden wird das erfindungsgemäße Verfahren zum Betreiben eines Lagersystemes gemäß einer der oben beschriebenen Ausführungen beschrieben.

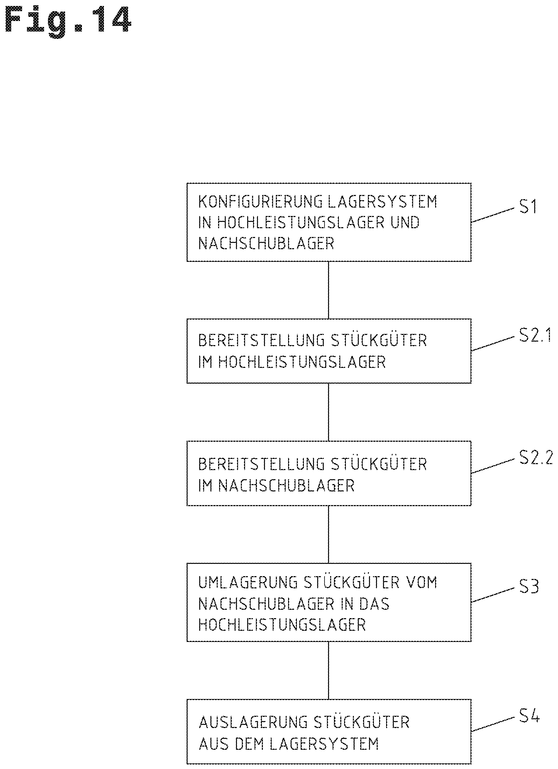

Das Verfahren gemäß Fig. 14 umfasst die Schritte:
Konfigurierung des ersten Lagerbereiches 1 als Hochleistungslager und des zweiten Lagerbereiches 4 als Nachschublager (Schritt S1),
Bereitstellung von Stückgütern 3 auf den Lagerplätzen 2 im Hochleistungslager (Schritt S2.1),
Bereitstellung von Stückgütern 3 auf den Lagerplätzen 5 im Nachschublager (Schritt S2.2),
Umlagerung eines Stückgutes 3 von einem Lagerplatz 5 im Nachschublager in das Hochleistungslager sofern vom Rechnersystem 16 (Steuereinheit) ein Nachschubauftrag erzeugt wird, derart dass vorerst zumindest ein Lagerbediengerät 8; 8' zu einem der Lagerplätze 5 im Nachschublager bewegt und auf dieser das Stückgut 3 übernommen wird, worauf das Lagerbediengerät 8; 8' mit dem Stückgut 3 entlang der Führungsbahn 7 zur Umsetzvorrichtung 12; 46 und mittels der Umsetzvorrichtung 12; 46 vom Nachschublager zu einer der Führungsbahnen 6 im Hochleistungslager transportiert und danach im Hochleistungslager entlang der Führungsbahn 6 entweder zu einem der Lagerplätze 2 bewegt und das Stückgut 3 von dem Lagerbediengerät 8; 8' auf einen Lagerplatz 2 oder unmittelbar zu einer Übergabevorrichtung 11; 45 auf eine von mehreren Bereitstellvorrichtungen 21; 52 transportiert wird (Schritt S3), und
Auslagerung von Stückgütern aus dem Lagersystem, derart dass sowohl die Stückgüter 3 aus dem Hochleistungslager als auch die zuvor aus dem Nachschublager umgelagerten Stückgüter 3 im Hochleistungslager mittels einem oder mehreren Lagerbediengeräten 8; 8' zur Übergabevorrichtung 11; 45 auf eine oder mehrere Bereitstellvorrichtungen 21; 52 und danach mittels einer Transfervorrichtung 25; 53 der Übergabevorrichtung 11; 45 von den Bereitstellvorrichtungen 21; 52 zur ersten Fördertechnik 9 transportiert werden (Schritt S4).

Das Konfigurieren des ersten Lagerbereiches 1 als Hochleistungslager (oder Hochleistungslager (A) und Nachschublager (B')) und des zweiten Lagerbereiches 4 als Nachschublager (Schritt S1) erfolgt durch das Rechnersystem.

Dabei kann nach einer ersten Verfahrensmaßnahme das Konfigurieren vor der Inbetriebnahme des Lagersystemes erfolgen, indem beispielweise die Anzahl der Führungsbahnen 6 im ersten Lagerbereich 1 (Hochleistungslager (A) oder Hochleistungslager (A) und Nachschublager (B')) und Führungsbahnen 7 im zweiten Lagerbereich 4 (Nachschublager B), die Anzahl der Lagerbediengeräte 8; 8' und/oder die Übergabevorrichtung 11; 45 (insbesondere die Anzahl der Bereitstellvorrichtungen 20, 21; 51, 52) vorgegeben werden. Dabei können auch die Lagerbediengeräte 8; 8' ausschließlich auf die Führungsbahnen 6 im Hochleistungslager oder auf die Führungsbahnen 6 im Hochleistungslager und Führungsbahnen 7 im Nachschublager zugeteilt werden.

Es ist andererseits aber auch nach einer zweiten Verfahrensmaßnahme möglich, während des Betriebes (daher nach der Inbetriebnahme) des Lagersystemes durch das Rechnersystem die "logische" Trennung zwischen dem ersten Lagerbereich 1 und zweiten Lagerbereich 4 (bzw. Hochleistungslager und Nachschublager) dynamisch zu verändern. So kann beispielweise nach einem Sortimentswechsel, wie Winter- und Sommerkollektion in der Textilindustrie, oder zu bestimmten Jahreszeiten eine höhere Leistungsanforderung an das Hochleistungslager bestehen, als beim gegenwärtigen Sortiment. Es erweist sich dann von Vorteil, wenn Lagerplätze vom Nachschublager aus der vorherigen Lagerkonfiguration als Lagerplätze im Hochleistungslager in der angepassten Lagerkonfiguration verwendet werden. Bei dieser Verfahrensmaßnahme wird vom Rechnersystem in einer ABC-Analyse die Zugriffshäufigkeit auf die Stückgüter 3 (Artikel) ausgewertet. Zugriffshäufigkeit bedeutet in diesem Zusammenhang die Anzahl benötigter Artikel pro Zeiteinheit. Die Artikel werden in Abhängigkeit von deren Zugriffshäufigkeiten entweder im Hochleistungslager (A) oder im Nachschublager (B, B') gelagert. Während Stückgüter 3 mit hoher Zugriffshäufigkeit, so genannte A-Artikel, und Stückgüter mit mittlerer Zugriffshäufigkeit, so genannte B-Artikel, vorwiegend im Hochleistungslager gelagert werden, werden Stückgüter mit niedriger Zugriffshäufigkeit, so genannte C-Artikel, vorwiegend im Nachschublager gelagert. Eine Zuteilung der Stückgüter 3 (Artikelsortiment) auf das Hochleistungslager und Nachschublager abhängig nach deren Zugriffshäufigkeiten kann durch eine so genannte "Lorenz-Kurve" ausgedrückt werden. Im Bereich des E-Commerce sind steile ABC-Kurven üblich. Es ergeben sich kurzfristig starke Schwankungen in den Zugriffshäufigkeiten. Wird heute ein Artikel besonders häufig benötigt, kann dieser am nächsten Tag wenig benötigt werden. Dafür wird ein anderer Artikel am nächsten Tag häufig benötigt. Es kann auch vorkommen, dass an einem einzigen Tag 20% nahezu der gesamte Jahresbedarfs zu einem Artikel und die restlichen 80% verteilt über den Rest des Jahres benötigt werden, beispielweise Weihnachten, Ostern, Schulbeginn, Sonderpreisaktionen. Mit anderen Worten ist es zu bestimmten Betriebszeiten erforderlich, dass der Hochleistungsbereich größer konfiguriert wird als zu anderen Betriebszeiten. Dementsprechend resultiert die Konfiguration des Nachschubbereiches.

Mit anderen Worten liegt dieser Konfiguration (eines ersten Lagerbereiches 1 als Hochleistungslager (A) oder Hochleistungslager (A) und Nachschublager (B')) und des zweiten Lagerbereiches 4 als Nachschublager) eine "ABC-Analyse" zugrunde.

Nach einer dritten Verfahrensmaßnahme liegt der Konfiguration (eines ersten Lagerbereiches 1 als Hochleistungslager (A) oder Hochleistungslager (A) und Nachschublager (B') und des zweiten Lagerbereiches 4 als Nachschublager) eine so genannte "Auftragsvorausschau" zugrunde. Das Rechnersystem ermittelt in der Auftragsvorausschau über eine Anzahl von Aufträgen (oder innerhalb eines Zeitfensters von mehreren Stunden) die Auftragszeilen. Ein Auftrag kann auch als Kommissionierauftrags verstanden werden. Eine Kundenbestellung umfasst zumindest einen Kommissionierauftrag. Die Aufträge liegen als Datensätze vor. Die Aufträge werden vom Rechnersystem elektronisch erfasst. Jeder Auftrag umfasst eine oder mehrere Auftragszeilen. Spezifiziert ein Auftrag mehrere Auftragszeilen, so werden unterschiedliche Artikel benötigt. Jede Auftragszeile weist zumindest Angaben über eine Stückzahl eines bestellten Artikels und über einen Artikeltyp auf. Aus der Auftragsvorausschau kann bestimmt werden, welche Artikel (Artikeltyp) in welcher Anzahl (Stückzahl) benötigt werden. Mit anderen Worten kann der zur Abwicklung der Aufträge gemäß Auftragsvorausschau benötigte Artikelbestand im Hochleistungslager ermittelt werden. Andere als die in der Auftragsvorausschau benötigten Artikel werden stattdessen im Nachschublager gelagert.

Es können die erste Verfahrensmaßnahme und/oder zweite Verfahrensmaßnahme und/oder dritte Verfahrensmaßnahme kombiniert werden.

Die Bereitstellung (Beschickung) von Stückgütern 3 auf den Lagerplätzen 2 im Hochleistungslager (Schritt S2.1) erfolgt auf konventionelle Weise, indem das jeweilige Stückgut 3 auf der ersten Fördertechnik 9 zum Hochleistungslager antransportiert und mittels der Transfervorrichtung 25a; 25b; 53 auf eine der durch das Rechnersystem definierte Bereitstellvorrichtung 20; 51 im Hochleistungslager übergeben wird. Danach holt das Lagerbediengerät 8; 8' das Stückgut 3 von der Bereitstellvorrichtung 20; 51 ab und lagert es auf einen freien Lagerplatz 2 ein. Gemäß einer Ausführung beispielweise nach den Fig. 1 bis 3; 13 erfolgt die Einlagerung der Stückgüter 3 ausschließlich in das Hochleistungslager. Gemäß einer Ausführung beispielweise nach den Fig. 4, 5; 13 kann eine Einlagerung der Stückgüter 3 in das Hochleistungslager und in das Nachschublager erfolgen.

Die Bereitstellung (Beschickung) von Stückgütern 3 auf den Lagerplätzen 5 im Nachschublager (Schritt S2.2) kann nach einer oder einer Kombination nachfolgender Ausführungen erfolgen.

Nach einer ersten Ausführung (Umorganisation) wird das Stückgut 3 über das Hochleistungslager zum Nachschublager gefördert, indem entweder das Stückgut 3 mittels dem zumindest einen automatisierten Lagerbediengerät 8; 8' von einem Lagerplatz 2 aus dem Hochleistungslager oder einer von mehreren Bereitstellvorrichtungen 20; 51 abgeholt und von dem Lagerbediengerät 8; 8' zur Umsetzvorrichtung 12; 46 und anschließend mittels der Umsetzvorrichtung 12; 46 zu zumindest einer der Führungsbahnen 7 im Nachschublager und zu einem Lagerplatz 5 im Nachschublager bewegt und schließlich auf einen Lagerplatz 5 umgelagert wird.

Nach einer zweiten Ausführung (Nachschubprinzip) wird das Stückgut 3 mittels der zweiten Fördertechnik 43 zur Umsetzvorrichtung 12; 46 und danach auf ein Lagerbediengerät 8; 8' transportiert, wobei sich das Lagerbediengerät 8; 8' auf der Umsetzvorrichtung 12; 46 befindet. Anschließend wird das Lagerbediengerät 8; 8' mit dem Stückgut 3 zu zumindest einer der Führungsbahnen 7 im Nachschublager und zu einem Lagerplatz 5 im Nachschublager bewegt. Schließlich wird das Stückgut 3 vom Lagerbediengerät 8; 8' auf einen Lagerplatz 5 eingelagert.

Nach einer dritten Ausführung (Nachschubprinzip) wird das Stückgut 3 mittels der Bereitstellvorrichtung 20'; 51' (Fig. 5, 6; Fig. 13) in das Nachschublager gefördert. Das Stückgut 3 wird mittels einem Lagerbediengerät 8; 8' von einem der Bereitstellvorrichtungen 20'; 51' abgeholt und anschließend auf einen Lagerplatz 5 eingelagert.

Es erweist sich auch von Vorteil, wenn die Stückgüter 3 auf den Lagerplätzen 5 im Nachschublager in Abhängigkeit von einer Zugriffshäufigkeit bereitgestellt werden, wobei die Stückgüter 3 mit hoher Zugriffshäufigkeit im Nahbereich des Hochleistungslagers und/oder im Nahbereich der Umsetzvorrichtung 12; 46 lagern.

Die Bereitstellung (Beschickung) von Stückgütern 3 im Nachschublager durch eine "Umorganisation" basiert auf einer Analyse der im Rechnersystem erfassten Aufträge. Hierzu wird vorerst eine Analysemenge definiert, insbesondere ein Analysezeitraum, der in der Regel ein Tag sein kann. Jeder Auftrag (Kundenbestellung) der Analysemenge weist mindestens eine Auftragszeile auf. Eine Auftragszeile gibt eine jeweilige Menge (Stückzahl) eines Artikels an, den ein Kunde bestellt hat. Außerdem kann vom Rechnersystem ein aktueller Lagerbestand zu jedem Stückgut 3 (Artikel) im Hochleistungslager ermittelt werden. Sind im Lagerbestand im Hochleistungslager Stückgüter 3 enthalten, welche innerhalb der Analysemenge nicht benötigt werden, können diese Stückgüter 3 mittels dem zumindest einen automatisierten Lagerbediengerät 8; 8' und der Umsetzvorrichtung 12; 46 vom Hochleistungslager in das Nachschublager transportiert und schließlich auf einen Lagerplatz 5 in das Nachschublager umgelagert werden.

Die Bereitstellung (Beschickung) von Stückgütern 3 im Nachschublager nach dem "Nachschubprinzip" basiert auf einem Lagerbestand im Nachschublager.

Es wird am Rechnersystem ein Mindestbestand zu jedem Stückgut 3 (Artikel) erfasst. Außerdem kann vom Rechnersystem ein aktueller Lagerbestand zu jedem Stückgut 3 unterschiedlicher Stückgüter 3 im Nachschublager ermittelt werden. Der Lagerbestand zu jedem Stückgut 3 im Nachschublager wird nach jeder Einlagerung eines Stückgutes 3 in das Nachschublager und jeder Umlagerung eines Stückgutes 3 zwischen dem Hochleistungslager und Nachschublager (und sofern eine Bereitstellvorrichtung 21'; 51' vorgesehen ist, jeder Auslagerung eines Stückgutes 3 aus dem Nachschublager) aktualisiert. Wird der Mindestbestand von einem Stückgut 3 unterschritten wird oder ist kein Bestand zu einem Stückgut 3 vorhanden, werden die entsprechenden Stückgüter 3 von der zweiten Fördertechnik 43 zur Umsetzvorrichtung 12; 46 oder die optionale(n) Bereitstellvorrichtung(en) 21; 51 und danach auf ein Lagerbediengerät 8; 8' zugeführt und schließlich auf einen Lagerplatz 5 eingelagert.

Die Umlagerung eines Stückgutes 3 von einem Lagerplatz 5 im Nachschublager auf einen Lagerplatz 2 im Hochleistungslager (Schritt S3) basiert auf Nachschubaufträge, welche vom Rechnersystem (Steuereinheit 16) erzeugt werden.

Ein Nachschubauftrag wird erzeugt und die Umlagerung veranlasst, sofern im Hochleistungslager ein Mindestbestand zu einem Stückgut 3 unterschritten wird, oder sofern eine Bedarfsmenge zu einem Stückgut 3, welches in den im Rechnersystem (Steuereinheit 16) erfassten Aufträgen innerhalb einer Analysemenge enthalten ist, den aktuellen Bestand zu diesem Stückgut 3 im Hochleistungslager überschreitet. Es wird hierzu am Rechnersystem ein Mindestbestand zu jedem Stückgut 3 (Artikel) erfasst. Außerdem kann vom Rechnersystem ein aktueller Lagerbestand zu jedem Stückgut 3 unterschiedlicher Stückgüter 3 im Hochleistungslager und Nachschublager ermittelt werden. Der Lagerbestand zu jedem Stückgut 3 im Hochleistungslager und Nachschublager wird nach jeder Einlagerung eines Stückgutes 3 in das Hochleistungslager und/oder Nachschublager und jeder Auslagerung eines Stückgutes 3 aus dem Hochleistungslager und/oder Nachschublager und jeder Umlagerung eines Stückgutes 3 zwischen dem Hochleistungslager und Nachschublager aktualisiert.

Das Auslagern von Stückgütern 3 aus dem Lagersystem basiert auf Aufträgen, insbesondere Kommissionieraufträgen zu Kundenbestellungen (Schritt S4). Die Aufträge werden am Rechnersystem elektronisch erfasst. Das Rechnersystem ermittelt die unterschiedlichen Stückgüter 3 und die Stückgutmenge (Bedarf) je Stückgut 3 zu einem Auftrag.

Nach einer ersten Ausführung (Auslagerung ausschließlich aus dem Hochleistungslager und im Hochleistungslager ausreichend Lagerbestand zu benötigten Stückgütern) wird ferner vom Rechnersystem der Lagerbestand im Hochleistungslager zu jenen Stückgütern 3 ermittelt, welche für den genannten Auftrag benötigt und im Hochleistungslager gelagert werden. Sodann werden die Stückgüter 3 zu einem Auftrag aus dem Lagersystem derart ausgelagert, dass die Stückgüter 3 ausschließlich aus dem Hochleistungslager und mittels einem oder mehreren Lagerbediengeräten 8; 8' ausgelagert und zur Übergabevorrichtung 11; 45 auf eine oder mehrere Bereitstellvorrichtungen 21; 52 einer Vielzahl von Bereitstellvorrichtungen 21, 52 und danach mittels der Transfervorrichtung 25; 53 von der einen oder den mehreren Bereitstellvorrichtungen 21; 52 zur ersten Fördertechnik 9; 10 transportiert werden.

Nach einer zweiten Ausführung (Auslagerung ausschließlich aus dem Hochleistungslager und im Hochleistungslager unzureichender Lagerbestand zu benötigten Stückgütern) wird ferner vom Rechnersystem der Lagerbestand im Hochleistungslager und Nachschublager zu jenen Stückgütern 3 ermittelt, welche für den genannten Auftrag benötigt werden. Wird ein Sollbestand für ein Stückgut 3 im Hochleistungslager, welches zu genanntem Auftrag benötigt wird, unterschritten, werden ein oder mehrerer Stückgüter 3 vom Nachschublager in das Hochleistungslager umgelagert, damit zumindest der Sollbestand an diesem Stückgut 3 zur Abwicklung des genannten Auftrages erreicht wird. Dabei kann dieses oder diese Stückgüter 3 entweder auf einen oder mehrere Lagerplätze 2 im Hochleistungslager oder auf einen oder mehrere Bereitstellvorrichtungen 21; 52 im Hochleistungslager umgelagert werden.

Nach einer dritten Ausführung (Auslagerung aus dem Hochleistungslager und Nachschublager) werden die Stückgüter derart ausgelagert, dass Stückgüter 3 aus dem Hochleistungslager mittels einem oder mehreren ersten Lagerbediengeräten 8; 8' ausgelagert und zur Übergabevorrichtung 11; 45 auf eine oder mehrere Bereitstellvorrichtungen 21; 52 einer Vielzahl von Bereitstellvorrichtungen 21; 52 und danach mittels einer Transfervorrichtung 25; 53 von der einen oder den mehreren Bereitstellvorrichtungen 21; 52 zur ersten Fördertechnik 9 transportiert werden, und Stückgüter 3 aus dem Nachschublager mittels einem oder mehreren zweiten Lagerbediengeräten 8; 8' ausgelagert und zur Übergabevorrichtung 11'; 45' auf eine oder mehrere Bereitstellvorrichtungen 21'; 52' und danach mittels einer Transfervorrichtung 52; 53 von der einen oder den mehreren Bereitstellvorrichtungen 21'; 52' zur ersten Fördertechnik 9 transportiert. Die Ausführung bietet den Vorteil, dass Aufträge parallel bearbeitet und Stückgüter sowohl aus dem Hochleistungslager als auch Nachschublager ausgelagert werden können. So ist es möglich, dass Stückgüter für einen Eilauftrag aus dem Nachschublager und Stückgüter für normale Aufträge aus dem Hochleistungslager ausgelagert werden. Somit wird der Betrieb im Hochleistungslager nicht blockiert, selbst wenn Eilaufträge abgearbeitet werden. Ein Eilauftrag ist ein Auftrag mit hoher (Bearbeitungs-) Priorität, der üblicherweise vorrangig vor normalen Aufträgen behandelt wird.

Nach einer vierten Ausführung (Auslagerung aus dem Hochleistungslager und Nachschublager) wird ferner vom Rechnersystem der Lagerbestand im Hochleistungslager und Nachschublager zu jenen Stückgütern 3 ermittelt, welche für den genannten Auftrag benötigt werden. Wird ein Sollbestand für ein Stückgut 3 im Hochleistungslager, welches zu genanntem Auftrag benötigt wird, unterschritten, werden ein oder mehrerer Stückgüter 3 aus dem Hochleistungslager mittels einem oder mehreren ersten Lagerbediengeräten 8; 8' ausgelagert und zur Übergabevorrichtung 11; 45 auf eine oder mehrere Bereitstellvorrichtungen 21; 52 einer Vielzahl von Bereitstellvorrichtungen 21; 52 und danach mittels einer Transfervorrichtung 25; 53 von der einen oder den mehreren Bereitstellvorrichtungen 21; 52 zur ersten Fördertechnik 9 transportiert werden, und die restlichen Stückgüter 3 aus dem Nachschublager mittels einem oder mehreren zweiten Lagerbediengeräten 8; 8' ausgelagert und zur Übergabevorrichtung 11'; 45' auf eine oder mehrere Bereitstellvorrichtungen 21'; 52' und danach mittels einer Transfervorrichtung 52; 53 von der einen oder den mehreren Bereitstellvorrichtungen 21'; 52' zur ersten Fördertechnik 9 transportiert.

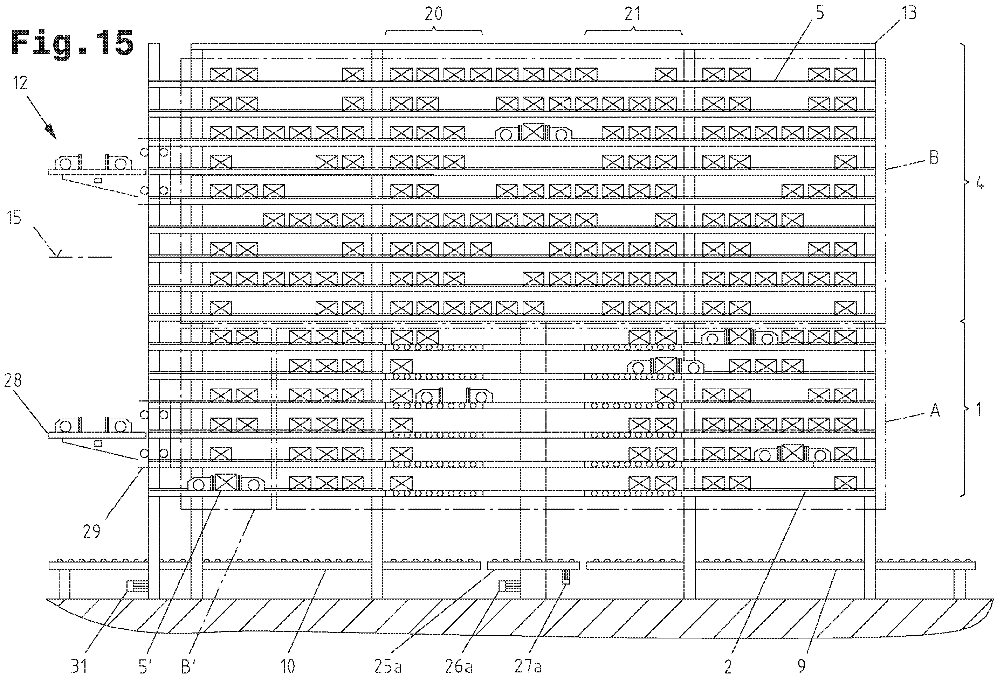

Während nach den oben beschriebenen Ausführungen der erste Lagerbereich 1 (ausschließlich) ein Hochleistungslager und der zweite Lagerbereich 4 ein Nachschublager ist, ist es gemäß einer Ausführung nach Fig. 15 möglich, dass der erste Lagerbereich 1 ein Hochleistungslager (A) und ein Nachschublager (B') umfasst und der zweite Lagerbereich 4 ein Nachschublager (B) ist.

Mit anderen Worten ist eine andere Konfiguration zwischen dem ersten Lagerbereich 1 und zweiten Lagerbereich 4 gewählt. Wie oben im Detail beschrieben, schließt das Hochleistungslager (A) an die Übergabevorrichtung 11 an, welche die ersten Bereitstellvorrichtungen 20 und zweiten Bereitstellvorrichtungen 21 ausschließlich im Hochleistungslager (A) umfasst, wobei die ersten Bereitstellvorrichtungen 20 und zweiten Bereitstellvorrichtungen 21 je Fahrebene 15 angeordnet sind. Ebenso ist im Hochleistungslager (A) je Fahrebene 15 ein Lagerbediengerät 8 vorgesehen. Im Nachschublager (B, B') sind hingegen keine Bereitstellvorrichtungen 20, 21 vorgesehen. Gleiche Überlegungen gelten für die dritte bis sechste Ausführung des Lagersystems gemäß den Fig. 7 bis 13.

Das Konfigurieren des ersten Lagerbereiches 1 als Hochleistungslager (A) und Nachschublager (B') und des zweiten Lagerbereiches 4 als Nachschublager (B) erfolgt durch das Rechnersystem, wie beispielweise in Fig. 14 beschrieben. Dieser Konfiguration liegt eine so genannte "Auftragsvorausschau" und/oder eine so genannte "ABC-Analyse" zugrunde. Dabei kann während des Betriebes des Lagersystemes durch ein Rechnersystem bzw. die Steuerung die "logische" Trennung zwischen dem ersten Lagerbereich 1 und zweiten Lagerbereich 4 (bzw. Hochleistungslager (A) und Nachschublager (B, B') dynamisch verändert werden.

Beispielsweise sind im Hochleistungslager (A) die Stückgüter 3 enthalten, welche gemäß der "Auftragsvorausschau" benötigt werden. Andere Stückgüter 3 werden hingegen im Nachschublager (B, B') gelagert. Damit sind Zugriffszeiten auf die Stückgüter 3, auch wenn es sich um C-Artikel handelt, besonders kurz. Es kann die vorhandene Anlagenleistung, dh. der Lagerbediengeräte 8 und Übergabevorrichtung 11 optimal genutzt werden.

Zu erkennen ist auch, dass eines der Lagerbediengeräte 8 (auf der ersten Führungsbahn 6 von unten) ein Stückgut 3 vom Nachschublager (B, B') in das Hochleistungslager (A) transportiert. Umgekehrt wird ein Stückgut 3 vom Hochleistungslager (A) in das Nachschublager (B, B') transportiert. Grundsätzlich ist aber dieses Lagerbediengerät 8 dem Hochleistungslager (A) zugeordnet. Eines der Lagerbediengeräte 8 wird von einer anderen Führungsbahn 7 auf die Aufnahmeplattform 28 der Umsetzvorrichtung 12 übernommen, um anschließend auf eine andere der Führungsbahnen 6 umgesetzt zu werden. Das Lagerbediengerät 8 wird beispielweise auf die dritte Führungsbahn 6 von unten abgegeben, wo es nun entweder nur im Arbeitsbereich des Nachschublagers (B') oder nur im Arbeitsbereich des Hochleistungslagers (A) eingesetzt wird, oder aber zwischen den Arbeitsbereichen im Nachschublager (B') und Hochleistungslager (A) verfahren wird. Auch dieses Lagerbediengerät 8 ist dem Hochleistungslager (A) zugeordnet. Konkret sind dem Hochleistungslager (A) auf den sechs Fahrebenen 15 sechs Lagerbediengeräte 8 (im Wesentlichen dauerhaft) zugeordnet. Liegt ein Nachschubauftrag vor, kann allerdings kurzzeitig ein oder mehrere Lagerbediengeräte 8 das Hochleistungslager (A) in das Nachschublager (B, B') bewegt werden. Im Nachschublager (B, B') sind die Fahrebenen 15 nur zeitweise mit Lagerbediengeräten 8 bestückt.

Demnach ist es nach dieser Ausführung möglich, dass der erste Lagerbereich 1 in einem Lagerabschnitt ein Hochleistungslager (A) und in einem Lagerabschnitt ein Nachschublager (B') ist bzw. umfasst. Der zweite Lagerbereich 4 ist ein Nachschublager (B). Die Lagerbediengeräte 8 können entlang der betreffenden Führungsbahnen 6 zwischen den Lagerabschnitten und/oder innerhalb der Arbeitsbereiche im Nachschublager und Hochleistungslager verfahren werden, um die Stückgüter 3 zwischen den Lagerplätzen 5' im Nachschublager (B') und den Lagerplätzen 2 im Hochleistungslager (A) zu transportieren. Die Konfigurierung des Hochleistungslager (A) und des Nachschublager (B, B') beruht auf der oben beschriebenen Methodik.

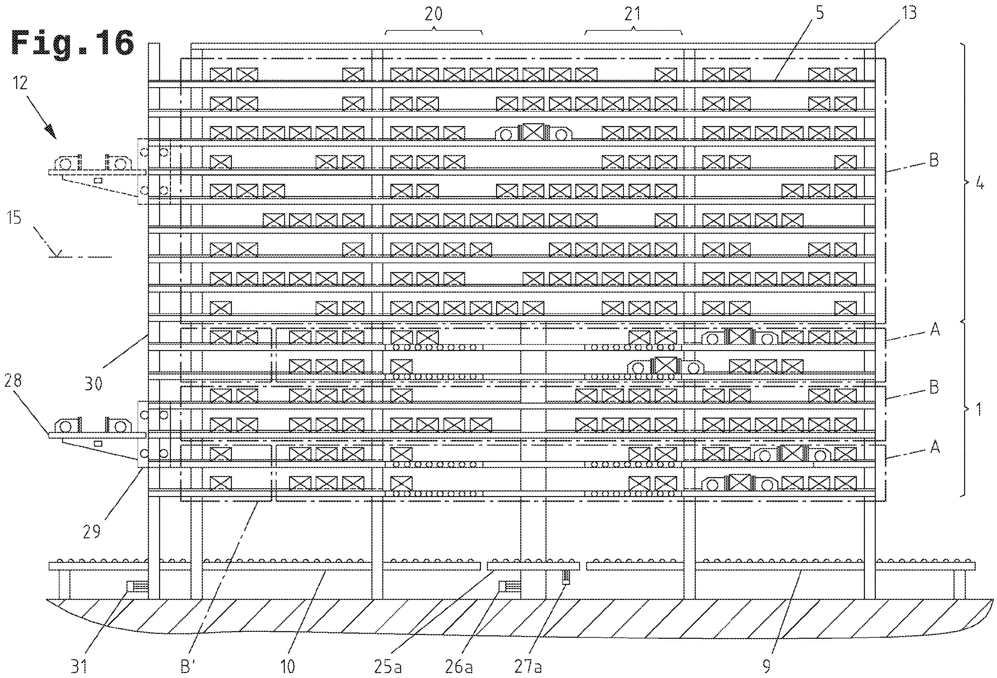

Fig. 16 zeigt eine Ausführung, welche im ersten Lagerbereich 1 ein erstes Hochleistungslager (A), ein zweites Hochleistungslager (A) und ein erstes Nachschublager (B) und im zweiten Lagerbereich 4 ein zweites Nachschublager (B) aufweist. Optional kann im ersten Lagerbereich 1 an das erste Hochleistungslager (A) ein erstes Nachschublager (B') und an das zweite Hochleistungslager (A) ein zweites Nachschublager (B') anschließen.

Wie ersichtlich, sind das erste Hochleistungslager (A) und zweite Hochleistungslager (A) an die Übergabevorrichtung 11 angeschlossen, wobei die ersten Bereitstellvorrichtungen 20 und zweiten Bereitstellvorrichtungen 21 der Übergabevorrichtung 11 je Fahrebene 15 angeordnet sind. In den Nachschublager (B, B') sind hingegen keine Bereitstellvorrichtungen 20, 21 vorgesehen. Gleiche Überlegungen gelten für die dritte bis sechste Ausführung des Lagersystems gemäß den Fig. 7 bis 13.

Das Konfigurieren des ersten Lagerbereiches 1 als Hochleistungslager (A) und Nachschublager (B, B') und des zweiten Lagerbereiches 4 als Nachschublager (B) erfolgt durch das Rechnersystem, wie beispielweise in Fig. 14 beschrieben.

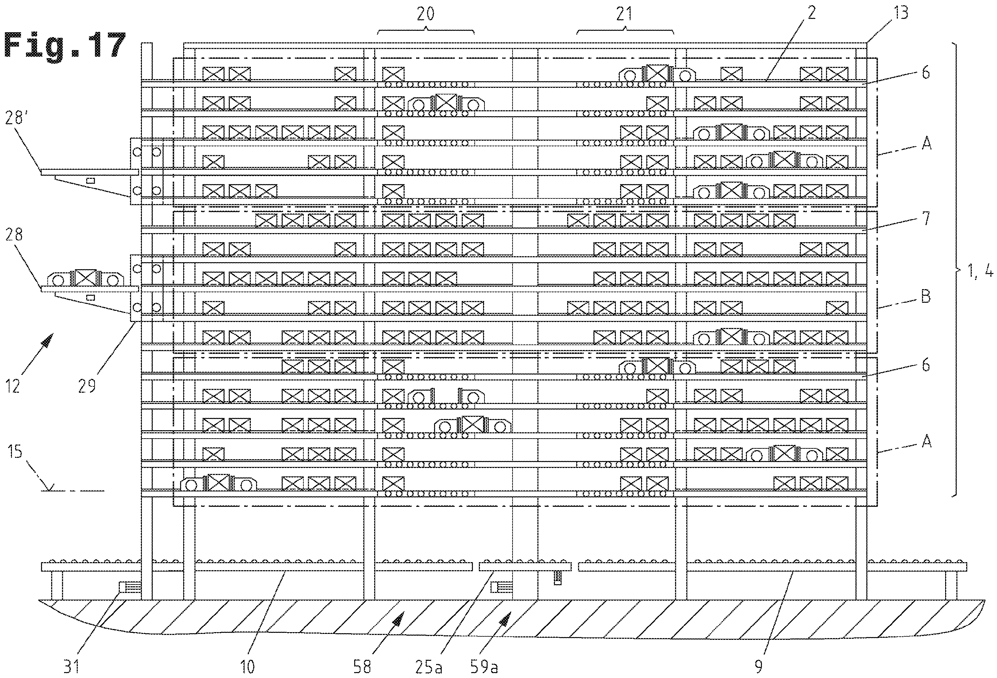

In Fig. 17 ist eine modifizierte Ausführung des Lagersystemes beispielweise nach Fig. 1 bis 3 gezeigt. Gleiche Überlegungen gelten für die dritte bis sechste Ausführung des Lagersystems gemäß den Fig. 7 bis 13. Das Lagersystem umfasst eine Übergabevorrichtung 58 und im ersten Lagerbereich 1 mehrere Hochleistungslager (A) und im zweiten Lagerbereich 4 ein Nachschublager (B). Optional können auch mehrere Nachschublager (B) vorgesehen werden. Insbesondere ist die Übergabevorrichtung 58 in den Lagerregalen 13 integriert angeordnet und umfasst eine erste Puffervorrichtung 18a, eine erste Stückgut-Hebevorrichtung 59a, eine zweite Puffervorrichtung 18b und eine zweite Stückgut-Hebevorrichtung 59b.

Die Übergabevorrichtung 58 umfasst in den Hochleistungslagern und dort den Führungsbahnen 6 zugeordnet je eine Bereitstellvorrichtung 20, 21 für das Zwischenpuffern zumindest eines Stückgutes 3 und eine Transfervorrichtung 25a, 25b zum Transport von Stückgütern 3 zwischen den Bereitstellvorrichtungen 20, 21 und der ersten Fördertechnik 9, 10. Hingegen sind in dem einen Nachschublager oder in den Nachschublagern keine Bereitstellvorrichtungen für das Zwischenpuffern zumindest eines Stückgutes 3 vorgesehen.

Sind die Bereitstellvorrichtungen 20, 21 motorisch angetriebene Fördervorrichtungen (aktive Bereitstellvorrichtungen) kann insgesamt die Anzahl der Antriebe reduziert werden, da die "aktiven" Bereitstellvorrichtungen 20, 21 nur dort angeordnet sind, wo sie benötigt werden. Anderenfalls ist es auch möglich, dass die Bereitstellvorrichtungen mit stationären Auflagetischen (ohne motorisch angetriebene Fördervorrichtungen) für das Zwischenpuffern eines oder mehrerer Stückgüter 3 ausgebildet sind (passive Bereitstellvorrichtungen). Eine solche Ausführung ist in der WO 2013/090970 A2 im Detail beschrieben.

Nach einer nicht gezeigten Ausführung ist es auch möglich, dass bei Installation des Lagersystemes die "passiven" Bereitstellvorrichtungen auch im Nachschublager oder in den Nachschublagern angeordnet werden, jedoch werden zwischen diesen Bereitstellvorrichtungen und der Transfervorrichtung 25 keine Stückgüter manipuliert. Dies hat den Vorteil, dass bei später geplanten höheren Leistungsanforderungen an das Lagersystem das Konfigurieren des ersten Lagerbereiches 1 und des zweiten Lagerbereiches 4 nachträglich auf das gesamte Lagersystem bezogen werden kann.

Die heb- und senkbare Transfervorrichtung 25a, 25b ist zwischen der untersten Fahrebene 15 und obersten Fahrebene 15 bewegbar, jedoch sind die Bereitstellvorrichtung 20, 21 nach gezeigter Ausführung nur einigen der Führungsbahnen 6 zugeordnet. Die Stückgut-Hebevorrichtungen 59a, 59b, welche jeweils die heb- und senkbare Transfervorrichtung 25a, 25b aufweisen, entsprechen grundsätzlich aber den oben beschriebenen Stückgut-Hebevorrichtungen 29a, 29b.

Wie in der Fig. ersichtlich, verlaufen in den Hochleistungslagern die Führungsbahnen 6 entlang der Lagerplätze 2 und der Übergabevorrichtung 58 (Puffervorrichtungen 18a, 18b und Stückgut-Hebevorrichtung 59a, 59b), sodass die Lagerbediengeräte 8 zum Einlagern von Stückgütern 3 und Auslagern von Stückgütern 3 entlang der Führungsbahnen 6 verfahren werden. Im Nachschublager verlaufen die Führungsbahnen 7 entlang der Lagerplätze 5 (Puffervorrichtungen sind im Nachschublager nicht vorgesehen) und können einzelne Lagerbediengeräte 8 zum Einlagern von Stückgütern 3, Auslagern von Stückgütern 3 und/oder Umlagern von Stückgütern 3 entlang dieser Führungsbahnen 7 bewegt werden, wie oben beschrieben.

Auch sei darauf hingewiesen, dass die Übergabevorrichtung 58, auch bloß eine einzige Puffervorrichtung 18a und eine einzige Stückgut-Hebevorrichtung 59a aufweisen kann, wie dies jedoch nicht weiter dargestellt ist.

Wie beispielhaft in Fig. 17 eingetragen, kann die Umsetzvorrichtung 12 (Lagerbediengerät-Hebevorrichtung) eine erste Aufnahmeplattform 28 und eine zweite Aufnahmeplattform 28' umfassen. Gleiche Überlegungen gelten für die zweite bis sechste Ausführung des Lagersystems gemäß den Fig. 5 bis 13. Die erste Aufnahmeplattform 28 und zweite Aufnahmeplattform 28' sind über die Steuereinheit 16 unabhängig voneinander ansteuerbar und können jeweils ein Lagerbediengerät 8 zwischen den Führungsbahnen 6, 7 im ersten Lagerbereich 1 und zweiten Lagerbereich 4 umsetzen.

Das Umsetzen eines ersten Lagerbediengerätes 8 und zweiten Lagerbediengerätes 8 kann auf nachfolgende Weise erfolgen:
i) Positionieren der (leeren) ersten Aufnahmeplattform 28 vor einer der Führungsbahnen 7 im zweiten Lagerbereich 4,
ii) Übernahme des ersten Lagerbediengerätes 8 aus betreffender Fahrebene 15 im zweiten Lagerbereich 4 auf die erste Aufnahmeplattform 28,
iii) Verstellung der (bestückten) ersten Aufnahmeplattform 28 und (leeren) zweiten Aufnahmeplattform 28' relativ zu den Führungsbahnen 6, 7,
iv) Positionieren der (leeren) zweiten Aufnahmeplattform 28' vor einer der Führungsbahnen 6 im ersten Lagerbereich 1 und Vorpositionierung der (bestückten) ersten Aufnahmeplattform 28 nahe der genannten Führungsbahnen 6 im ersten Lagerbereich 1,
v) Übernahme des zweiten Lagerbediengerätes 8 aus betreffender Fahrebene 15 im ersten Lagerbereich 1 auf die zweite Aufnahmeplattform 28',
vi) Verstellung der zweiten Aufnahmeplattform 28' relativ zu genannter Führungsbahn 6 im ersten Lagerbereich 1 und in Richtung einer der Führungsbahnen 7 im zweiten Lagerbereich 4,
vii) Endpositionieren der (bestückten) ersten Aufnahmeplattform 28 vor genannter Führungsbahn 6 im ersten Lagerbereich 1,
viii) Übergabe des ersten Lagerbediengerätes 8 von der ersten Aufnahmeplattform 28 auf betreffende Fahrebene 15, unmittelbar nachdem die zweite Aufnahmeplattform 28' relativ zur genannten Führungsbahn 6 im ersten Lagerbereich 1 verstellt wurde.

Im Weiteren kann wie folgt verfahren werden:
ix) Bewegen des ersten Lagerbediengerätes 8 in den ersten Lagerbereich 1 (entweder unmittelbar in das Hochleistungslager (A) oder über das Nachschublager (B') in das Hochleistungslager (A),
x) Positionieren der (bestückten) zweiten Aufnahmeplattform 28' vor einer der Führungsbahnen 7 im zweiten Lagerbereich 4, währendem Schritt ix) durchgeführt wird,
xi) Übergabe des zweiten Lagerbediengerätes 8 von der zweiten Aufnahmeplattform 28' auf betreffende Fahrebene 15 im zweiten Lagerbereich 4, und
xii) Verstellung der (wiederum leeren) ersten Aufnahmeplattform 28 relativ zu genannter Führungsbahn 6 im ersten Lagerbereich 1 und in Richtung einer der Führungsbahnen 7 im zweiten Lagerbereich 4),
xiii) Positionieren der ersten Aufnahmeplattform 28 vor einer der Führungsbahnen 7 im zweiten Lagerbereich 4,
xiv) Übernahme des dritten Lagerbediengerätes 8 aus betreffender Fahrebene 15 im zweiten Lagerbereich 4 auf die erste Aufnahmeplattform 28.

Optional zu den Schritten ix) bis xiv) können nachfolgende Schritte durchgeführt werden:
ix) Bewegen des ersten Lagerbediengerätes 8 in den ersten Lagerbereich 1 (entweder unmittelbar in das Hochleistungslager (A) oder über das Nachschublager (B') in das Hochleistungslager (A)),
x) Positionieren der (bestückten) zweiten Aufnahmeplattform 28' vor einer der Führungsbahnen 7 im zweiten Lagerbereich 4, währendem Schritt ix) durchgeführt wird,
xi) Übergabe des zweiten Lagerbediengerätes 8 von der zweiten Aufnahmeplattform 28' auf betreffende Fahrebene 15 im zweiten Lagerbereich 4, und
xii) Verstellung der (wiederum leeren) zweiten Aufnahmeplattform 28' relativ zu genannter Führungsbahn 7 im zweiten Lagerbereich 4 und in Richtung einer der Führungsbahnen 7 im zweiten Aufnahmeplattform 28',
xiii) Positionieren der zweiten Aufnahmeplattform 28' vor einer der Führungsbahnen 7 im zweiten Lagerbereich 4,
xv) Übernahme des dritten Lagerbediengerätes 8 aus betreffender Fahrebene 15 im zweiten Lagerbereich 4 auf die zweite Aufnahmeplattform 28',
xvi) Verstellung der (neuerlich bestückten) zweiten Aufnahmeplattform 28' relativ zu den Führungsbahnen 6, 7,
xvii) Positionieren der zweiten Aufnahmeplattform 28' vor einer der Führungsbahnen 6 im ersten Lagerbereich 1,
xviii) Übergabe des dritten Lagerbediengerätes 8 von der zweiten Aufnahmeplattform 28' auf betreffende Fahrebene 15, und
xiv) Verstellung der (wiederum leeren) ersten Aufnahmeplattform 28 relativ zu genannter Führungsbahn 6 im ersten Lagerbereich 1 und in Richtung einer anderen der Führungsbahnen 6 im ersten Lagerbereich 1,
xv) Positionieren der ersten Aufnahmeplattform 28 vor genannter Führungsbahn 6 im ersten Lagerbereich 1,
xvi) Übernahme des vierten Lagerbediengerätes 8 aus betreffender Fahrebene 15 im ersten Lagerbereich 4 auf die erste Aufnahmeplattform 28.

Wird ein erstes Lagerbediengerät 8, welches von der ersten Aufnahmeplattform 28 auf eine betreffende Führungsbahn 6 bzw. Fahrebene 15 übergeben werden soll, bereits auf der ersten Aufnahmeplattform 28 bereitgestellt und wird diese Aufnahmeplattform 28 während der Übernahmebewegung eines zweiten Lagerbediengerät 8 von der betreffenden Führungsbahn 6 bzw. Fahrebene 15 auf die zweite Aufnahmeplattform 28' in den Nahbereich der betreffenden Führungsbahn 6 bzw. Fahrebene 15 bewegt, kann das zweite Lagerbediengerät 8 unmittelbar nach einer (kurzen) Verstellbewegung der ersten Aufnahmeplattform 28 gegen das bereits auf der Aufnahmeplattform 28 bereitgestellte erste Lagerbediengerät 8 ausgetauscht werden. Die betreffende Führungsbahn 6 bzw. Fahrebene 15 ist nur kurzzeitig ohne Lagerbediengerät 8, sodass eine nahezu unterbrechungsfreie Bereitstellung eines Lagerbediengerätes 8 auf der betreffenden Führungsbahn 6 bzw. Fahrebene 15 gewährleistet ist.

Abschließend sei noch erwähnt, dass in einer bevorzugten Ausführung sowohl im Hochleistungslager als auch im Nachschublager dieselbe Lagertechnologie verwendet wird. Es kann sich auch als vorteilhaft erweisen, wenn im Hochleistungslager das gesamte Sortiment an Stückgütern 3, welche zur Lagerung in dem Lagersystem bestimmt sind, gelagert wird. Ebenso kann im Nachschublager das gesamte Sortiment an Stückgütern 3, welche zur Lagerung in dem Lagersystem bestimmt sind, gelagert werden.

Die Ausführungsbeispiele zeigen mögliche Ausführungsvarianten eines Lagersystemes sowie Verfahrens zum Betreiben desselben, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Lagersystemes dieses beziehungsweise deren Bestandteile teilweise unmaßstäblich und/oder vergrößert und/oder verkleinert dargestellt wurden.

**Bezugszeichenaufstellung**

| | | | |
|---|---|---|---|
| 1 | Lagerbereich | 36 | Grundrahmen |
| 2 | Lagerplatz Hochleistungslager | 37 | Schlitten |
| | | 38 | Schlitten |
| 3 | Stückgut | 39 | Transportorgan |
| 4 | Lagerbereich | 40 | Bereitstellvorrichtung |
| 5 | Lagerplatz Nachschublager | 41 | Führungsbahnende |
| 6 | Führungsbahn | 42 | Führungsbahnende |
| 7 | Führungsbahn | 43 | Fördertechnik |
| 8 | Lagerbediengerät | 44 | Beladevorrichtung |
| 9 | Fördertechnik | 45 | Übergabevorrichtung |
| 10 | Fördertechnik | 46 | Umsetzvorrichtung |
| 11 | Übergabevorrichtung | 47 | Tragrahmen |
| 12 | Umsetzvorrichtung | 48 | Transportplattform |
| 13 | Lagerregal | 49 | Laufrad |
| 14 | Regalgasse | 50 | Lastaufnahmevorrichtung |
| 15 | Fahrebene | 51 | Bereitstellvorrichtung (Einlagerung) |
| 16 | Steuereinheit | | |
| 17 | Lastaufnahmevorrichtung | 52 | Bereitstellvorrichtung (Auslagerung) |
| 18 | Puffervorrichtung | | |
| 19 | Stückgut-Hebevorrichtung | 53 | Transfervorrichtung |
| 20 | Bereitstellvorrichtung (Einlagerung) | 54 | Aufnahmeplattform |
| | | 55 | Führungsrahmen |
| 21 | Bereitstellvorrichtung (Auslagerung) | 56 | Antriebsvorrichtung |
| | | 57 | Führungsschiene |
| 22 | Förderantrieb | 58 | Übergabevorrichtung |
| 23 | Förderantrieb | 59 | Stückgut-Hebevorrichtung |
| 24 | Hubantrieb | | |
| 25 | Transfervorrichtung | | |
| 26 | Antriebsmotor | | |
| 27 | Förderantrieb | | |
| 28 | Aufnahmeplattform | | |
| 29 | Führungsvorrichtung | | |
| 30 | Führungsrahmen | | |
| 31 | Antriebsvorrichtung | | |
| 32 | Führungsschiene | | |
| 33 | Tragrahmen | | |
| 34 | Transportplattform | | |
| 35 | Laufrad | | |

## Patentansprüche

1. Lagersystem mit
einem ersten Lagerbereich (1) mit Lagerplätzen (2) zum Lagern von Stückgütern (3),
einem zweiten Lagerbereich (4) mit Lagerplätzen (5) zum Lagern von Stückgütern (3),
Führungsbahnen (6) im ersten Lagerbereich (1), wobei je eine Führungsbahn (6) vor einer Vielzahl nebeneinander liegender Lagerplätze (2) verläuft,
Führungsbahnen (7) im zweiten Lagerbereich (4), wobei je eine Führungsbahn (7) vor einer Vielzahl nebeneinander liegender Lagerplätze (5) verläuft,
einem oder mehreren automatisierten Lagerbediengeräten (8; 8'), wobei das Lagerbediengerät (8; 8') vor den Lagerplätzen (2, 5) entlang der Führungsbahnen (6, 7) verfahrbar und mit zumindest einer Lastaufnahmevorrichtung (17; 50) zum Einlagern von Stückgütern (3) in die Lagerplätze (2, 5) und Auslagern von Stückgütern (3) aus den Lagerplätzen (2, 5) versehen ist, und
einer Umsetzvorrichtung (12; 46), welche den ersten Lagerbereich (1) und zweiten Lagerbereich (4) verbindet und welche eine einige oder eine jede der Führungsbahnen (6) im ersten Lagerbereich (1) und eine jede der Führungsbahnen (7) im zweiten Lagerbereich (4) anfahrbare Aufnahmeplattform (28; 54) umfasst, um zumindest ein Lagerbediengerät (8; 8') zwischen dem ersten Lagerbereich (1) und zweiten Lagerbereich (4) umzusetzen,
**dadurch gekennzeichnet, dass**
der erste Lagerbereich (1) ein Hochleistungslager und der zweite Lagerbereich (4) ein Nachschublager umfasst, und
das Hochleistungslager ein automatisiertes Lagerbediengerät (8; 8') oder mehrere automatisierte Lagerbediengeräte (8; 8') aufweist und an eine Übergabevorrichtung (11; 11'; 45; 45') zum Transport von Stückgütern (3) zwischen dem Lagerbediengerät (8; 8') und einer ersten Fördertechnik (9, 10) zum Antransport von Stückgütern (3) zum Hochleistungslager und Abtransport von Stückgütern (3) vom Hochleistungslager anschließt,
wobei die Übergabevorrichtung (11; 11'; 45; 45') ausschließlich im Hochleistungslager und den Führungsbahnen (6) zugeordnet je eine Bereitstellvorrichtung (20, 21; 40; 51, 52) für das Zwischenpuffern zumindest eines Stückgutes (3) und eine die Bereitstellvorrichtungen (20, 21; 40; 51, 52) im Hochleistungslager und die erste Fördertechnik (9, 10) miteinander verbindende Transfervorrichtung (25; 53) zum Transport von Stückgütern (3) zwischen den Bereitstellvorrichtungen (20, 21; 40; 51, 52) und der ersten Fördertechnik (9, 10) aufweist,
wobei die Bereitstellvorrichtungen (20, 21; 40; 51, 52) über die Führungsbahnen (6) von dem Lagerbediengerät (8; 8') oder von den Lagerbediengeräten (8; 8') zum Auslagern und/oder Einlagern von Stückgütern (3) anfahrbar sind, und
wobei die Anzahl der Bereitstellvorrichtungen (20, 21; 40; 51, 52) jeweils für das Zwischenpuffern zumindest eines Stückgutes (3) im Hochleistungslager höher ist als die Anzahl der Bereitstellvorrichtungen (20', 21'; 40'; 51', 52') jeweils für das Zwischenpuffern zumindest eines Stückgutes (3) im Nachschublager.

2. Lagersystem mit
einem ersten Lagerbereich (1) mit Lagerplätzen (2) zum Lagern von Stückgütern (3),
einem zweiten Lagerbereich (4) mit Lagerplätzen (5) zum Lagern von Stückgütern (3),
Führungsbahnen (6) im ersten Lagerbereich (1), wobei je eine Führungsbahn (6) vor einer Vielzahl nebeneinander liegender Lagerplätze (2) verläuft,
Führungsbahnen (7) im zweiten Lagerbereich (4), wobei je eine Führungsbahn (7) vor einer Vielzahl nebeneinander liegender Lagerplätze (5) verläuft,
einem oder mehreren automatisierten Lagerbediengeräten (8; 8'), wobei das Lagerbediengerät (8; 8') vor den Lagerplätzen (2, 5) entlang der Führungsbahnen (6, 7) verfahrbar und mit zumindest einer Lastaufnahmevorrichtung (17; 50) zum Einlagern von Stückgütern (3) in die Lagerplätze (2, 5) und Auslagern von Stückgütern (3) aus den Lagerplätzen (2, 5) versehen ist, und
einer Umsetzvorrichtung (12; 46), welche den ersten Lagerbereich (1) und zweiten Lagerbereich (4) verbindet und welche eine einige oder eine jede der Führungsbahnen (6) im ersten Lagerbereich (1) und eine jede der Führungsbahnen (7) im zweiten Lagerbereich (4) anfahrbare Aufnahmeplattform (28; 54) umfasst, um zumindest ein Lagerbediengerät (8; 8') zwischen dem ersten Lagerbereich (1) und zweiten Lagerbereich (4) umzusetzen,
**dadurch gekennzeichnet, dass**
der erste Lagerbereich (1) ein Hochleistungslager und der zweite Lagerbereich (4) ein Nachschublager umfasst, und
das Hochleistungslager ein automatisiertes Lagerbediengerät (8; 8') oder mehrere automatisierte Lagerbediengeräte (8; 8') aufweist und an eine Übergabevorrichtung (11; 11'; 45; 45') zum Transport von Stückgütern (3) zwischen dem Lagerbediengerät (8; 8') und einer ersten Fördertechnik (9, 10) zum Antransport von Stückgütern (3) zum Hochleistungslager und Abtransport von Stückgütern (3) vom Hochleistungslager anschließt,
wobei die Übergabevorrichtung (11; 11'; 45; 45') im Hochleistungslager je Führungsbahn (6) zugeordnet eine Bereitstellvorrichtung (20, 21; 40; 51, 52) und im Nachschublager einer oder einigen Führungsbahnen (7) einer Anzahl an Führungsbahnen (7) zugeordnet eine Bereitstellvorrichtung (20', 21'; 40'; 51', 52') für das Zwischenpuffern zumindest eines Stückgutes (3) und eine die Bereitstellvorrichtungen (20, 21; 40; 51, 52) im Hochleistungslager und die eine oder mehreren Bereitstellvorrichtungen (20', 21'; 40'; 51', 52') im Nachschublager und die erste Fördertechnik (9, 10) miteinander verbindende Transfervorrichtung (25; 53) zum Transport von Stückgütern (3) zwischen den Bereitstellvorrichtungen (20, 21; 40; 51, 52; 20'; 21'; 40'; 51', 52') und der ersten Fördertechnik (9, 10) aufweist,
wobei die Bereitstellvorrichtungen (20, 21; 40; 51, 52; 20'; 21'; 40'; 51', 52') über die Führungsbahnen (6, 7) von dem Lagerbediengerät (8; 8') oder von den Lagerbediengeräten (8; 8') zum Auslagern und/oder Einlagern von Stückgütern (3) anfahrbar sind, und
wobei die Anzahl der Bereitstellvorrichtungen (20, 21; 40; 51, 52) jeweils für das Zwischenpuffern zumindest eines Stückgutes (3) im Hochleistungslager höher ist als die Anzahl der Bereitstellvorrichtungen (20', 21'; 40'; 51', 52') jeweils für das Zwischenpuffern zumindest eines Stückgutes (3) im Nachschublager.

3. Lagersystem nach Anspruch 1 oder 2, **dadurch gekennzeichnet, dass**
die Lagerplätze (2, 5) sowohl des Hochleistungslagers als auch des Nachschublagers in übereinander liegenden Regalebenen und in zumindest einem Lagerregal (13) angeordnet sind,
die Führungsbahnen (6) im Hochleistungslager in übereinander liegenden Fahrebenen (15) angeordnet sind,
die Führungsbahnen (7) im Nachschublager in übereinander liegenden Fahrebenen (15) angeordnet sind,
das Hochleistungslager auf zumindest einigen der Führungsbahnen (6) je ein automatisiertes Lagerbediengerät (8), insbesondere ein Einebenenregalbediengerät, aufweist, und
die Übergabevorrichtung (11; 11') ferner eine automatisierte Hebevorrichtung (19) aufweist,
wobei die Hebevorrichtung (19) mit der jede der Bereitstellvorrichtungen (20, 21; 40; 20', 21'; 40') anfahrbaren Transfervorrichtung (25) zum Transport von Stückgütern (3) ausgestattet ist.

4. Lagersystem nach einem der Ansprüche 1 bis 3, **dadurch gekennzeichnet, dass**
die Führungsbahnen (6) im Hochleistungslager an der Übergabevorrichtung (11) vorbeilaufen und mit ihren ersten Führungsbahnenden (41) an der Übergabevorrichtung (11) in Richtung der Längserstreckung der Führungsbahnen (6) vorragen,
die Führungsbahnen (7) im Nachschublager mit ihren ersten Führungsbahnenden (42) bis etwa lotrecht oberhalb / unterhalb der ersten Führungsbahnenden (41) im Hochleistungslager vorragen, und
die Umsetzvorrichtung (12) an den ersten Führungsbahnenden (41, 42) derart anschließt, sodass die Führungsbahnen (6, 7) im Hochleistungslager und Nachschublager von der Aufnahmeplattform (28) anfahrbar sind, um das Lagerbediengerät (8) zwischen einer der Führungsbahnen (6) im Hochleistungslager und einer der Führungsbahnen (7) im Nachschublager zu bewegen.

5. Lagersystem nach einem der Ansprüche 1 bis 4, **dadurch gekennzeichnet, dass** die Umsetzvorrichtung (12; 46) an eine zweite Fördertechnik (43) zum Antransport von Stückgütern (3) zum Nachschublager angeschlossen ist.

6. Verfahren zum Betreiben eines Lagersystemes nach einem der Ansprüche 1 bis 5, **gekennzeichnet durch** die Schritte
Konfigurierung des ersten Lagerbereiches (1) mit einem Hochleistungslager und des zweiten Lagerbereiches (4) mit einem Nachschublager,
Bereitstellung von Stückgütern (3) auf den Lagerplätzen (2) im Hochleistungslager,
Bereitstellung von Stückgütern (3) auf den Lagerplätzen (5) im Nachschublager,
Umlagerung eines Stückgutes (3) von einem Lagerplatz (5) im Nachschublager in das Hochleistungslager sofern vom Rechnersystem ein Nachschubauftrag erzeugt wird, derart dass vorerst zumindest ein Lagerbediengerät (8; 8') zu einem der Lagerplätze (5) im Nachschublager bewegt und auf diesem das Stückgut (3) übernommen wird, worauf das Lagerbediengerät (8; 8') mit dem Stückgut (3) entlang der Führungsbahn (7) zur Umsetzvorrichtung (12; 46) und mittels der Umsetzvorrichtung (12; 46) vom Nachschublager zu einer der Führungsbahnen (6) im ersten Lagerbereich (1) transportiert und danach im ersten Lagerbereich (1) entlang der Führungsbahn (6) entweder zu einem der Lagerplätze (2) im Hochleistungslager bewegt und das Stückgut (3) von dem Lagerbediengerät (8; 8') auf einen Lagerplatz (2) im Hochleistungslager oder unmittelbar zur Übergabevorrichtung (11; 45) auf eine von mehreren Bereitstellvorrichtungen (21; 40; 52) transportiert wird, und
Auslagern zumindest einiger Stückgüter (3) aus dem Lagersystem, derart dass sowohl die Stückgüter (3) aus dem Hochleistungslager als auch die zuvor aus dem Nachschublager umgelagerten Stückgüter (3) im Hochleistungslager mittels einem oder mehreren Lagerbediengeräten (8; 8') zur Übergabevorrichtung (11; 45) auf eine oder mehrere Bereitstellvorrichtungen (21; 40; 52) und danach mittels einer Transfervorrichtung (25; 53) der Übergabevorrichtung (11; 45) von den Bereitstellvorrichtungen (21; 40; 52) zur ersten Fördertechnik (9, 10) zum Abtransport von Stückgütern (3) vom Hochleistungslager transportiert werden.

7. Verfahren nach Anspruch 6, wobei das Umlagern die Schritte umfasst
Umlagerung eines ersten Stückgutes (3) von einem Lagerplatz (5) im Nachschublager (B) in das Hochleistungslager (A) sofern vom Rechnersystem ein erster Nachschubauftrag erzeugt wird, derart dass vorerst zumindest ein Lagerbediengerät (8; 8') zu einem der Lagerplätze (5) im Nachschublager (B) bewegt und auf diesem das Stückgut (3) übernommen wird, worauf das Lagerbediengerät (8; 8') mit dem Stückgut (3) entlang der Führungsbahn (7) zu einer Umsetzvorrichtung (12; 46) und mittels der Umsetzvorrichtung (12; 46) vom Nachschublager (B) zu einer der Führungsbahnen (6) im ersten Lagerbereich (1) transportiert und danach im ersten Lagerbereich (1) entlang der Führungsbahn (6) entweder zu einem der Lagerplätze (2) im Hochleistungslager (A) bewegt und das Stückgut (3) von dem Lagerbediengerät (8; 8') auf einen Lagerplatz (2) im Hochleistungslager (A) oder unmittelbar zu einer Übergabevorrichtung (11; 45) auf eine von mehreren Bereitstellvorrichtungen (21; 40; 52) transportiert wird, und
Umlagerung eines zweiten Stückgutes (3) innerhalb des ersten Lagerbereiches (1) aus einem Nachschublager (B') in das Hochleistungslager (A) sofern vom Rechnersystem ein zweiter Nachschubauftrag erzeugt wird, derart dass vorerst zumindest ein Lagerbediengerät (8; 8') zu einem der Lagerplätze (5') im Nachschublager (B') bewegt und auf diesem das Stückgut (3) übernommen wird, worauf das Lagerbediengerät (8; 8') mit dem Stückgut (3) entlang der Führungsbahn (6) vom Nachschublager (B') in das Hochleistungslager (A) transportiert und danach im Hochleistungslager (A) entweder zu einem der Lagerplätze (2) bewegt und das Stückgut (3) von dem Lagerbediengerät (8; 8') auf einen Lagerplatz (2) oder unmittelbar zu einer Übergabevorrichtung (11; 45) auf eine von mehreren Bereitstellvorrichtungen (21; 40; 52) transportiert wird.

8. Verfahren nach Anspruch 6, **gekennzeichnet durch** die Schritte
Auslagerung zumindest einiger Stückgüter (3) aus dem Hochleistungslager und dem Nachschublager, derart dass
i) die Stückgüter (3) aus dem Hochleistungslager mittels einem oder mehreren Lagerbediengeräten (8; 8') ausgelagert und zur Übergabevorrichtung (11; 45) auf eine oder mehrere Bereitstellvorrichtungen (21; 40; 52) einer Vielzahl von Bereitstellvorrichtungen (21; 40; 52) und danach mittels der Transfervorrichtung (25; 53) der Übergabevorrichtung (11; 45) von der einen oder den mehreren Bereitstellvorrichtungen (21; 40; 52) zur ersten Fördertechnik (9, 10) transportiert werden, und/oder
ii) die Stückgüter (3) aus dem Nachschublager mittels einem oder mehreren Lagerbediengeräten (8; 8') ausgelagert und zur Übergabevorrichtung (11'; 45') auf eine oder mehrere Bereitstellvorrichtungen (21'; 40'; 52') und danach mittels der Transfervorrichtung (25; 53) der Übergabevorrichtung (11'; 45') von der einen oder den mehreren Bereitstellvorrichtungen (21'; 40'; 52') zur ersten Fördertechnik (9, 10) transportiert werden.

9. Verfahren nach Anspruch 6 oder 8, **gekennzeichnet durch** die Schritte
Erfassung von Aufträgen an einem Rechnersystem,
Ermittlung der Stückgüter (3) und der Stückgutmenge je Stückgut (3) zu einem Auftrag durch das Rechnersystem,
Analyse eines Bestandes zu jenen Stückgütern (3), welche für den genannten Auftrag benötigt und im Hochleistungslager gelagert werden, und
Auslagerung der Stückgüter (3) zu diesem genannten Auftrag aus dem Lagersystem, derart dass die Stückgüter (3) ausschließlich aus dem Hochleistungslager und mittels einem oder mehreren Lagerbediengeräten (8; 8') ausgelagert und zur Übergabevorrichtung (11; 45) auf eine oder mehrere Bereitstellvorrichtungen (21; 40; 52) einer Vielzahl von Bereitstellvorrichtungen (21; 40; 52) und danach mittels einer Transfervorrichtung (25; 53) der Übergabevorrichtung (11; 45) von der einen oder den mehreren Bereitstellvorrichtungen (21; 40; 52) zur ersten Fördertechnik (9, 10) transportiert werden.

10. Verfahren nach Anspruch 6 oder 8, **gekennzeichnet durch** die Schritte
Erfassung von Aufträgen an einem Rechnersystem,
Ermittlung der Stückgüter (3) und der Stückgutmenge je Stückgut zu einem Auftrag durch das Rechnersystem,
Analyse eines Bestandes zu jenen Stückgütern (3) im Hochleistungslager und Nachschublager, welche für den genannten Auftrag benötigt werden,
Umlagerung eines oder mehrerer Stückgüter (3) vom Nachschublager in das Hochleistungslager, sofern im Hochleistungslager der Bestand eines der Stückgüter (3) zu genanntem Auftrag einen Sollbestand an diesem Stückgut (3) unterschreitet, wobei die Stückgüter (3) in einer solchen Anzahl vom Nachschublager in das Hochleistungslager umgelagert werden, dass zumindest der Sollbestand an diesem Stückgut (3) zur Abwicklung des genannten Auftrages erreicht wird, und
Auslagerung der Stückgüter (3) zu genanntem Auftrag aus dem Lagersystem, derart dass die Stückgüter (3) ausschließlich aus dem Hochleistungslager ausgelagert und mittels einem oder mehreren Lagerbediengeräten (8; 8') zur Übergabevorrichtung (11; 45) auf eine oder mehrere Bereitstellvorrichtungen (21; 40; 52) einer Vielzahl von Bereitstellvorrichtungen (21; 40; 52) und danach mittels einer Transfervorrichtung (25; 53) der Übergabevorrichtung (11; 45) von der einen oder den mehreren Bereitstellvorrichtungen (21; 40; 52) zur ersten Fördertechnik (9, 10) transportiert werden.

11. Verfahren nach Anspruch 6 oder 8, **gekennzeichnet durch** die Schritte
Erfassung von Aufträgen an einem Rechnersystem,
Ermittlung der Stückgüter (3) und der Stückgutmenge je Stückgut zu einem Auftrag durch das Rechnersystem,
Analyse eines Bestandes zu jenen Stückgütern (3) im Hochleistungslager und Nachschublager, welche für den genannten Auftrag benötigten werden, und
Auslagerung der Stückgüter (3) zu diesem genannten Auftrag aus dem Hochleistungslager und dem Nachschublager, sofern im Hochleistungslager der Bestand eines der Stückgüter (3) zu genanntem Auftrag einen Sollbestand an diesem Stückgut (3) unterschreitet, derart dass
i) die Stückgüter (3) aus dem Hochleistungslager mittels einem oder mehreren Lagerbediengeräten (8; 8') ausgelagert und zur Übergabevorrichtung (11; 45) auf eine oder mehrere Bereitstellvorrichtungen (21; 40; 52) einer Vielzahl von Bereitstellvorrichtungen (21; 40; 52) und danach mittels einer Transfervorrichtung (25; 53) der Übergabevorrichtung (11; 45) von der einen oder den mehreren Bereitstellvorrichtungen (21; 40; 52) zur ersten Fördertechnik (9, 10) transportiert werden, und
ii) die restlichen Stückgüter (3) aus dem Nachschublager mittels einem oder mehreren Lagerbediengeräten (8; 8') ausgelagert und zur Übergabevorrichtung (11'; 45') auf eine oder mehrere Bereitstellvorrichtungen (21'; 40'; 52') und danach mittels der Transfervorrichtung (25; 53) der Übergabevorrichtung (11'; 45') von der einen oder den mehreren Bereitstellvorrichtungen (21'; 40'; 52') zur ersten Fördertechnik (9, 10) transportiert werden.

12. Verfahren nach Anspruch 6, **gekennzeichnet durch** die Schritte
Beschickung des Nachschublagers mit Stückgütern (3) derart dass
i) entweder das Stückgut (3) mittels dem zumindest einen automatisierten Lagerbediengerät (8; 8') von einem Lagerplatz (2) aus dem Hochleistungslager oder einer von mehreren Bereitstellvorrichtungen (20; 40; 51) abgeholt und von dem Lagerbediengerät (8; 8') zur Umsetzvorrichtung (12; 46) und anschließend mittels der Umsetzvorrichtung (12; 46) zu zumindest einer der Führungsbahnen (7) im Nachschublager und zu einem Lagerplatz (5) im Nachschublager bewegt und schließlich auf einen Lagerplatz (5) umgelagert wird,
ii) oder das Stückgut (3) mittels dem zumindest einen automatisierten Lagerbediengerät (8; 8') von einer Bereitstellvorrichtung (20'; 40'; 51') im Nachschublager abgeholt und von dem Lagerbediengerät (8; 8') zu einem Lagerplatz (5) im Nachschublager bewegt und schließlich auf einen Lagerplatz (5) umgelagert wird,
iii) oder das Stückgut (3) mittels einer zweiten Fördertechnik (43) zur Umsetzvorrichtung (12; 46) und danach auf ein Lagerbediengerät (8; 8') transportiert wird, wobei sich das Lagerbediengerät (8; 8') auf der Umsetzvorrichtung (12; 46) befindet, und anschließend von dem Lagerbediengerät (8; 8') zu zumindest einer der Führungsbahnen (7) im Nachschublager und zu einem Lagerplatz (5) im Nachschublager bewegt und schließlich auf einen Lagerplatz (5) eingelagert wird.

13. Verfahren nach Anspruch 12i) oder 12iii), **gekennzeichnet durch** die Schritte, dass
i) die Stückgüter (3), welche in den im Rechnersystem erfassten Aufträgen innerhalb einer Analysemenge nicht enthalten sind, mittels dem zumindest einen automatisierten Lagerbediengerät (8; 8') und der Umsetzvorrichtung (12; 46) vom Hochleistungslager in das Nachschublager transportiert und schließlich auf einen Lagerplatz (5) in das Nachschublager umgelagert werden, oder
ii) die Stückgüter (3) von der zweiten Fördertechnik (43) zur Umsetzvorrichtung (12; 46) und danach auf ein Lagerbediengerät (8; 8') oder der Bereitstellvorrichtung (20'; 40'; 51') zugeführt werden, sofern im Nachschublager ein Mindestbestand zu einem Stückgut (3) unterschritten wird oder kein Bestand zu einem Stückgut (3) vorhanden ist, wobei der Bestand zu jedem Stückgut (3) unterschiedlicher Stückgüter (3) im Nachschublager durch ein Rechnersystem laufend erfasst wird.

14. Verfahren nach Anspruch 6 oder 12, **gekennzeichnet durch** die Schritte
Ermittlung eines Bestandes zu jedem Stückgut (3) verschiedener Stückgüter (3) im Hochleistungslager und Nachschublager durch ein Rechnersystem,
Aktualisierung des Bestandes zu jedem Stückgut (3) verschiedener Stückgüter (3) im Hochleistungslager und Nachschublager durch ein Rechnersystem, nach jeder Einlagerung eines Stückgutes (3) in das Hochleistungslager und/oder Nachschublager und jeder Auslagerung eines Stückgutes (3) aus dem Hochleistungslager und/oder Nachschublager und jeder Umlagerung eines Stückgutes (3) zwischen dem Hochleistungslager und Nachschublager, und
Umlagerung eines oder mehrerer Stückgüter (3) vom Nachschublager in das Hochleistungslager,
sofern im Hochleistungslager ein Mindestbestand zu einem Stückgut (3) unterschritten wird, oder
sofern eine Bedarfsmenge zu einem Stückgut (3), welches in den im Rechnersystem erfassten Aufträgen innerhalb einer Analysemenge enthalten ist, den aktuellen Bestand zu diesem Stückgut (3) im Hochleistungslager überschreitet.

15. Verfahren nach einem der Ansprüche 6 bis 14, **dadurch gekennzeichnet, dass** sowohl im Hochleistungslager als auch im Nachschublager dieselbe Lagertechnologie verwendet wird.

16. Verfahren nach einem der Ansprüche 6 bis 15, **dadurch gekennzeichnet, dass** die Stückgüter (3) im Nachschublager auf den Lagerplätzen (5) in Abhängigkeit von einer Zugriffshäufigkeit bereitgestellt werden, wobei die Stückgüter (3) mit hoher Zugriffshäufigkeit im Nahbereich des Hochleistungslagers und/oder im Nahbereich der Umsetzvorrichtung (12; 46) lagern.

## Claims

1. A storage system with
a first storage zone (1) with storage locations (2) for storing unit loads (3),
a second storage zone (4) with storage locations (5) for storing unit loads (3),
guide tracks (6) in the first storage zone (1), wherein one guide track (6) extends in front of each of a plurality of storage locations (2) located next to one another,
guide tracks (7) in the second storage zone (4), wherein one guide track (7) extends in front of each of a plurality of storage locations (5) located next to one another,
one or multiple automated storage and retrieval units (8; 8'), wherein the storage and retrieval unit (8; 8') is displaceable in front of the storage locations (2, 5) along the guide tracks (6, 7) and is equipped with at least one load handling device (17; 50) for storing unit loads (3) in the storage locations (2, 5) and retrieving unit loads (3) from the storage locations (2, 5), and
a transport device (12; 46), which connects the first storage zone (1) and second storage zone (4) and which comprises a receiving platform (28; 54) that can move to some or each of the guide tracks (6) in the first storage zone (1) and to each of the guide tracks (7) in the second storage zone (4) in order to transport at least one storage and retrieval unit (8; 8') between the first storage zone (1) and second storage zone (4), **characterized in that**
the first storage zone (1) comprises a high performance storage and the second storage zone (4) comprises a replenishment storage, and
the high performance storage has an automated storage and retrieval unit (8; 8') or multiple automated storage and retrieval units (8; 8') and adjoins a handover device (11; 11'; 45; 45') for transporting unit loads (3) between the storage and retrieval unit (8; 8') and a first conveying system (9, 10) for transporting unit loads (3) to the high performance storage and transporting unit loads (3) away from the high performance storage,
wherein, exclusively in the high performance storage, the handover device (11; 11'; 45; 45') has respectively one provisioning device (20, 21; 40; 51, 52) assigned to the guide tracks (6) for buffering at least one unit load (3) and a transfer device (25; 53) interconnecting the provisioning devices (20, 21; 40; 51, 52) in the high performance storage and the first conveying system (9, 10) for transporting unit loads (3) between the provisioning devices (20, 21; 40; 51, 52) and the first conveying system (9, 10), wherein the provisioning devices (20, 21; 40; 51, 52) can be moved to via the guide tracks (6) by the storage and retrieval unit (8; 8') or by the storage and retrieval units (8; 8') for retrieving and/or storing unit loads (3), and
wherein the number of the provisioning devices (20, 21; 40; 51, 52) for buffering at least one unit load (3) each in the high performance storage is higher than the number of the provisioning devices (20', 21'; 40'; 51', 52') for buffering at least one unit load (3) each in the replenishment storage.

2. A storage system with
a first storage zone (1) with storage locations (2) for storing unit loads (3),
a second storage zone (4) with storage locations (5) for storing unit loads (3), guide tracks (6) in the first storage zone (1), wherein one guide track (6) extends in front of each of a plurality of storage locations (2) located next to one another, guide tracks (7) in the second storage zone (4), wherein one guide track (7) extends in front of each of a plurality of storage locations (5) located next to one another, one or multiple automated storage and retrieval units (8; 8'), wherein the storage and retrieval unit (8; 8') is displaceable in front of the storage locations (2, 5) along the guide tracks (6, 7) and is equipped with at least one load handling device (17; 50) for storing unit loads (3) in the storage locations (2, 5) and retrieving unit loads (3) from the storage locations (2, 5), and
a transport device (12; 46), which connects the first storage zone (1) and second storage zone (4) and which comprises a receiving platform (28; 54) that can move to some or each of the guide tracks (6) in the first storage zone (1) and to each of the guide tracks (7) in the second storage zone (4) in order to transport at least one storage and retrieval unit (8; 8') between the first storage zone (1) and second storage zone (4), **characterized in that**
the first storage zone (1) comprises a high performance storage and the second storage zone (4) comprises a replenishment storage, and
the high performance storage has an automated storage and retrieval unit (8; 8') or multiple automated storage and retrieval units (8; 8') and adjoins a handover device (11; 11'; 45; 45') for transporting unit loads (3) between the storage and retrieval unit (8; 8') and a first conveying system (9, 10) for transporting unit loads (3) to the high performance storage and transporting unit loads (3) away from the high performance storage,
wherein the handover device (11; 11'; 45; 45') has one provisioning device (20, 21; 40; 51, 52) assigned per guide track (6) in the high performance storage and a provisioning device (20', 21'; 40'; 51', 52') assigned to one or some guide tracks (7) of a number of guide tracks (7) in the replenishment storage for buffering at least one unit load (3) and a transfer device (25; 53) interconnecting the provisioning devices (20, 21; 40; 51, 52) in the high performance storage and the one or multiple provisioning devices (20', 21'; 40'; 51', 52') in the replenishment storage and the first conveying system (9, 10) for transporting unit loads (3) between the provisioning devices (20, 21; 40; 51, 52; 20'; 21'; 40'; 51', 52') and the first conveying system (9, 10),
wherein the provisioning devices (20, 21; 40; 51, 52; 20'; 21'; 40'; 51', 52') can be moved to via the guide tracks (6, 7) by the storage and retrieval unit (8; 8') or by the storage and retrieval units (8; 8') for retrieving and/or storing unit loads (3), and wherein the number of the provisioning devices (20, 21; 40; 51, 52) for buffering at least one unit load (3) each in the high performance storage is higher than the number of the provisioning devices (20', 21'; 40'; 51', 52') for buffering at least one unit load (3) each in the replenishment storage.

3. The storage system according to claim 1 or 2, **characterized in that**
the storage locations (2, 5) both of the high performance storage and of the replenishment storage are arranged in rack levels located on top of one another and in at least one storage rack (13),
the guide tracks (6) in the high performance storage are arranged in travel planes (15) located on top of one another,
the guide tracks (7) in the replenishment storage are arranged in travel planes (15) located on top of one another,
the high performance storage has an automated storage and retrieval unit (8), in particular a single-level storage and retrieval unit, on each of at least some of the guide tracks (6), and
the handover device (11; 11') further has an automated lifting device (19),
wherein the lifting device (19) is equipped with the transfer device (25) that can move to each of the provisioning devices (20, 21; 40; 20', 21'; 40') for transporting unit loads (3).

4. The storage system according to any one of the claims 1 to 3, **characterized in that** the guide tracks (6) in the high performance storage extend past the handover device (11) and their first guide track ends (41) protrude at the handover device (11) in a direction of the longitudinal extension of the guide tracks (6),
the first guide track ends (42) of the guide tracks (7) in the replenishment storage protrude to somewhere approximately perpendicular above / below the first guide track ends (41) in the high performance storage, and
the transport device (12) adjoins the first guide track ends (41, 42) such that the guide tracks (6, 7) in the high performance storage and replenishment storage can be moved to via the receiving platform (28) in order to move the storage and retrieval unit (8) between one of the guide tracks (6) in the high performance storage and one of the guide tracks (7) in the replenishment storage.

5. The storage system according to any one of the claims 1 to 4, **characterized in that** the transport device (12; 46) is adjoined to a second conveying system (43) for transporting unit loads (3) to the replenishment storage.

6. A method for operating a storage system according to any one of the claims 1 to 5, **characterized by** the steps
configuring the first storage zone (1) with a high performance storage and the second storage zone (4) with a replenishment storage,
provisioning unit loads (3) at the storage locations (2) in the high performance storage, provisioning unit loads (3) at the storage locations (5) in the replenishment storage, rearranging an unit load (3) from a storage location (5) in the replenishment storage to the high performance storage, provided that a replenishment order is generated by the computer system, such that initially at least one storage and retrieval unit (8; 8') is moved to one of the storage locations (5) in the replenishment storage and the unit load (3) is taken over on it, whereupon the storage and retrieval unit (8; 8') with the unit load (3) is transported along the guide track (7) to the transport device (12; 46) and is transported from the replenishment storage to one of the guide tracks (6) in the first storage zone (1) by means of the transport device (12; 46) and is subsequently moved along the guide track (6) in the first storage zone (1) either to one of the storage locations (2) in the high performance storage and the unit load (3) is transported to a storage location (2) in the high performance storage by the storage and retrieval unit (8; 8') or immediately to the handover device (11; 45) to one of multiple provisioning devices (21; 40; 52), and
retrieving at least some unit loads (3) from the storage system, such that both the unit loads (3) from the high performance storage and the unit loads (3) previously rearranged from the replenishment storage are transported to the handover device (11; 45) onto one or multiple provisioning devices (21; 40; 52) in the high performance storage by means of one or multiple storage and retrieval units (8; 8') and are subsequently transported from the provisioning devices (21; 40; 52) to the first conveying system (9, 10) for transporting unit loads (3) away from the high performance storage by means of a transfer device (25; 53) of the handover device (11; 45).

7. The method according to claim 6, wherein the rearranging comprises the steps rearranging a first unit load (3) from a storage location (5) in the replenishment storage (B) to the high performance storage (A), provided that a first replenishment order is generated by the computer system, such that initially at least one storage and retrieval unit (8; 8') is moved to one of the storage locations (5) in the replenishment storage (B) and the unit load (3) is taken over on it, whereupon the storage and retrieval unit (8; 8') with the unit load (3) is transported along the guide track (7) to a transport device (12; 46) and is transported from the replenishment storage (B) to one of the guide tracks (6) in the first storage zone (1) by means of the transport device (12; 46) and is subsequently moved along the guide track (6) in the first storage zone (1) either to one of the storage locations (2) in the high performance storage (A) and the unit load (3) is transported to a storage location (2) in the high performance storage (A) or immediately to a handover device (11; 45) onto one of multiple provisioning devices (21; 40; 52) by the storage and retrieval unit (8; 8'), and
rearranging a second unit load (3) inside the first storage zone (1) from a replenishment storage (B') to the high performance storage (A), provided that a second replenishment order is generated by the computer system, such that initially at least one storage and retrieval unit (8; 8') is moved to one of the storage locations (5') in the replenishment storage (B') and the unit load (3) is taken over on it, whereupon the storage and retrieval unit (8; 8') with the unit load (3) is transported along the guide track (6) from the replenishment storage (B') to the high performance storage (A) and is subsequently moved in the high performance storage (A) either to one of the storage locations (2) and the unit load (3) is transported to a storage location (2) or immediately to a handover device (11; 45) onto one of multiple provisioning devices (21; 40; 52) by the storage and retrieval unit (8; 8').

8. The method according to claim 6, **characterized by** the steps
retrieving at least some unit loads (3) from the high performance storage and the replenishment storage, such that
i) the unit loads (3) are retrieved from the high performance storage by means of one or multiple storage and retrieval units (8; 8') and are transported to the handover device (11; 45) onto one or multiple provisioning devices (21; 40; 52) of a plurality of provisioning devices (21; 40; 52) and are subsequently transported from the one or the multiple provisioning devices (21; 40; 52) to the first conveying system (9, 10) by means of the transfer device (25; 53) of the handover device (11; 45), and/or
ii) the unit loads (3) are retrieved from the replenishment storage by means of one or multiple storage and retrieval units (8; 8') and are transported to the handover device (11'; 45') onto one or multiple provisioning devices (21'; 40'; 52') and are subsequently transported from the one or the multiple provisioning devices (21'; 40'; 52') to the first conveying system (9, 10) by means of the transfer device (25; 53) of the handover device (11'; 45').

9. The method according to claim 6 or 8, **characterized by** the steps acquiring orders at a computer system,
determining the unit loads (3) and the number of each unit load (3) for an order by the computer system,
analyzing a stock for those unit loads (3) which are required for said order and are stored in the high performance storage, and
retrieving the unit loads (3) for said order from the storage system, such that the unit loads (3) are retrieved exclusively from the high performance storage and by means of one or multiple storage and retrieval units (8; 8') and are transported to the handover device (11; 45) onto one or multiple provisioning devices (21; 40; 52) of a plurality of provisioning devices (21; 40; 52) and are subsequently transported from the one or the multiple provisioning devices (21; 40; 52) to the first conveying system (9, 10) by means of a transfer device (25; 53) of the handover device (11; 45).

10. The method according to claim 6 or 8, **characterized by** the steps acquiring orders at a computer system,
determining the unit loads (3) and the number of each unit load for an order by the computer system,
analyzing a stock for those unit loads (3) in the high performance storage and replenishment storage which are required for said order,
rearranging one or multiple unit loads (3) from the replenishment storage to the high performance storage, provided that the stock of one of the unit loads (3) for said order in the high performance storage is below a target stock of this unit load (3), wherein the unit loads (3) are rearranged in such a number from the replenishment storage to the high performance storage that at least the target stock of this unit load (3) for handling said order is achieved, and
retrieving the unit loads (3) for said order from the storage system, such that the unit loads (3) are retrieved exclusively from the high performance storage and are transported to the handover device (11; 45) onto one or multiple provisioning devices (21; 40; 52) of a plurality of provisioning devices (21; 40; 52) by means of one or multiple storage and retrieval units (8; 8') and are subsequently transported from the one or the multiple provisioning devices (21; 40; 52) to the first conveying system (9, 10) by means of a transfer device (25; 53) of the handover device (11; 45).

11. The method according to claim 6 or 8, **characterized by** the steps acquiring orders at a computer system,
determining the unit loads (3) and the number of each unit load for an order by the computer system,
analyzing a stock for those unit loads (3) in the high performance storage and replenishment storage which are required for said order, and
retrieving the unit loads (3) for said order from the high performance storage and the replenishment storage, provided that the stock of one of the unit loads (3) for said order in the high performance storage is below a target stock of this unit load (3), such that
i) the unit loads (3) are retrieved from the high performance storage and are transported to the handover device (11; 45) onto one or multiple provisioning devices (21; 40; 52) of a plurality of provisioning devices (21; 40; 52) by means of one or multiple storage and retrieval units (8; 8') and are subsequently transported from the one or the multiple provisioning devices (21; 40; 52) to the first conveying system (9, 10) by means of a transfer device (25; 53) of the handover device (11; 45), and
ii) the remaining unit loads (3) are retrieved from the replenishment storage and are transported to the handover device (11'; 45') onto one or multiple provisioning devices (21'; 40'; 52') by means of one or multiple storage and retrieval units (8; 8') and are subsequently transported from the one or the multiple provisioning devices (21'; 40'; 52') to the first conveying system (9, 10) by means of the transfer device (25; 53) of the handover device (11'; 45').

12. The method according to claim 6, **characterized by** the steps replenishing the replenishment storage with unit loads (3) such that
i) either the unit load (3) is picked up from a storage location (2) from the high performance storage or from one of multiple provisioning devices (20; 40; 51) by means of the at least one automated storage and retrieval unit (8; 8') and is moved to the transport device (12; 46) by the storage and retrieval unit (8; 8') and subsequently to at least one of the guide tracks (7) in the replenishment storage and to a storage location (5) in the replenishment storage and is finally rearranged to a storage location (5) by means of the transport device (12; 46),
ii) or the unit load (3) is picked up from a provisioning device (20'; 40'; 51') in the replenishment storage by means of the at least one automated storage and retrieval unit (8; 8') and is moved to a storage location (5) in the replenishment storage and is finally rearranged to a storage location (5) by the storage and retrieval unit (8; 8'),
iii) or the unit load (3) is transported to the transport device (12; 46) and subsequently onto a storage and retrieval unit (8; 8') by means of a second conveying system (43), wherein the storage and retrieval unit (8; 8') is located on the transport device (12; 46), and is subsequently moved to at least one of the guide tracks (7) in the replenishment storage and to a storage location (5) in the replenishment storage and finally stored in a storage location (5) by the storage and retrieval unit (8; 8').

13. The method according to claim 12i) or 12iii), **characterized by** the steps to the effect that
i) the unit loads (3) which are not included in an analysis set in the orders acquired in the computer system are transported from the high performance storage to the replenishment storage and finally rearranged to a storage location (5) in the replenishment storage by means of the at least one automated storage and retrieval unit (8; 8') and the transport device (12; 46), or
ii) the unit loads (3) are supplied from the second conveying system (43) to the transport device (12; 46) and subsequently onto a storage and retrieval unit (8; 8') or to the provisioning device (20'; 40'; 51'), provided that a stock of an unit load (3) in the replenishment storage is below a minimum stock of this unit load (3) or there is no stock of an unit load (3), wherein the stock of each unit load (3) of different unit loads (3) in the replenishment storage is continuously acquired by a computer system.

14. The method according to claim 6 or 12, **characterized by** the steps
determining a stock for each unit load (3) of different unit loads (3) in the high performance storage and replenishment storage by a computer system,
updating the stock for each unit load (3) of different unit loads (3) in the high performance storage and replenishment storage by a computer system after each storing operation of an unit load (3) in the high performance storage and/or replenishment storage and each retrieval operation of an unit load (3) from the high performance storage and/or replenishment storage and each rearranging operation of an unit load (3) between the high performance storage and replenishment storage, and
rearranging one or multiple unit loads (3) from the replenishment storage to the high performance storage,
provided that a stock of an unit load (3) in the high performance storage is below a minimum stock of this unit load (3), or
provided that a required quantity for an unit load (3) which is included in the orders acquired in an analysis set exceeds the current stock for this unit load (3) in the high performance storage.

15. The method according to any one of the claims 6 to 14, **characterized in that** the same warehouse technology is used both in the high performance storage and in the replenishment storage.

16. The method according to any one of the claims 6 to 15, **characterized in that** the unit loads (3) are provisioned at the storage locations (5) in the replenishment storage depending on an access frequency, wherein the unit loads (3) with high access frequency are stored in the vicinity of the high performance storage and/or in the vicinity of the transport device (12; 46).

## Revendications

1. Système de stockage avec
une première zone de stockage (1) avec des emplacements de stockage (2) pour le stockage d'articles au détail (3),
une deuxième zone de stockage (4) avec des emplacements de stockage (5) pour le stockage d'articles au détail (3),
des pistes de guidage (6) dans la première zone de stockage (1), dans lequel chaque piste de guidage (6) s'étend devant une pluralité d'emplacements de stockage (2) juxtaposés, des pistes de guidage (7) dans la deuxième zone de stockage (4), dans lequel chaque piste de guidage (7) s'étend devant une pluralité d'emplacements de stockage (5) juxtaposés,
un ou plusieurs appareils de commande de stockage automatisés (8 ; 8'), dans lequel l'appareil de commande de stockage (8 ; 8') peut être déplacé devant les emplacements de stockage (2, 5) le long des pistes de guidage (6, 7) et est muni d'au moins un dispositif de prise de charge (17 ; 50) pour le stockage d'articles au détail (3) dans les emplacements de stockage (2, 5) et le déstockage des articles au détail (3) hors des emplacements de stockage (2, 5), et
un dispositif de déplacement (12 ; 46) qui relie la première zone de stockage (1) et la deuxième zone de stockage (4) et qui comprend une plateforme de prise en charge (28 ; 54) pouvant aborder certaines ou chacune des pistes de guidage (6) dans la première zone de stockage (1) et chacune des pistes de guidage (7) dans la deuxième zone de stockage (4), pour déplacer au moins un appareil de commande de stockage (8 ; 8') entre la première zone de stockage (1) et la deuxième zone de stockage (4).
**caractérisé en ce que**
la première zone de stockage (1) comprend un stockage à haute performance et la deuxième zone de stockage (4) comprend un stockage de réapprovisionnement et le stockage à haute performance comprend un appareil de commande de stockage automatisé (8 ; 8') ou plusieurs appareils de commande de stockage automatisés (8 ; 8') et se raccorde à un système de transfert (11 ; 11' ; 45 ; 45') pour le transport d'articles au détail (3) entre l'appareil de commande de stockage (8 ; 8') et un premier système de convoyage (9, 10) pour le transport d'articles au détail (3) vers le stockage à haute performance et le transport des articles au détail (3) hors du stockage à haute performance,
dans lequel le système de transfert (11 ; 11' ; 45 ; 45') comprend, exclusivement dans le stockage à haute performance, pour chaque piste de guidage (6), un dispositif de mise à disposition (20, 21 ; 40 ; 51, 52) pour l'entreposage d'au moins un article au détail (3) et un dispositif de transfert (25 ; 53) reliant entre eux les dispositifs de mise à disposition (20, 21 ; 40 ; 51, 52) dans le stockage à haute performance et le premier système de convoyage (9, 10), pour le transport d'articles au détail (3) entre les dispositifs de mise à disposition (20, 21 ; 40 ; 51, 52) et le premier système de convoyage (9, 10),
dans lequel les dispositifs de mise à disposition (20, 21 ; 40 ; 51, 52) peuvent être abordés, par l'intermédiaire des pistes de guidage (6), par l'appareil de commande de stockage (8 ; 8') ou par les appareils de commande de stockage (8 ; 8') pour le déstockage et/ou le stockage des articles au détail (3) et
dans lequel le nombre de dispositifs de mise à disposition (20, 21 ; 40 ; 51, 52), respectivement pour l'entreposage d'au moins un article au détail (3), dans le stockage à haute performance, est supérieur au nombre de dispositifs de mise à disposition (20, 21 ; 40 ; 51, 52) respectivement pour l'entreposage d'au moins un article au détail (3) dans le stockage de réapprovisionnement.

2. Système de stockage avec
une première zone de stockage (1) avec des emplacements de stockage (2) pour le stockage d'articles au détail (3),
une deuxième zone de stockage (4) avec des emplacements de stockage (5) pour le stockage d'articles au détail (3),
des pistes de guidage (6) dans la première zone de stockage (1), dans lequel chaque piste de guidage (6) s'étend devant une pluralité d'emplacements de stockage (2) juxtaposés, des pistes de guidage (7) dans la deuxième zone de stockage (4), dans lequel chaque piste de guidage (7) s'étend devant une pluralité d'emplacements de stockage (5) juxtaposés,
un ou plusieurs appareils de commande de stockage automatisés (8 ; 8'), dans lequel l'appareil de commande de stockage (8 ; 8') peut être déplacé devant les emplacements de stockage (2, 5) le long des pistes de guidage (6, 7) et est muni d'au moins un dispositif de prise de charge (17 ; 50) pour le stockage d'articles au détail (3) dans les emplacements de stockage (2, 5) et le déstockage des articles au détail (3) hors des emplacements de stockage (2, 5), et
un dispositif de déplacement (12 ; 46) qui relie la première zone de stockage (1) et la deuxième zone de stockage (4) et qui comprend une plateforme de prise en charge (28 ; 54) pouvant aborder certaines ou chacune des pistes de guidage (6) dans la première zone de stockage (1) et chacune des pistes de guidage (7) dans la deuxième zone de stockage (4), pour déplacer au moins un appareil de commande de stockage (8 ; 8') entre la première zone de stockage (1) et la deuxième zone de stockage (4), **caractérisé en ce que**
la première zone de stockage (1) comprend un stockage à haute performance et la deuxième zone de stockage (4) comprend un stockage de réapprovisionnement et le stockage à haute performance comprend un appareil de commande de stockage automatisé (8 ; 8') ou plusieurs appareils de commande de stockage automatisés (8 ; 8') et se raccorde à un système de transfert (11 ; 11' ; 45 ; 45') pour le transport d'articles au détail (3) entre l'appareil de commande de stockage (8 ; 8') et un premier système de convoyage (9, 10) pour le transport d'articles au détail (3) vers le stockage à haute performance et le transport des articles au détail (3) hors du stockage à haute performance,
dans lequel le système de transfert (11 ; 11' ; 45 ; 45') comprend, dans le stockage à haute performance, pour chaque piste de guidage (6), un dispositif de mise à disposition (20, 21 ; 40 ; 51, 52) et, dans le stockage de réapprovisionnement, de manière correspondante à une ou certaines pistes de guidage (7) parmi un nombre de pistes de guidage (7), un dispositif de mise à disposition (20', 21' ; 40' ; 51', 52') pour l'entreposage d'au moins un article au détail (3) et un dispositif de transfert (25 ; 53) reliant entre eux les dispositifs de mise à disposition (20, 21 ; 40 ; 51, 52) dans le stockage à haute performance et le ou les dispositifs de mise à disposition (20', 21' ; 40' ; 51', 52') dans le stockage de réapprovisionnement et le premier système de convoyage (9, 10), pour le transport d'articles au détail (3) entre les dispositifs de mise à disposition (20, 21 ; 40 ; 51, 52 ; 20', 21' ; 40' ; 51', 52') et le premier système de convoyage (9, 10),
dans lequel les dispositifs de mise à disposition (20, 21 ; 40 ; 51, 52 ; 20', 21' ; 40' ; 51', 52') peuvent être abordés, par l'intermédiaire des pistes de guidage (6, 7), par l'appareil de commande de stockage (8 ; 8') ou par les appareils de commande de stockage (8 ; 8') pour le déstockage et/ou le stockage d'articles au détail (3) et
dans lequel le nombre de dispositifs de mise à disposition (20, 21 ; 40 ; 51, 52), respectivement pour l'entreposage d'au moins un article au détail (3) dans le stockage à haute performance, est supérieur au nombre de dispositifs de mise à disposition (20', 21' ; 40' ; 51', 52'), respectivement pour l'entreposage d'au moins un article au détail (3) dans le stockage de réapprovisionnement.

3. Système de stockage selon la revendication 1 ou 2, **caractérisé en ce que**
les emplacements de stockage (2, 5) du stockage à haute performance ainsi que du stockage de réapprovisionnement sont disposés dans des plans de rayonnages superposés et dans au moins un rayonnage de stockage (13),
les pistes de guidage (6) dans le stockage à haute performance sont disposées dans des plans de déplacement superposés (15),
les pistes de guidage (7) dans le stockage de réapprovisionnement sont disposées dans des plans de déplacement superposés (15),
le stockage à haute performance comprend respectivement, sur au moins certaines des pistes de guidage (6), un appareil de commande de stockage automatisé (8), plus particulièrement un appareil de commande de rayonnage sur un plan et
le système de transfert (11 ; 11') comprend en outre un dispositif de levage automatisé (19),
dans lequel le dispositif de levage (19) est équipé avec le dispositif de transfert (25) pouvant aborder chacun des dispositifs de mise à disposition (20, 21 ; 40 ; 20', 21'; 40'), pour le transport d'articles au détail (3).

4. Système de stockage selon l'une des revendications 1 à 3, **caractérisé en ce que**
les pistes de guidage (6) dans le stockage à haute performance passent devant le système de transfert (11) et dépassent, avec leurs premières extrémités de pistes de guidage (41) au niveau du système de transfert (11) dans la direction de l'extension longitudinale des pistes de guidage (6),
les pistes de guidage (7) dans le stockage de réapprovisionnement dépassent, avec leurs premières extrémités de pistes de guidage (42) approximativement verticalement au-dessus / en dessous des premières extrémités de pistes de guidage (41) dans le stockage à haute performance et
le dispositif de déplacement (12) se raccorde aux premières extrémités de pistes de guidage (41, 42) de sorte que les pistes de guidage (6, 7) dans le stockage à haute performance et dans le stockage de réapprovisionnement peuvent être abordées par la plateforme de prise en charge (28), afin de déplacer l'appareil de commande de stockage (8) entre une des pistes de guidage (6) dans le stockage à haute performance et une des pistes de guidage (7) dans le stockage de réapprovisionnement.

5. Système de stockage selon l'une des revendications 1 à 4, **caractérisé en ce que** le dispositif de déplacement (12 ; 46) est raccordé à un deuxième système de convoyage (43) pour le transport d'articles au détail (3) vers le stockage de réapprovisionnement.

6. Procédé de fonctionnement d'un système de stockage selon l'une des revendications 1 à 5, **caractérisé par** les étapes suivantes
configuration de la première zone de stockage (1) avec un stockage à haute performance et de la deuxième zone de stockage (4) avec un stockage de réapprovisionnement, mise à disposition d'articles au détail (3) sur les emplacements de stockage (2) dans le stockage à haute performance,
mise à disposition d'articles au détail (3) sur les emplacements de stockage (5) dans le stockage de réapprovisionnement,
déplacement d'un article au détail (3) d'un emplacement de stockage (5) dans le stockage de réapprovisionnement vers le stockage à haute performance si, dans le système informatique, une instruction de réapprovisionnement est générée, de sorte qu'un appareil de commande de stockage (8 ; 8') est d'abord déplacé vers un des emplacements de stockage (5) dans le stockage de réapprovisionnement et l'article au détail (3) est pris en charge sur celui-ci, l'appareil de commande de stockage (8 ; 8') avec l'article au détail (3) étant alors transporté vers le dispositif de déplacement (12 ; 46) puis transporté, au moyen du dispositif de déplacement (12 ; 46), du stockage de réapprovisionnement vers une des pistes de guidage (6) dans la première zone de stockage (1) puis, dans la première zone de stockage (1), déplacé le long de la piste de guidage (6) soit vers un des emplacements de stockage (2) dans le stockage à haute performance et l'article au détail (3) est transporté par l'appareil de commande de stockage (8 ; 8') vers un emplacement de stockage (2) dans le stockage à haute performance soit directement vers le système de transfert (11 ; 45) vers un ou plusieurs dispositifs de mise à disposition (21 ; 40 ; 52) et
déstockage d'au moins certains articles au détail (3) hors du système de stockage, de sorte que, aussi bien les articles au détail (3) provenant du stockage à haute performance que les articles au détail (3) précédemment déplacés hors du stockage de réapprovisionnement, dans le stockage à haute performance, sont transportés au moyen d'un ou de plusieurs appareils de commande de stockage (8 ; 8') vers le système de transfert (11 ; 45) sur un ou plusieurs dispositifs de mise à disposition (21 ; 40 ; 52) puis, au moyen d'un système de transfert (25 ; 53) du dispositif de transfert (11 ; 45), des dispositifs de mise à disposition (21 ; 40 ; 52), vers le premier système de convoyage (9, 10) pour le transport d'articles au détail (3) à partir du stockage à haute performance.

7. Procédé selon la revendication 6, dans lequel le déplacement comprend les étapes suivantes
déplacement d'un premier article au détail (3) d'un emplacement de stockage (5) dans le stockage de réapprovisionnement (B) vers le stockage à haute performance (A) si le système informatique a généré une première instruction de réapprovisionnement, de sorte qu'au moins un appareil de commande de stockage (8 ; 8') est d'abord déplacé vers un des emplacements de stockage (5) dans le stockage de réapprovisionnement (B) et l'article au détail (3) est pris en charge sur celui-ci, l'appareil de commande de stockage (8 ; 8') avec l'article au détail (3) étant alors déplacé le long de la piste de guidage (7) vers un dispositif de déplacement (12 ; 46) et transporté, au moyen du dispositif de déplacement (12 ; 46), du stockage de réapprovisionnement (B) vers une des pistes de guidage (6) dans la première zone de stockage (1) puis déplacé, dans la première zone de stockage (1), le long de la piste de guidage (6) soit vers un des emplacements de stockage (2) dans le stockage à haute performance (A) et l'article au détail (3) est transporté par l'appareil de commande de stockage (8 ; 8') vers un emplacement de stockage (2) dans le stockage à haute performance (A), soit directement vers un système de transfert (11 ; 45) sur un parmi plusieurs dispositifs de mise à disposition (21 ; 40 ; 52) et
déplacement d'un deuxième article au détail (3) à l'intérieur de la première zone de stockage (1) d'un stockage de réapprovisionnement (B') vers le stockage à haute performance (A) si le système informatique a généré une deuxième instruction de réapprovisionnement, de sorte qu'au moins un appareil de commande de stockage (8 ; 8') est d'abord déplacé vers un des emplacements de stockage (5') dans le stockage de réapprovisionnement (B') et l'article au détail (3) est pris en charge sur celui-ci, l'appareil de commande de stockage (8 ; 8') avec l'article au détail (3) étant alors déplacé le long de la piste de guidage (6) du stockage de réapprovisionnement (B') vers le stockage à haute performance (A) puis déplacé, dans le stockage à haute performance (A), soit vers un des emplacements de stockage (2) et l'article au détail (3) est transporté par l'appareil de commande de stockage (8 ; 8') vers un emplacement de stockage (2), soit directement vers un système de transfert (11 ; 45) sur un parmi plusieurs dispositifs de mise à disposition (21 ; 40 ; 52).

8. Procédé selon la revendication 6, **caractérisé par** les étapes suivantes déstockage d'au moins certains articles au détail (3) hors du stockage à haute performance et du stockage de réapprovisionnement, de sorte que
i) les articles au détail (3) sont déstockés hors du stockage à haute performance au moyen d'un ou plusieurs appareils de commande de stockage (8 ; 8') et sont transportés vers le système de transfert (11 ; 45) sur un ou plusieurs dispositifs de mise à disposition (21 ; 40 ; 52) d'une pluralité de dispositifs de mise à disposition (21 ; 40 ; 52) puis sont transportés, au moyen du dispositif de transfert (25 ; 53) du système de transfert (11 ; 45), du ou des dispositifs de mise à disposition (21 ; 40 ; 52) vers le premier système de convoyage (9, 10) et/ou
ii) les articles au détail (3) sont déstockés hors du stockage de réapprovisionnement au moyen d'un ou plusieurs appareils de commande de stockage (8 ; 8') et sont transportés vers le système de transfert (11' ; 45') sur un ou plusieurs dispositifs de mise à disposition (21' ; 40' ; 52') puis sont transportés, au moyen du dispositif de transfert (25 ; 53) du système de transfert (11' ; 45'), du ou des dispositifs de mise à disposition (21' ; 40' ; 52') vers le premier système de convoyage (9, 10).

9. Procédé selon la revendication 6 ou 8, **caractérisé par** les étapes suivantes saisie de commandes dans un système informatique,
détermination des articles au détail (3) et de la quantité d'articles au détail (3) nécessaire pour une commande par le système informatique,
analyse du stock des articles au détail (3) qui sont nécessaires pour la commande mentionnée et qui sont stockés dans le stockage à haute performance, et
déstockage des articles au détail (3) correspondant à la commande mentionnée hors du système de stockage, de sorte que les articles au détail (3) sont déstockés exclusivement hors du stockage à haute performance au moyen d'un ou plusieurs appareils de commande de stockage (8 ; 8') et sont transportés vers le système de transfert (11 ; 45) sur un ou plusieurs dispositifs de mise à disposition (21 ; 40 ; 52) d'une pluralité de dispositifs de mise à disposition (21 ; 40 ; 52) puis transportés, au moyen d'un dispositif de transfert (25 ; 53) du système de transfert (11 ; 45), du ou des dispositifs de mise à disposition (21 ; 40 ; 52) vers le premier système de convoyage (9, 10).

10. Procédé selon la revendication 6 ou 8, **caractérisé par** les étapes suivantes saisie de commandes dans un système informatique,
détermination des articles au détail (3) et de la quantité d'articles au détail (3) nécessaire pour une commande par le système informatique,
analyse du stock des articles au détail (3) qui sont nécessaires pour la commande mentionnée et qui sont stockés dans le stockage à haute performance, déplacement d'un ou plusieurs articles au détail (3) du stockage de réapprovisionnement vers le stockage à haute performance si, dans le stockage à haute performance, le stock d'un des articles au détail (3) correspondant à la commande mentionnée est inférieur à un stock de consigne pour cet article au détail (3), dans lequel le nombre d'articles au détail (3) déplacés du stockage de réapprovisionnement vers le stockage à haute performance est tel qu'au moins le stock de consigne de cet article au détail (3) est atteint pour le déroulement de la commande mentionnée, et
déstockage des articles au détail (3) correspondant à la commande mentionnée hors du système de stockage, de sorte que les articles au détail (3) sont déstockés exclusivement hors du stockage à haute performance et sont transportés, au moyen d'un ou plusieurs appareils de commande de stockage (8 ; 8'), vers le système de transfert (11 ; 45) sur un ou plusieurs dispositifs de mise à disposition (21 ; 40 ; 52) d'une pluralité de dispositifs de mise à disposition (21 ; 40 ; 52) puis transportés, au moyen d'un dispositif de transfert (25 ; 53) du système de transfert (11 ; 45), du ou des dispositifs de mise à disposition (21 ; 40 ; 52) vers le premier système de convoyage (9, 10).

11. Procédé selon la revendication 6 ou 8, **caractérisé par** les étapes suivantes saisie de commandes dans un système informatique
détermination des articles au détail (3) et de la quantité d'articles au détail (3) nécessaire pour une commande par le système informatique,
analyse du stock des articles au détail (3) dans le stockage à haute performance et le stockage de réapprovisionnement, qui sont nécessaires pour la commande mentionnée, et
déstockage des articles au détail (3) correspondant à la commande mentionnée hors du stockage à haute performance et du stockage de réapprovisionnement si, dans le stockage à haute performance, le stock d'un des articles au détail (3) correspondant à la commande mentionnée est inférieur à un stock de consigne pour cet article au détail (3), de sorte que
i) les articles au détail (3) sont déstockés hors du stockage à haute performance au moyen d'un ou plusieurs appareils de commande de stockage (8 ; 8') et sont transportés vers le système de transfert (11 ; 45) sur un ou plusieurs dispositifs de mise à disposition (21 ; 40 ; 52) d'une pluralité de dispositifs de mise à disposition (21 ; 40 ; 52) puis sont transportés, au moyen du système de transfert (25 ; 53) du système de transfert (11 ; 45), du ou des dispositifs de mise à disposition (21 ; 40 ; 52) vers le premier système de convoyage (9, 10) et
ii) les articles au détail (3) restants sont déstockés hors du stockage de réapprovisionnement au moyen d'un ou plusieurs appareils de commande de stockage (8 ; 8') et sont transportés vers le système de transfert (11' ; 45') sur un ou plusieurs dispositifs de mise à disposition (21' ; 40' ; 52') puis sont transportés, au moyen du système de transfert (25 ; 53) du dispositif de transfert (11' ; 45'), du ou des dispositifs de mise à disposition (21' ; 40' ; 52') vers le premier système de convoyage (9, 10).

12. Procédé selon la revendication 6, **caractérisé par** les étapes suivantes alimentation du stockage de réapprovisionnement en articles au détail (3) de sorte que
i) l'article au détail (3) est récupéré, au moyen de l'au moins un appareil de commande de stockage automatisé (8 ; 8'), dans un emplacement de stockage (2) dans le stockage à haute performance ou dans un parmi plusieurs dispositifs de mise à disposition (20 ; 40 ; 51) et est déplacé par l'appareil de commande de stockage (8 ; 8'), vers le dispositif de déplacement (12 ; 46) puis déplacé, au moyen du dispositif de déplacement (12 ; 46), vers au moins une des pistes de guidage (7) dans le stockage de réapprovisionnement et déplacé vers un emplacement de stockage (5) dans le stockage de réapprovisionnement puis finalement déplacé vers emplacement de stockage (5),
ii) ou bien l'article au détail (3) est récupéré, au moyen de l'au moins un appareil de commande de stockage automatisé (8 ; 8'), dans un dispositif de mise à disposition (20' ; 40' ; 51') dans le stockage de réapprovisionnement et déplacé, par l'appareil de commande de stockage (8 ; 8'), vers un emplacement de stockage (5) dans le stockage de réapprovisionnement puis finalement déplacé vers un emplacement de stockage (5),
iii) ou bien l'article au détail (3) est transporté, au moyen d'un deuxième système de convoyage (43), vers le dispositif de déplacement (12 ; 46) puis est transporté sur un appareil de commande de stockage (8 ; 8'), dans lequel l'appareil de commande de stockage (8 ; 8') se trouve sur le dispositif de déplacement (12 ; 46), puis finalement il est déplacé par l'appareil de commande de stockage (8 ; 8') vers au moins une des pistes de guidage (7) dans le stockage de réapprovisionnement et vers un emplacement de stockage (5) dans le stockage de réapprovisionnement puis finalement stocké sur un emplacement de stockage (5).

13. Procédé selon la revendication 12i) ou 12iii), **caractérisé par** les étapes suivantes
i) les articles au détail (3) qui ne sont pas contenus dans les commandes saisies dans le système informatique, au sein d'une quantité d'analyse, sont déplacés, au moyen de l'au moins un appareil de commande de stockage (8 ; 8') et du dispositif de déplacement (12 ; 46), du stockage à haute performance vers le stockage de réapprovisionnement puis finalement vers un emplacement de stockage (5) dans le stockage de réapprovisionnement ou
ii) les articles au détail (3) sont introduits par le deuxième système de convoyage (43) dans le dispositif de déplacement (12 ; 46) puis sur un appareil de commande de stockage (8 ; 8') ou sur le dispositif de mise à disposition (20' ; 40' ; 51') si, dans le stockage de réapprovisionnement le stock d'un article au détail (3) est inférieur à un stock minimal ou s'il n'existe pas de stock de l'article au détail (3), dans lequel le stock de chaque article au détail (3) de différents articles au détail (3) dans le stockage de réapprovisionnement est relevé en permanence par un système informatique.

14. Procédé selon la revendication 6 ou 12, **caractérisé par** les étapes suivantes détermination d'un stock de chaque article au détail (3) de différents articles au détail (3) dans le stockage à haute performance et le stockage de réapprovisionnement par un système informatique,
actualisation du stock de chaque article au détail (3) de différents articles au détail (3) dans le stockage à haute performance et le stockage de réapprovisionnement par un système informatique, après chaque stockage d'un article au détail (3) dans le stockage à haute performance et/ou le stockage de réapprovisionnement et chaque déstockage d'un article au détail (3) hors du stockage à haute performance et/ou du stockage de réapprovisionnement et chaque déplacement d'un article au détail (3) entre le stockage à haute performance et le stockage de réapprovisionnement, et
déplacement d'un ou plusieurs articles au détail (3) du stockage de réapprovisionnement vers le stockage à haute performance,
si, dans le stockage à haute performance, le stock d'un article au détail (3) est inférieur à un stock minimal ou
si une quantité nécessaire d'un article au détail (3) qui est contenu au sein d'une quantité d'analyse dans les commandes saisies dans le système informatique dépasse le stock actuel de cet article au détail (3) dans le stockage à haute performance.

15. Procédé selon l'une des revendications 6 à 14, **caractérisé en ce que**, aussi bien dans le stockage à haute performance que dans le stockage de réapprovisionnement, on utilise la même technologie de stockage.

16. Procédé selon l'une des revendications 6 à 15, **caractérisé en ce que** les articles au détail (3) dans le stockage de réapprovisionnement sont mis à disposition sur les emplacements de stockage (5) en fonction de la fréquence d'accès, dans lequel les articles au détail (3) à fréquence d'accès élevée sont stockés à proximité du stockage à haute performance et/ou à proximité du dispositif de déplacement (12 ; 46).
